(19) Europäisches Patentamt
European Patent Office
Office européen des brevets

(11) **EP 2 357 497 B1**

(12) **EUROPEAN PATENT SPECIFICATION**

(45) Date of publication and mention
of the grant of the patent:
**01.05.2019 Bulletin 2019/18**

(21) Application number: **09831746.4**

(22) Date of filing: **29.07.2009**

(51) Int Cl.:
*G02B 5/20* (2006.01)       *C03C 27/12* (2006.01)
*G02B 5/08* (2006.01)       *G02B 5/124* (2006.01)
*G02B 5/23* (2006.01)       *G02B 5/26* (2006.01)
*G02B 27/14* (2006.01)      *B32B 3/30* (2006.01)

(86) International application number:
**PCT/JP2009/063841**

(87) International publication number:
**WO 2010/067640 (17.06.2010 Gazette 2010/24)**

(54) **OPTICAL BODY AND WINDOW MATERIAL PROVIDED WITH THE OPTICAL BODY**

OPTISCHER KÖRPER UND MIT DEM OPTISCHEN KÖRPER AUSGESTATTETES
FENSTERMATERIAL

CORPS OPTIQUE ET MATÉRIAU POUR FENÊTRE POURVU DU CORPS OPTIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.12.2008 JP 2008313594
15.05.2009 JP 2009119341**

(43) Date of publication of application:
**17.08.2011 Bulletin 2011/33**

(73) Proprietor: **Dexerials Corporation
Tokyo 141-0032 (JP)**

(72) Inventors:
 • **NAGAHAMA, Tsutomu
   Tokyo 108-0075 (JP)**
 • **YOSHIDA, Hironori
   Tokyo 108-0075 (JP)**

 • **SENOUE, Masaharu
   Tokyo 108-0075 (JP)**
 • **ENOMOTO, Masashi
   Tokyo 108-0075 (JP)**
 • **ITOU, Hiroyuki
   Tokyo 108-0075 (JP)**

(74) Representative: **Müller-Boré & Partner
Patentanwälte PartG mbB
Friedenheimer Brücke 21
80639 München (DE)**

(56) References cited:
 **WO-A1-2007/005357       WO-A2-97/19246
 JP-A- 2006 054 291        JP-A- 2006 210 573
 JP-A- 2007 010 893        JP-A- 2007 152 773
 JP-T- 2002 530 713        US-A- 4 657 355
 US-A1- 2002 067 547**

**Description**

The present invention generally relates to an optical element and a method for producing such an optical element. Specifically, the present invention relates to a window article, a blind, a roll curtain or a Japanese Shoji screen comprising an optical element that selectively directionally reflects light in a specific wavelength range while transmitting light in a wavelength range other than the specific wavelength range.

In recent years, cases in which building glass for high-rise buildings, houses, or the like and window glass for vehicles are provided with layers for absorbing or reflecting some of sunlight have been increasing. This is one of the energy-conservation measures for the purpose of suppressing global warming and is aimed at reducing the load on air-conditioning systems, the load being caused by an increase in the indoor temperature due to entry of optical energy radiated from sunlight to indoors through windows. The optical energy radiated from sunlight is, in large proportions, in the visible region having a wavelength of from 380 to 780 nm and the near infrared region of from 780 to 2,100 nm. Since the transmittance of windows in the latter wavelength region among these is irrelevant to human visibility, it is an important factor that determines the performance of windows having a high transparency and a high heat-shielding property.

Methods for shielding near infrared rays while maintaining sufficient transparency in the visible region include a method for providing window glass with a layer having high reflectance in the near infrared region and a method for providing window glass with a layer having high absorptance in the near infrared region.

As for the former method, a large number of techniques have been disclosed that use an optical laminated film, a metal-containing film, a transparent conductive film, or the like as a reflective layer (see, for example, WO 2005/087680 A1). Such a reflective layer, however, can only specularly reflect incident sunlight because the reflective layer is provided on window glass on a flat surface. Accordingly, light radiated from the sky is specularly reflected to reach another building or the ground outdoors and absorbed to be turned into heat, which increases the ambient temperature. This causes problems such as exacerbation of the heat-island effect due to a local temperature rise in urban areas and inhibition of lawn growth in a region irradiated with the reflected light, around a building with windows entirely covered with such reflective layers.

In addition, as for the latter method, a large number of techniques using organic dye films have been disclosed (see, for example, Japanese Unexamined Patent Application Publication No. 06-299139 and Japanese Patent Application Nos. 09-316115 and 2001-89492). However, when such a dye film is bonded to window glass, light absorbed at the surface of the window turns into heat and a portion of the heat propagates indoors as radiant heat. Accordingly, dye films have a problem of insufficient shielding performance and a problem of glass cracking due to thermal stress. In addition, another problem is that dye films have low weather resistance and are inconvenient for use at high-rise buildings and the like, where frequent replacement is difficult.

US 2002/0067547 A1 discloses a display apparatus which includes a light modulating layer sandwiched between two polarizers and a light directing film. The light directing film includes a prismatic structure including saw-tooth formations having tilted surfaces, and a metal layer on the side of the prismatic substrate having the saw-tooth formations. Further, WO 97/19246 A2 discloses a sunscreen device in the form of lamellas made of translucent material, comprising a base plate which has a planar incident surface facing the sunlight and a structured reflection face of parallel prism bar elevations facing away from the incident surface, and which has a counter-plate for covering the base plate having on the side facing the reflection face a corresponding negative structure to the reflection face with a gap of constant thickness between the base plate and the counter-plate or between the reflection face and the negative face, and wherein the remaining surfaces of the prism bar elevations and all surface areas of the prism grooves are transparent.

Accordingly, an object of the present invention is to provide an optical element capable of selectively directionally reflecting light in a specific wavelength range while transmitting light in a wavelength range other than the specific wavelength range and a method for producing such an optical element.

To overcome the above-described problems, the present invention is a window article, a blind, a roll curtain or a Japanese Shoji screen as defined in claim 1.

In the present invention, light in a specific wavelength range is directionally reflected to thereby prevent the light from entering a predetermined space and capture light in a wavelength range other than the specific wavelength range into the predetermined space. In addition, the intensity of light reflected in a specific direction other than the specular reflection is higher than the intensity of specularly reflected light and can be made sufficiently higher than the intensity of non-directional, diffuse reflection.

As has been described, according to the present invention, light in a specific wavelength range can be selectively directionally reflected while light in a wavelength range other than the specific wavelength range can be transmitted.

Fig. 1 is a sectional view illustrating a configuration example of a directional reflector according to a first embodiment of the present invention.

Fig. 2 is a perspective view illustrating the relationship between incident light incident on the directional reflector and reflected light reflected by the directional reflector.

Figs. 3A to 3C are perspective views illustrating examples of the shape of structures formed on a first optical layer.

Fig. 4A is a perspective view illustrating an example of the shape of a structure formed on the first optical layer. Fig. 4B is a sectional view illustrating the direction in which the major axis of the structure formed on the first optical layer is inclined.

Fig. 5 is a sectional view for illustrating an example of the function of the directional reflector.

Fig. 6 is a sectional view for illustrating an example of the function of the directional reflector.

Fig. 7 is a sectional view for illustrating an example of the function of the directional reflector.

Fig. 8 is a sectional view for illustrating an example of the function of the directional reflector.

Fig. 9A is a sectional view illustrating the relationship between the ridges of columnar structures and incident light and reflected light. Fig. 9B is a plan view illustrating the relationship between the ridges of the columnar structures and the incident light and the reflected light.

Figs. 10A to 10C are process diagrams for illustrating an example of a method for producing the directional reflector according to the first embodiment of the present invention.

Figs. 11A to 11C are process diagrams for illustrating the example of the method for producing the directional reflector according to the first embodiment of the present invention.

Fig. 12A is a plan view illustrating a configuration example of the structures of a directional reflector according to a second embodiment which does not fall within the scope of the present invention. Fig. 12B is a sectional view, taken along line B-B, of the directional reflector illustrated in Fig. 12A. Fig. 12C is a sectional view, taken along line C-C, of the directional reflector illustrated in Fig. 12A.

Fig. 13A is a plan view illustrating a configuration example of the structures of the directional reflector according to the second embodiment which does not fall within the scope of the present invention. Fig. 13B is a sectional view, taken along line B-B, of the directional reflector illustrated in Fig. 13A. Fig. 13C is a sectional view, taken along line C-C, of the directional reflector illustrated in Fig. 13A.

Fig. 14A is a plan view illustrating a configuration example of the structures of the directional reflector according to the second embodiment which does not fall within the scope of the present invention. Fig. 14B is a sectional view, taken along line B-B, of the directional reflector illustrated in Fig. 14A.

Fig. 15 is a sectional view illustrating a configuration example of a directional reflector according to a third embodiment of the present invention.

Fig. 16 is a sectional view illustrating a configuration example of a directional reflector according to a fourth embodiment of the present invention.

Fig. 17 is a perspective view illustrating a configuration example of structures of the directional reflector according to the fourth embodiment of the present invention.

Fig. 18 is a sectional view illustrating a configuration example of a directional reflector according to a fifth embodiment of the present invention.

Figs. 19A to 19C are sectional views illustrating first to third configuration examples of a directional reflector according to a sixth embodiment of the present invention.

Fig. 20 is a sectional view illustrating a configuration example of a directional reflector according to a seventh embodiment of the present invention.

Figs. 21A and 21B are sectional views illustrating a first configuration example of a directional reflector according to an eighth embodiment of the present invention.

Figs. 22A and 22B are sectional views illustrating a second configuration example of the directional reflector according to the eighth embodiment of the present invention.

Fig. 23 is a schematic diagram illustrating a configuration example of an apparatus for producing the directional reflector according to the eighth embodiment of the present invention.

Fig. 24 is a sectional view illustrating a first configuration example of a directional reflector according to a ninth embodiment of the present invention.

Fig. 25 is a sectional view illustrating a second configuration example of the directional reflector according to the ninth embodiment of the present invention.

Fig. 26 is a sectional view illustrating a configuration example of a directional reflector according to a tenth embodiment of the present invention.

Fig. 27 is a sectional view illustrating a configuration example of a directional reflector according to an eleventh embodiment of the present invention.

Fig. 28 is a sectional view illustrating the profile of the molded surface of a mold composed of aluminum in Example 1.

Fig. 29 is a graph illustrating the spectral reflectance curve of Example 1.

Fig. 30A is a plan view illustrating the profile of a mold for producing optical films of Examples 2 to 4. Fig. 30B is a sectional view, taken along line B-B, of the mold illustrated in Fig. 30A.

Fig. 31 is a schematic diagram illustrating the configuration of an apparatus for measuring the retroreflectance of a directional reflector.

Fig. 32 is a graph illustrating the spectral transmittance of the optical films of Examples 2 to 4.

Fig. 33 is a graph illustrating the spectral transmittance of optical films of Comparative Examples 2 to 4.

Fig. 34 is a diagram illustrating the evaluation results of the surface roughness of the optical film of Comparative Example 6.

Fig. 35A is a plan view illustrating the profile of a mold for producing the optical films of Examples 7 to 11. Figs. 35B and 35C are sectional views, taken along line B-B, of the mold illustrated in Fig. 35A.

Fig. 36 is a graph illustrating the transmission characteristics of the optical films of Examples 7 and 8.

Fig. 37 is a graph illustrating the transmission characteristics of the optical films of Examples 9 and 10.

Fig. 38A is a graph illustrating the transmission characteristics of the optical films of Comparative Examples 9 and 10. Fig. 38B is a graph illustrating the reflection characteristics of the optical films of Comparative Examples 9 and 10.

Fig. 39A is a graph illustrating the transmission characteristics of the optical films of Comparative Examples 11 and 12. Fig. 39B is a graph illustrating the reflection characteristics of the optical films of Comparative Examples 11 and 12.

Fig. 40A is a graph illustrating the transmission characteristics of the optical film of Comparative Example 13. Fig. 40B is a graph illustrating the reflection characteristics of the optical film of Comparative Example 13.

Fig. 41 is a graph illustrating sensitivity coefficients according to a test method of JIS R 3106.

Fig. 42 is a diagram for illustrating the film thickness of a wavelength-selective reflective film.

Fig. 43 is a graph illustrating the viscoelasticity behavior of a profile-transfer resin in Example 2.

Fig. 44A is a graph illustrating transmission spectra of the optical film of Example 4. Fig. 44B is a graph illustrating transmission spectra of the optical film of Example 7.

Fig. 45A is a graph illustrating transmission spectra of the optical film of Example 8. Fig. 45B is a graph illustrating transmission spectra of the optical film of Example 9.

Fig. 46A is a graph illustrating transmission spectra of the optical film of Comparative Example 9. Fig. 46B is a graph illustrating transmission spectra of the optical film of Comparative Example 12.

Fig. 47A is a graph illustrating reflection spectra of the optical film of Example 9 for retro surface incidence. Fig. 47B is a graph illustrating reflection spectra of the optical film of Example 9 for nonretro surface incidence.

Fig. 48A is a graph illustrating reflection spectra of the optical film of Comparative Example 9 for film surface incidence. Fig. 48B is a graph illustrating reflection spectra of the optical film of Comparative Example 9 for non-film surface incidence.

Fig. 49A is a graph illustrating reflection spectra of the optical film of Comparative Example 12 for film surface incidence. Fig. 49B is a graph illustrating reflection spectra of the optical film of Comparative Example 12 for non-film surface incidence.

Fig. 50A is a graph illustrating reflection colors of the optical films of Examples 7 and 9 for retro surface incidence and nonretro surface incidence. Fig. 50B is a graph illustrating reflection colors of the optical films of Comparative Examples 9 and 12 for retro surface incidence and nonretro surface incidence.

Embodiments of the present invention will be described with reference to the drawings in the following order:

1. First embodiment (example where structures are one-dimensionally arranged)
2. Second embodiment (example where structures are two-dimensionally arranged) which does not fall within the scope of the present invention
3. Third Embodiment (example where beads are used as structures)
4. Fourth embodiment (example of a louver wavelength-selective reflective film)
5. Fifth embodiment (example where a self-cleaning-effect layer is disposed on the surface of a directional reflector)
6. Sixth embodiment (example where a light scatterer is disposed in a directional reflector)
7. Seventh embodiment (example where a wavelength-selective reflective film is directly formed on the surface of a window article)
8. Eighth embodiment (example where an optical layer of a directional reflector has a double-layer structure)
9. Ninth embodiment (example where a barrier layer is disposed on the surface of or in a directional reflector)
10. Tenth embodiment (example where a hard coat layer is disposed on the surface of a directional reflector)
11. Eleventh embodiment (example where an antifouling layer is disposed on a hard coat layer of a directional reflector)

<1. First Embodiment>

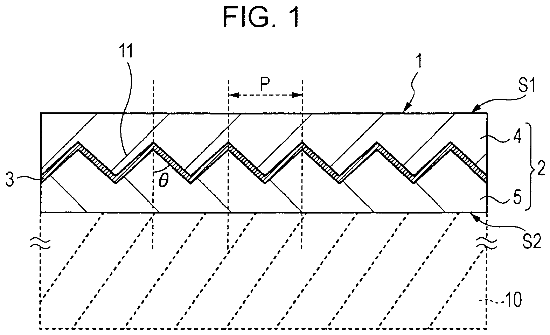

Fig. 1 is a sectional view illustrating a configuration example of a directional reflector according to the first embodiment of the present invention. As illustrated in Fig. 1, a directional reflector 1 includes an optical layer 2 and a wavelength-selective reflective film 3 formed in the optical layer 2. The optical layer 2 includes a first optical layer 4

formed on a first main surface of the wavelength-selective reflective film 3 and a second optical layer 5 formed on a second main surface of the wavelength-selective reflective film 3. The directional reflector 1 has an incident surface S1 on which light such as sunlight is incident and an exit surface S2 through which, of the light having been incident on the incident surface S1, light having passed through the optical layer 2 exits.

The directional reflector 1 has transparency. The transparency preferably has a transmitted-image clarity range described later. The first optical layer 4 and the second optical layer 5 preferably have a refractive index difference of 0.010 or less, more preferably 0.008 or less, and still more preferably 0.005 or less. When the refractive index difference is more than 0.010, a transmitted image tends to appear blurred. When the refractive index difference is in the range of more than 0.008 and 0.010 or less, no problem arises in everyday life, depending on outside brightness. When the refractive index difference is in the range of more than 0.005 and 0.008 or less, an outside view can be clearly seen, although only a very bright object such as a light source forms a noticeable diffraction pattern. When the refractive index difference is 0.005 or less, almost no diffraction pattern is noticeable. Of the first optical layer 4 and the second optical layer 5, the optical layer serving as a side bonded to, for example, a window article 10 can be mainly composed of an adhesive agent. By providing such a configuration, the directional reflector 1 can be bonded to the window article 10 or the like through an optical layer mainly composed of an adhesive agent. In Fig. 1, illustrated is an example in which the second optical layer 5 is mainly composed of an adhesive agent and the directional reflector 1 is bonded to the window article 10 or the like through the second optical layer 5. Note that, when such a configuration is provided, the refractive index difference in terms of the adhesive agent preferably falls within the above-described range.

The first optical layer 4 and the second optical layer 5 preferably have the same optical characteristics such as refractive index. More specifically, the first optical layer 4 and the second optical layer 5 are preferably formed of the same material having transparency in the visible region. When the first optical layer 4 and the second optical layer 5 are formed of the same material, they have the same refractive index, which can improve the transparency to visible light. However, it should be noted that even films resulting finally from the same starting material could have different refractive indices, depending on, for example, curing conditions in the film-forming step. On the other hand, when the first optical layer 4 and the second optical layer 5 are formed of different materials, they have different refractive indices. Thus, a transmitted image tends to appear blurred because light is refracted at the wavelength-selective reflective film 3 serving as a boundary. In particular, a problem arises in that a noticeable diffraction pattern is observed when an object close to a point source such as a distant electric light is observed.

The first optical layer 4 and the second optical layer 5 preferably have transparency in the visible region. Here the definition of the transparency has two meanings: the absence of light absorption and the absence of light scattering. Although being transparent may generally denote only the former, both of them are required in the present invention. Currently used retroreflectors in road signs, clothing for night-time workers, and the like are intended that reflected light indicated is visually identified. Accordingly, for example, even though a retroreflector has scattering properties, the reflected light from the retroreflector that is closely bonded to a base reflector can be visually identified. This is based on the same principle as in, for example, a case where images can be visually identified even when the front surface of an image display device is subjected to an antiglare treatment having scattering properties for the purpose of imparting antiglare properties. However, the directional reflector 1 according to the present invention has a feature with respect to transmitting light other than light in a specific wavelength that is directionally reflected. Since the directional reflector 1 is bonded to a transmitting object that mainly transmits light in this transmission wavelength and the transmitted light is observed, the directional reflector 1 needs a requirement of not causing scattering of light. However, depending on the application, only the second optical layer 5 can be intentionally made to have a scattering property.

The directional reflector 1 is preferably used by being bonded to a rigid object, such as the window article 10, that has transparency mainly to transmitted light in a wavelength other than a specific wavelength using an adhesive agent or the like. The window article 10 may be a building window article for high-rise buildings, houses, or the like; a window article for vehicles; or the like. When the directional reflector 1 is applied to a building window article, in particular, the directional reflector 1 is preferably applied to a window article 10 disposed so as to face any direction within the range from east, south, to west (for example, facing a direction between southeast and southwest). This is because application to the window articles 10 at such positions allows more effective reflection of thermal radiation. The directional reflector 1 can be used not only for monolayer window glass, but also for special glass such as double-glazed glass. In addition, the window article 10 is not restricted to that composed of glass and that composed of a polymer material having transparency can also be used. The optical layer 2 preferably has transparency in the visible region. As a result of having such transparency, when the optical element is bonded to the window article 10, such as window glass, the optical element transmits visible light and lighting with sunlight can be ensured. In addition, the bonding surface is not only the outer surface of glass, but application to the inner surface is also possible. When such application to the inner surface is employed, to orient the directional reflection direction to the intended direction, structures 11 need to be bonded together such that the front, the back, and the in-plane direction of the irregularities of the structures 11 fit.

In view of allowing the directional reflector 1 to be readily bonded to the window article 10, the directional reflector 1 preferably has flexibility. The shape of the directional reflector 1 may be, for example, a film shape, a sheet shape, a plate shape, or a block shape; however, the shape is not particularly restricted to these shapes.

In addition, the directional reflector 1 can be used in combination with another thermal-radiation cutting film. For example, a light-absorbing coating film can also be disposed at the interface between the air and the optical layer 2. In addition, the directional reflector 1 can also be used in combination with a hard coat layer, an ultraviolet-cutting layer, an anti-surface-reflection layer, or the like. When these functional layers are used in combination, these functional layers are preferably disposed at the interface between the directional reflector 1 and the air. However, since the ultraviolet-cutting layer needs to be disposed on the sun side with respect to the directional reflector 1, in particular, in the case of the usage of bonding to the inner surface of indoor or outdoor window glass, the ultraviolet-cutting layer is desirably disposed between the window glass surface and the directional reflector 1. In this case, an ultraviolet absorber may be incorporated into an adhesive layer between the window glass surface and the directional reflector 1.

In addition, the directional reflector 1 may also be colored to have a design property depending on the application of the directional reflector 1. When a design property is imparted in this way, the optical layer 2 is preferably configured to absorb only light in a specific wavelength range as long as the optical layer 2 does not lose transparency.

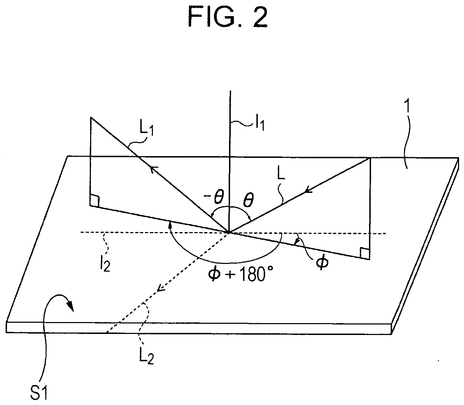

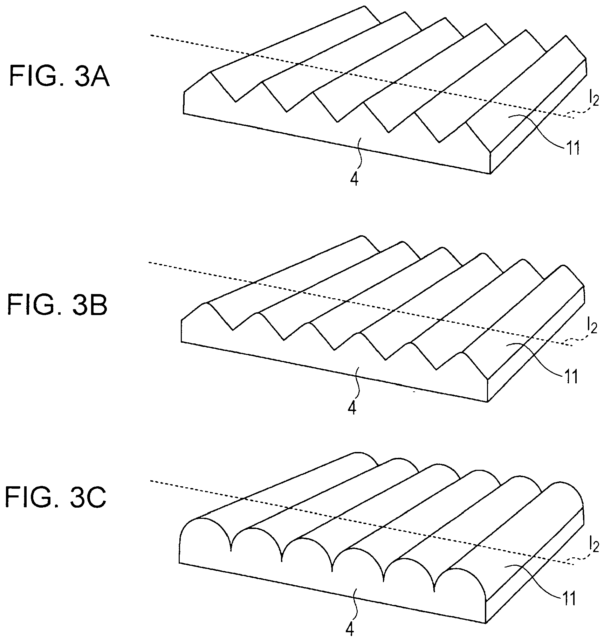

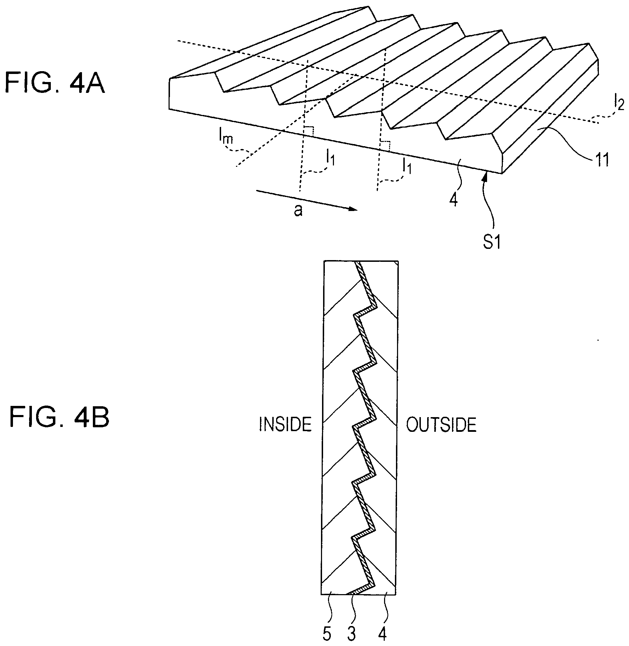

Fig. 2 is a perspective view illustrating the relationship between incident light incident on the directional reflector 1 and reflected light reflected by the directional reflector 1. The directional reflector 1 has the incident surface S1 on which light L is incident. Of the light L incident on the incident surface S1 at an incident angle $(\theta, \phi)$, the directional reflector 1 selectively directionally reflects light $L_1$ in a specific wavelength range in a direction other than specular reflection $(-\theta, \phi + 180°)$ while transmitting light $L_2$ in a wavelength range other than the specific wavelength range. In addition, the directional reflector 1 has transparency to the above-described light in the wavelength range other than the specific wavelength range. The transparency preferably has the transmitted-image clarity range described later. Note that $\theta$ denotes the angle between a normal $l_1$ to the incident surface S1 and the incident light L or the reflected light $L_1$. $\phi$ denotes the angle between a specific line $l_2$ in the incident surface S1 and the component of the incident light L or the reflected light $L_1$ projected on the incident surface S1. Here, the specific line $l_2$ in the incident surface is the axis in which the reflection intensity in the $\phi$ direction is maximized when the directional reflector 1 is rotated about the normal $l_i$ to the incident surface S1 of the directional reflector 1 with the incident angle $(\theta, \phi)$ fixed (refer to Figs. 3 and 4). Note that the angle $\theta$ at which clockwise rotation is performed with respect to the normal $l_1$ is referred to as "$+\theta$" and the angle $\theta$ at which counterclockwise rotation is performed with respect to the normal $l_i$ is referred to as "$-\theta$". The angle $\phi$ at which clockwise rotation is performed with respect to the line $l_2$ is referred to as "$+\phi$" and the angle $\phi$ at which counterclockwise rotation is performed with respect to the line $l_2$ is referred to as "$-\phi$".

Light in a specific wavelength range selectively directionally reflected and specific light transmitted vary depending on the application of the directional reflector 1. For example, when the directional reflector 1 is applied to the window article 10, the light in a specific wavelength range selectively directionally reflected is preferably near infrared light and the light in a specific wavelength range transmitted is preferably visible light. Specifically, the light in a specific wavelength range selectively directionally reflected is preferably mainly near infrared rays in the wavelength range of 780 nm to 2,100 nm. By reflecting near infrared rays, in the case of bonding an optical element to a window article such as window glass, a temperature rise in the building can be suppressed. Accordingly, the air-conditioning load can be reduced, contributing to energy conservation. Here, directional reflection means that the intensity of light reflected in a specific direction other than specular reflection is higher than the intensity of specularly reflected light and is sufficiently higher than the intensity of non-directional, diffuse reflection. Here, reflecting means that the reflectance in a specific wavelength range, for example, in the near infrared region, is preferably 30% or more, more preferably 50% or more, and still more preferably 80% or more. Transmitting means that the transmittance in a specific wavelength range, for example, in the visible-light region, is preferably 30% or more, more preferably 50% or more, and still more preferably 70% or more.

The direction $\phi o$ in which the directional reflection is performed may generally be -90° or more and 90° or less. This is because, when the directional reflector 1 is bonded to the window article 10, light in a specific wavelength range out of light coming from the sky can be returned in the direction of the sky. When there are no tall buildings that are near, the directional reflector 1 satisfying this range is useful. In addition, the direction in which directional reflection is performed can be near $(\theta, -\phi)$. Near refers to a deviation within the range of 5° or less with respect to $(\theta, -\phi)$, more preferably 3° or less, and still more preferably 2° or less. This is because, by satisfying this range, when the directional reflector 1 is bonded to the window article 10, light in a specific wavelength range out of light coming from the sky above buildings of similar heights can be efficiently returned to the sky above other buildings. To achieve such directional reflection, for example, three-dimensional structures such as partial spheres, partial hyperboloids, triangular pyramids, quadrangular pyramids, or cones can be used. Light incident in a $(\theta, \phi)$ direction $(-90° < \phi < 90°)$ can be reflected in a $(\theta o, \phi o)$ direction $(0° < \theta o < 90°, -90° < \phi o < 90°)$, depending on the shape. According to the present invention, a member having the shape of columns extending in one direction is formed. Based on the inclination angle of the member having the shape of columns, light incident in a $(\theta, \phi)$ direction $(-90° < \phi < 90°)$ can be reflected in a $(\theta o, -\phi)$ direction $(0° < \theta o < 90°)$.

As for image clarity in terms of the wavelength range in which a transmission property is exhibited, the value upon use of an optical comb of 0.5 mm is preferably 50 or more, more preferably 60 or more, and still more preferably 75 or more.

When the value of image clarity is less than 50, a transmitted image tends to appear blurred. When the value is 50 or more and less than 60, no problem arises in everyday life, depending on outside brightness. When the value is 60 or more and less than 75, an outside view can be clearly seen, although a diffraction pattern is noticeable only for a very bright object such as a light source. When the value is 75 or more, almost no diffraction pattern is noticeable. In addition, the sum of the values of image clarity measured using optical combs of 0.125 mm, 0.5 mm, 1.0 mm, and 2.0 mm is preferably 230 or more, more preferably 270 or more, and still more preferably 350 or more. When the sum of the values of image clarity is less than 230, a transmitted image tends to appear blurred. When the sum is 230 or more and less than 270, no problem arises in everyday life, depending on outside brightness. When the sum is 270 or more and less than 350, an outside view can be clearly seen, although a diffraction pattern is noticeable only for a very bright object such as a light source. When the sum is 350 or more, almost no diffraction pattern is noticeable. Here, the values of image clarity are measured using ICM-1T, manufactured by Suga Test Instruments Co., Ltd., in accordance with JIS K7105. However, when a wavelength in which transmission is intended differs from the wavelength of a D65 light source, it is preferable to carry out the measurement after calibration using a filter for the wavelength in which transmission is intended is performed.

The haze in the wavelength range in which a transmission property is exhibited is preferably 6% or less, more preferably 4% or less, and still more preferably 2% or less. When the haze exceeds 6%, transmitted light is scattered and the view appears fogged. Here, the haze is measured using HM-150, manufactured by MURAKAMI COLOR RESEARCH LABORATORY, by a measurement method defined by JIS K7136. However, when a wavelength in which transmission is intended differs from the wavelength of a D65 light source, it is preferable to carry out the measurement after calibration using a filter for the wavelength in which transmission is intended is performed. The incident surface S1 of the directional reflector 1, preferably the incident surface S1 and the exit surface S2, have a degree of flatness with which image clarity is not degraded. Specifically, the incident surface S1 and the exit surface S2 preferably have an arithmetic average roughness Ra of 0.08 $\mu$m or less, more preferably 0.06 $\mu$m or less, and still more preferably 0.04 $\mu$m or less. Note that the above-described arithmetic average roughness Ra is calculated as a roughness parameter by measuring the surface roughness of the incident surface and obtaining a roughness curve from a two-dimensional profile curve. Note that the measurement conditions comply with JIS B0601:2001. The measurement instrument and the measurement conditions are as follows.

Measurement instrument: fully automatic microfigure-measuring instrument Surfcorder ET4000A (manufactured by Kosaka Laboratory Ltd.)

$\lambda$c = 0.8 mm, evaluation length 4 mm, cutoff x 5 times; data sampling interval 0.5 $\mu$m

The transmission color of the directional reflector 1 is preferably as neutral as possible and, when colored, is preferably a light color that gives a cool impression, such as blue, blue-green, or green. In view of obtaining such a color, the chromaticity coordinates x and y of the transmitted light that is light incident on the incident surface S1, passing through the optical layer 2 and the wavelength-selective reflective film 3, and exiting through the exit surface S2, and reflected light desirably satisfy the ranges, for example, preferably 0.20 < x < 0.35 and 0,20 < y < 0.40, more preferably 0.25 < x < 0.32 and 0.25 < y < 0.37, and still more preferably 0.30 < x < 0.32 and 0.30 < y < 0.35, with respect to radiation with a D65 light source. In addition, not to make the color look reddish, it is desirable to satisfy the relationship preferably y > x - 0.02, more preferably y > x. In addition, when the reflection color varies with the incident angle, for example, in the case of application to building windows, the color varies depending on positions or the color appears to change during walking. In view of suppressing such change in color, the absolute value of the difference in the chromaticity coordinate x of specularly reflected light that is light incident on the incident surface S1 or the exit surface S2 at an incident angle $\theta$ of 0° or more and 60° or less and reflected by the optical layer 2 and the wavelength-selective reflective film 3 and the absolute value of the difference in the chromaticity coordinate y of the specularly reflected light are preferably 0.05 or less, more preferably 0.03 or less, and still more preferably 0.01 or less, for each main surface of the directional reflector 1. Such numerical range limitations in terms of the chromaticity coordinates x and y of the reflected light are desirably satisfied for both of the incident surface S1 and the exit surface S2.

(First Optical Layer)

The first optical layer 4 is, for example, a support for supporting the wavelength-selective reflective film 3. In addition, the first optical layer 4 also serves to improve transmitted-image clarity and total light transmittance and to protect the wavelength-selective reflective film 3. The first optical layer 4 has, for example, a film shape, a sheet shape, a plate shape, or a block shape. In view of making the directional reflector 1 be capable of being easily bonded to the window article 10, the first optical layer 4 preferably has a film shape or a sheet shape. As for the material of the first optical layer 4, for example, a thermoplastic resin such as polycarbonate or an ionizing-radiation-curable resin such as acrylic can be used.

In addition, in view of imparting a design property to the directional reflector 1, the window article 10, or the like, the first optical layer 4 preferably has a characteristic of absorbing light with a specific wavelength in the visible region. A pigment dispersed in the resin may be either an organic pigment or an inorganic pigment, but, in particular, an inorganic pigment, which has high weather resistance as the pigment itself, is preferred. Specifically, there are inorganic pigments such as zircon grey (Co-Ni-doped $ZrSiO_4$), praseodymium yellow (Pr-doped $ZrSiO_4$) chrome-titanium yellow (Cr-Sb-doped $TiO_2$ or Cr-W doped $TiO_2$), chrome green ($Cr_2O_3$ or the like), peacock ((CoZn)O(AlCr)$_2O_2$), Victoria green ((AlCr)$_2O_2$), dark blue (coO·Al$_2O_3$·$SiO_2$), vanadium-zirconium blue (V-doped $ZrSiO_4$), chrome-tin pink (Cr-doped CaO·$SnO_2$·$SiO_2$), manganese pink (Mn-doped $Al_2O_3$), and coral pink (Fe-doped $ZrSiO_4$); and organic pigments such as azo pigments and phthalocyanine pigments.

The first optical layer 4 has structures 11 that are one-dimensionally arranged on a surface where the wavelength-selective reflective film 3 is formed. The pitch P of the structures 11 is preferably 30 $\mu$m or more and 5 mm or less, more preferably 50 $\mu$m or more and 1 mm or less, and still more preferably 50 $\mu$m or more and 500 $\mu$m or less. When the pitch of the structures 11 is less than 30 $\mu$m, it is difficult to make the structures 11 have a desired shape. Additionally, since it is generally difficult to make the wavelength selection characteristic of the wavelength-selective reflective film 3 steep, some of light in the transmission wavelength may be reflected. When such reflection occurs, diffraction is caused and even higher-order reflections are visually recognized. Thus, there is a tendency that the transparency appears poor. In addition, when the pitch of the structures 11 exceeds 5 mm, when the shape of the structures 11 required for directional reflection is considered, the film thickness required becomes large and the flexibility is lost and bonding to a rigid object such as the window article 10 becomes difficult.

In addition, the shape of the structures 11 formed on a surface of the first optical layer 4 is not limited to a single type. The structures 11 having shapes of a plurality of types may also be formed on the surface of the first optical layer 4. When the structures 11 having shapes of a plurality of types are formed on the surface, a predetermined pattern constituted by the structures 11 having shapes of a plurality of types may also be repeated periodically.

Figs. 3A to 3C are perspective views illustrating examples of the shape of the structures formed on the first optical layer. The structures 11 are columnar protrusions extending in one direction and these columnar structures 11 are one-dimensionally arranged in one direction. Since the wavelength-selective reflective film 3 is formed on these structures 11, the wavelength-selective reflective film 3 has the same shape as the surface shape of the structures 11.

The shapes of the structures 11 are, for example, a prism shape illustrated in Fig. 3A, a shape in which roundness is imparted to top portions of a prism shape as illustrated in Fig. 3B, a cylindrical shape illustrated in Fig. 3C, and inverted shapes thereof. In addition, the shape of the structures 11 is not limited to the shapes illustrated in Figs. 3A to 3C or the inverted shapes thereof, but may be a toroidal shape, a hyperbolic cylindrical shape, an elliptical cylindrical shape, a polygonal columnar shape, or a free-form surface shape. When the structures 11 have a prism shape, the inclination angle $\theta$ of the structures 11 having the prism shape is, for example, 45°.

In the case of the application to the window article 10, in view of reflecting and returning skyward a large proportion of light coming from the sky, the structures 11 preferably have flat or curved surfaces that are inclined possibly by 45° or more in terms of the inclination angle. This is because, when such a shape is employed, the incident light is returned skyward by substantially one-time reflection. Accordingly, the incident light can be efficiently reflected skyward even if the wavelength-selective reflective film 3 does not have very high reflectance, and light absorption in the wavelength-selective reflective film 3 can also be reduced.

Alternatively, as illustrated in Fig. 4A, the shape of the structures 11 may also be asymmetrical with respect to the normal $l_1$, which is normal to the incident surface S1 of the directional reflector 1. In this case, the major axis $l_m$ of the structures 11 is inclined in the direction a in which the structures 11 are arranged, with respect to the normal $l_1$. Here, the major axis $l_m$ of the structures 11 refers to a line passing through the midpoint of the base of the cross section of the structures and the vertices of the structures. When the directional reflector 1 is bonded to a window article 10 that is placed so as to be perpendicular to the ground, as illustrated in Fig. 4B, the major axis $l_m$ of the structures 11 is preferably inclined in the lower direction (ground side) of the window article 10 with respect to the normal h. This is because, in general, entry of heat in a large amount through a window occurs in the time of early afternoon and often at a solar altitude of larger than 45°. Accordingly, by employing the above-described shape, light incident at such large angles can be efficiently reflected upward. In Figs. 4A and 4B, illustrated are examples in which the structures 11 having a prism shape are made to have an asymmetrical shape with respect to the normal $l_1$. Note that the structures 11 having a shape other than a prism shape may also be made to have an asymmetrical shape with respect to the normal $l_1$. For example, a corner cube shape may be made so as to have an asymmetrical shape with respect to the normal $l_1$.

(Second Optical Layer)

The second optical layer 5 serves to improve transmitted-image clarity and total light transmittance and to protect the wavelength-selective reflective film 3. As for the material of the second optical layer 5, for example, a thermoplastic resin such as polycarbonate or an ionizing-radiation-curable resin such as acrylic may be used. In addition, a configuration in which the second optical layer 5 is formed as an adhesive layer and the directional reflector 1 is bonded to the window article 10 with the adhesive layer therebetween may also be employed. As for the material of the adhesive layer, for example, a pressure sensitive adhesive (PSA), an ultraviolet-curable resin, or the like may be used.

In addition, to impart a design property to the directional reflector 1, the second optical layer 5 may also have a function of absorbing light having a specific wavelength. As for the second optical layer 5 having such a function, for example, a material in which a pigment is in a resin serving as the main component of the second optical layer 5 can be used. Such a pigment dispersed in the resin may be either an organic pigment or an inorganic pigment, but, in particular, an inorganic pigment, which has high weather resistance as the pigment itself, is preferred. Specifically, there are inorganic pigments such as zircon grey (Co-Ni-doped $ZrSiO_4$), praseodymium yellow (Pr-doped $ZrSiO_4$) chrome-titanium yellow (Cr-Sb-doped $TiO_2$ or Cr-W doped $TiO_2$), chrome green ($Cr_2O_3$ or the like), peacock (($CoZn)O(AlCr)_2O_2$), Victoria green (($AlCr)_2O_3$), dark blue ($CoO\cdot Al_2O_3\cdot SiO_2$), vanadium-zirconium blue (V-doped $ZrSiO_4$), chrome-tin pink (Cr-doped $CaO\cdot SnO_2\cdot SiO_2$), manganese pink (Mn-doped $Al_2O_3$), and coral pink (Fe-doped $ZrSiO_4$); and organic pigments such as azo pigments and phthalocyanine pigments.

(Wavelength-Selective Reflective Film)

The wavelength-selective reflective film 3 is, for example, a laminated film, a transparent conductive film, or a functional film. Alternatively, a wavelength-selective film may be provided by combining two or more of a laminated film, a transparent conductive film, and a functional film. The wavelength-selective reflective film 3 preferably has an average film thickness of 20 $\mu$m, more preferably 5 $\mu$m or less, and still more preferably 1 $\mu$m or less. When the wavelength-selective reflective film 3 has an average film thickness of more than 20 $\mu$m, a transmitted image tends to appear distorted because the optical path in which the transmitted light is refracted becomes long. As for a method for forming the wavelength-selective reflective film, for example, a sputtering method, an evaporation method, a dip coating method, a die coating method, or the like may be used.

Hereinafter, the laminated film, the transparent conductive film, and the functional film will be sequentially described.

It is to be noted that films are selected such that the optical element defined in claim 1 displays no light absorption or light scattering in the visible light range.

(Laminated Film)

The laminated film is, for example, a laminated film formed by alternately laminating a low-refractive-index layer and a high-refractive-index layer that have different refractive indices. Alternatively, the laminated film is, for example, a laminated film formed by alternately laminating a metal layer having a high reflectance in the infrared region and an optical transparent layer having a high refractive index in the visible region and functioning as an antireflection layer, or a transparent conductive film.

The metal layer having a high reflectance in the infrared region is mainly composed of, for example, an element such as Au, Ag, Cu, Al, Ni, Cr, Ti, Pd, Co, Si, Ta, W, Mo, or Ge or an alloy containing two or more of these elements. Then, in consideration of practicality, of these, a Ag-based, Cu-based, Al-based, Si-based, or Ge-based material is preferable. In addition, when an alloy is used as a material for the metal layers, the metal layers are preferably mainly composed of AlCu, AlTi, AlCr, AlCo, AlNdCu, AlMgSi, AgPdCu, AgPdTi, AgCuTi, AgPdCa, AgPdMg, AgPdFe, Ag, SiB, or the like. In addition, to suppress corrosion of the metal layers, addition of a material such as Ti or Nd to the metal layers is preferred. In particular, when Ag is used as a material for the metal layers, the above-described material is preferably added.

The optical transparent layers are optical transparent layers that have a high refractive index in the visible region and function as antireflection layers. The optical transparent layers are mainly composed of, for example, a high-dielectric such as niobium oxide, tantalum oxide, titanium oxide, or the like. The transparent conductive films are mainly composed of, for example, zinc oxide, indium-doped tin oxide, or the like.

Note that the laminated film is not limited to a thin film composed of inorganic materials, but may be constituted by laminating thin films composed of polymer materials or layers in which fine particles or the like are dispersed in polymers. In addition, for the purpose of suppressing oxidation degradation of the underlying metal during the film formation of such optical transparent layers, thin buffer layers composed of Ti or the like and having a thickness of about several nanometers may be formed at the interfaces of the optical transparent layers being formed. Here, the buffer layers are layers for suppressing oxidation of metal layers or the like that are underlying layers by self-oxidation during the film formation of the overlying layers.

(Transparent Conductive Film)

The transparent conductive film is a transparent conductive film mainly composed of a conductive material having transparency in the visible region. The transparent conductive film is mainly composed of, for example, a transparent conductive material such as tin oxide, zinc oxide, a carbon-nanotube containing material, indium-doped tin oxide, indium-doped zinc oxide, or antimony-doped tin oxide. Alternatively, a layer in which nanoparticles of these or nanoparticles, nanorods, or nanowires of a material having electrical conductivity such as metal are dispersed in a high concentration in a resin may also be used.

(Functional Film)

The functional film is mainly composed of a chromic material in which reflection performance or the like changes reversibly in response to external stimulus. The chromic material is a material that reversibly changes its structure in response to external stimulus such as heat, light, or intruding molecules. As for the chromic material, for example, a photochromic material, a thermochromic material, a gasochromic material, or an electrochromic material can be used.

A photochromic material is a material whose structure is reversibly changed under the influence of light. Under the irradiation with light such as ultraviolet rays, various properties of a photochromic material such as reflectance and color can be reversibly changed. As for a photochromic material, for example, a transition metal oxide such as $TiO_2$, $WO_3$, $MoO_3$, or $Nb_2O_5$ doped with Cr, Fe, Ni, or the like can be used. In addition, it is also possible to improve wavelength selectivity by stacking such films and films having a different refractive index.

A thermochromic material is a material whose structure is reversibly changed under the influence of heat. Under heating, various properties of a photochromic material such as reflectance and color can be reversibly changed. As for a thermochromic material, for example, $VO_2$ or the like can be used. In addition, for the purpose of controlling transition temperature or transition curve, it is also possible to add an element such as W, Mo, or F. In addition, a lamination structure in which a thin film mainly composed of a thermochromic material such as $VO_2$ is sandwiched between antireflection layers mainly composed of a high-refractive-index material such as $TiO_2$ or ITO may be employed.

In addition, it is also possible to use a photonic lattice such as a cholesteric liquid crystal. A cholesteric liquid crystal can selectively reflect light having a wavelength corresponding to the layer interval. Because this layer interval changes with temperature, the properties such as reflectance and color can be reversibly changed by heating. At this time, the reflection range can also be widened by using several cholesteric liquid crystal layers with different layer intervals.

An electrochromic material is a material in which various properties such as reflectance and color can be reversibly changed with electricity. As for an electrochromic material, for example, a material whose structure can be reversibly changed by the application of a voltage can be used. More specifically, as for an electrochromic material, for example, a reflective light-controlling material whose reflection characteristics are changed when being doped or dedoped with, for example, protons or the like. The reflective light-controlling material is, specifically, a material whose optical properties can be controlled among a transparent state, a mirror state, and/or an intermediate state thereof by external stimuli. As for such a reflective light-controlling material, for example, an alloy material of magnesium and nickel, an alloy material mainly composed of an alloy material of magnesium and titanium, $WO_3$, a material in which needle crystals having selective reflectivity are contained in microcapsules, or the like can be used.

As for a specific configuration of the functional film, for example, a configuration in which the above-described alloy film, a catalytic film containing Pd or the like, a thin buffer layer of Al or the like, an electrolytic layer of $Ta_2O_5$ or the like, a proton-containing ion-storing layer of $WO_3$ or the like, and a transparent conductive film are stacked on the second optical layer can be used. Alternatively, a configuration in which a transparent conductive film, an electrolytic layer, an electrochromic layer of $WO_3$ or the like, and a transparent conductive film are stacked on the second optical layer can be used. In such configurations, by applying a voltage between the transparent conductive film and the counter electrode, the alloy film is doped or dedoped with protons contained in the electrolytic layer. As a result, the transmittance of the alloy layer is changed. In addition, to enhance the wavelength selectivity, an electrochromic material is desirably laminated with a high-refractive-index material such as $TiO_2$ or ITO. In addition, as another configuration, a configuration in which a transparent conductive film, an optical transparent layer in which microcapsules are dispersed, and a transparent electrode are stacked on the second optical layer can be used. In this configuration, by applying a voltage between the transparent electrodes, a transparent state in which the needle crystals in the microcapsules are oriented can be provided; and by removing the voltage, a wavelength-selective reflection state in which the needle crystals are oriented in all directions can be provided.

(Function of Directional Reflector)

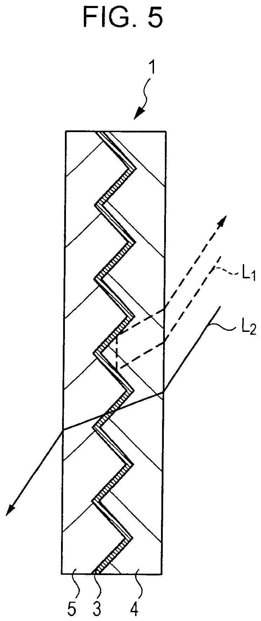

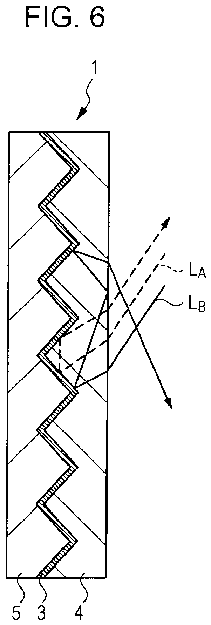

Figs. 5 and 6 are sectional views for illustrating an example of the function of the directional reflector. Here, as an example, a case where the structures have a prism shape with an inclination angle of 45° will be described as an example.

As illustrated in Fig. 5, a portion of near infrared rays $L_1$ out of sunlight incident on the directional reflector 1 is directionally reflected in the direction of the sky, the direction being similar to the incident direction, while visible light $L_2$

is transmitted through the directional reflector 1 .

In addition, as illustrated in Fig. 6, light incident on the directional reflector 1 and reflected at the reflective film surface of the wavelength-selective reflective film 3 is divided into a component $L_A$ that is reflected skyward and a component $L_B$ that is not reflected skyward in proportions depending on the incident angle. Then, the component $L_B$ that is not reflected skyward is totally reflected at the interface between the second optical layer 4 and the air and is finally reflected in a direction different from the incident direction.

When the incident angle of light is denoted with $\alpha$, the refractive index of the first optical layer 4 is denoted with n, and the reflectance of the wavelength-selective reflective film 3 is denoted with R, the proportion x of the skyward reflection component $L_A$ relative to all incident components is represented by the following equation (1):

$$x = (\sin(45-\alpha') + \cos(45-\alpha') / \tan(45+\alpha')) / (\sin(45-\alpha') + \cos(45-\alpha')) \times R^2 \dots (1)$$

where $\alpha' = \sin^{-1}(\sin\alpha/n)$.

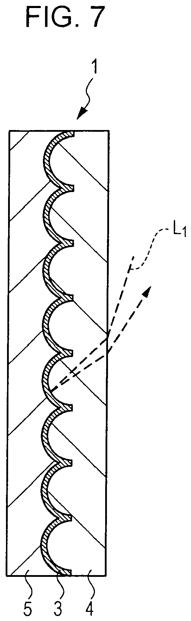

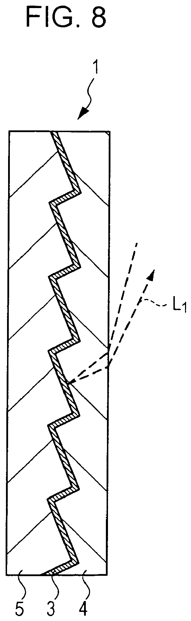

When the proportion of the component $L_B$ that is not reflected skyward increases, the proportion of skyward reflection of the incident light decreases. To increase the proportion of the skyward reflection, it is effective to make the shape of the wavelength-selective reflective film 3, that is, the shape of the structures 11 of the first optical layer 4 appropriate. For example, to increase the proportion of the skyward reflection, the structures 11 preferably have the cylindrical shape illustrated in Fig. 3C or the asymmetrical shape illustrated in Fig. 4. With such a shape, it is possible to increase the proportion in which light incident on, for example, a building window article from an upward direction is reflected upward although the light is not reflected in exactly the same direction as the incident light. As for the two shapes illustrated in Figs. 3C and 4, the number of reflection of the incident light by the wavelength-selective reflective film 3 is only one as illustrated in Figs. 7 and 8. Thus, the final reflected component can be increased compared with the shape illustrated in Fig. 5 in which reflection occurs twice. For example, in the case of employing the twice reflection, when the wavelength-selective reflective film 3 has a reflectance of 80% for a certain wavelength, the skyward reflectance is 64%. However, when the reflection occurs only once, the skyward reflectance is 80%.

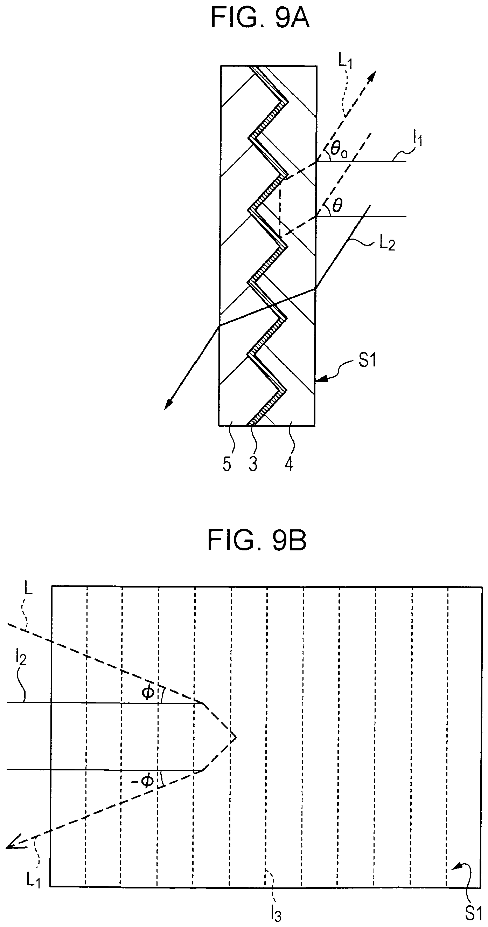

Fig. 9 illustrates the relationship between the ridges $l_3$ of the columnar structures 11 and incident light L and reflected light $L_1$. Of the light L incident on the incident surface S1 at an incident angle $(\theta, \phi)$, the directional reflector 1 selectively directionally reflects light $L_1$ in a specific wavelength range in a $(\theta o, -\phi)$ direction $(0° < \theta o < 90°)$ while transmitting light $L_2$ in a wavelength range other than the specific wavelength range. This is because satisfying this relationship allows light in a specific wavelength range to be reflected skyward. Note that $\theta$ denotes the angle between the normal $l_1$ to the incident surface S1 and the incident light L or the reflected light L1. $\phi$ denotes the angle between a line $l_2$ orthogonal to the ridges $l_3$ of the columnar structures 11 in the incident surface S1 and the component of the incident light L or the reflected light $L_1$ projected on the incident surface S1. Note that, the angle $\theta$ at which clockwise rotation is performed with respect to the normal $l_1$ is referred to as "+$\theta$" and the angle $\theta$ at which counterclockwise rotation is performed with respect to the normal $l_1$ is referred to as "-$\theta$". The angle $\phi$ at which clockwise rotation is performed with respect to the line $l_2$ is referred to as "+$\phi$" and the angle $\phi$ at which counterclockwise rotation is performed with respect to the line $l_2$ is referred to as "-$\phi$".

(Method for Producing Directional Reflector)

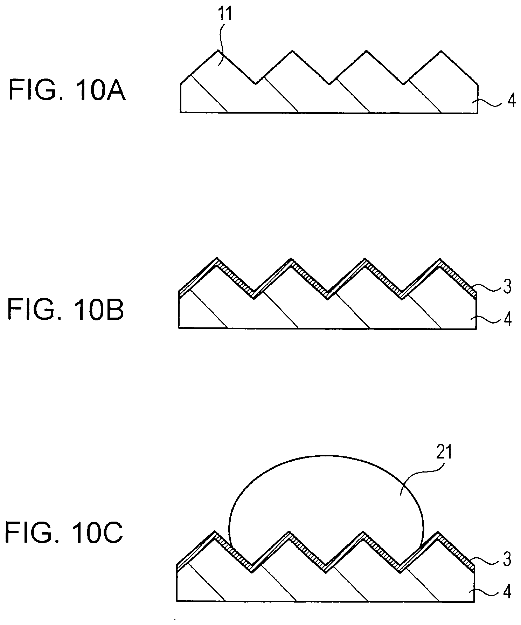

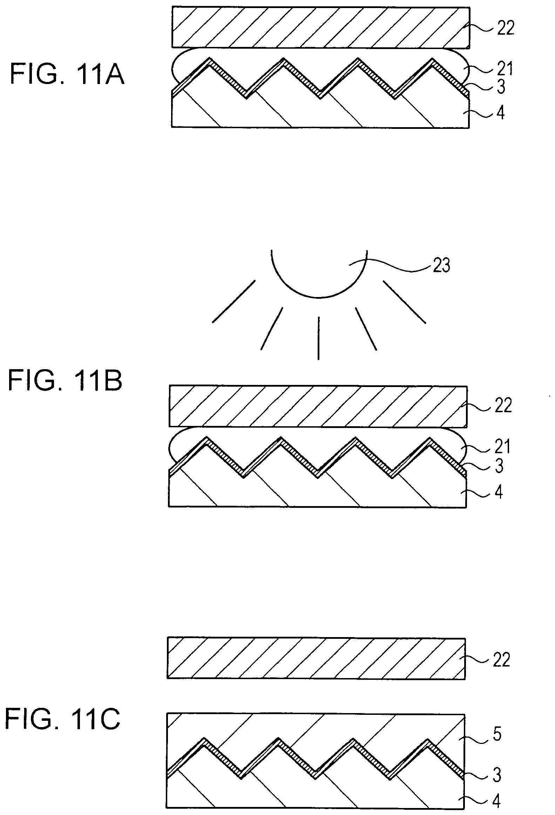

Hereinafter, referring to Figs. 10 and 11, an example of a method for producing a directional reflector according to the first embodiment of the present invention will be described.

First, a mold having the same irregular profile as the structures 11 or the inverted profile thereof is formed by, for example, processing with a cutting tool or laser. Next, the irregular profile of the mold is transferred to a resin material having a film shape or a sheet shape by, for example, a melt extrusion process or a transfer process. As for the transfer process, there is a process of pouring an ionizing-radiation-curable resin into the mold and curing it by irradiation with ionizing radiation, a process of transferring the profile by applying heat or pressure to a resin, or the like. As a result, as illustrated in Fig. 10A, the first optical layer 4 having the structures 11 on one main surface thereof is formed. Next, as illustrated in Fig. 10B, the wavelength-selective reflective film 3 is formed on the main surface of the first optical layer 4. A film-formation method for the wavelength-selective reflective film 3 is, for example, a sputtering method, an evaporation method, a CVD (chemical vapor deposition) method, a dip coating method, a die coating method, a wet coating method, a spray coating method, or the like and is preferably appropriately selected from these film-formation methods in accordance with the shape of the structures 11 or the like.

Next, as illustrated in Fig. 10C, a resin 21 in the state of being uncured is applied onto the wavelength-selective reflective film 3. As for the resin 21, for example, a thermoplastic resin, an ionizing-radiation-curable resin, or the like can be used. As for the ionizing-radiation-curable resin, an ultraviolet-curable resin is preferred. Next, as illustrated in Fig. 11A, a removable film 22 is disposed over the resin 21 to form the surface of the resin. Next, as illustrated in Fig. 11B, by radiating UV light from a light source 23 to the resin 21 or by cooling the resin 21, the resin 21 is cured. Next, as illustrated in Fig. 11C, the removable film 22 is removed from the cured resin 21. As a result, the second optical layer 5, which has a flat surface, is formed on the wavelength-selective reflective film 3. In addition, at this time, it is also possible not to use the removable film 22 and to use a film transparent to light having a wavelength that the wavelength-selective reflective film transmits and to ionizing radiation and to use the film as an optical element without being removed. Furthermore, it is also possible to form an optical element in which an adhesive is formed on a surface by forming coating with a large thickness with an adhesive component dissolved in a solvent, flattening the coating by leveling, and subsequently covering the coating with the removable film 22.

As described above, the directional reflector 1 in which the wavelength-selective reflective film having a desired shape is disposed within the optical layer 2 is obtained.

<2. Second Embodiment>

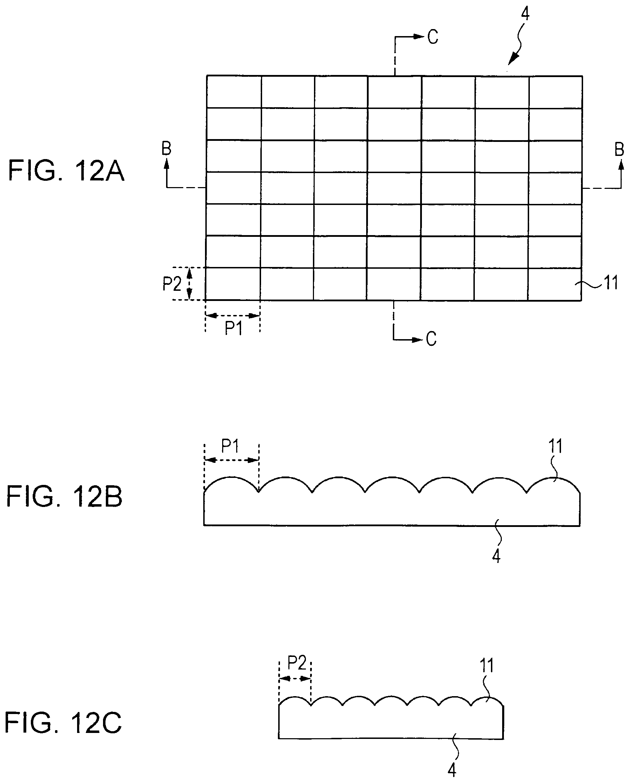

Figs. 12 to 14 are sectional views illustrating configuration examples of structures of directional reflectors according to the second embodiment which does not fall within the scope of the present invention. In the second embodiment, the portions corresponding to those in the first embodiment are denoted by the same reference numerals. The second embodiment differs from the first embodiment in that the structures 11 are two-dimensionally arranged on one main surface of the first optical layer 4.

The structures 11 are two-dimensionally arranged on one main surface of the first optical layer 4. This arrangement can be an arrangement in a closest-packed state. For example, the structures 11 are two-dimensionally arranged in a closest-packed state on one main surface of the first optical layer 4 so as to form a close-packed array such as a square close-packed array, a delta close-packed array, or a hexagonal close-packed array. The square close-packed array is an array where the structures 11 having square bottoms are arranged in a square close-packed pattern. The delta close-packed array is an array where the structures 11 having triangular bottoms are arranged in a hexagonal close-packed pattern. The hexagonal close-packed array is an array where the structures 11 having hexagonal bottoms are arranged in a hexagonal close-packed pattern.

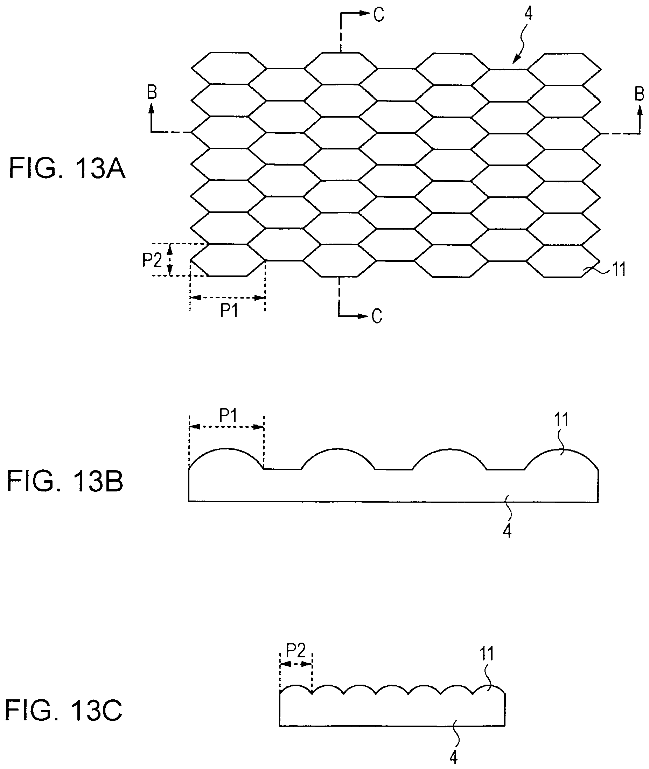

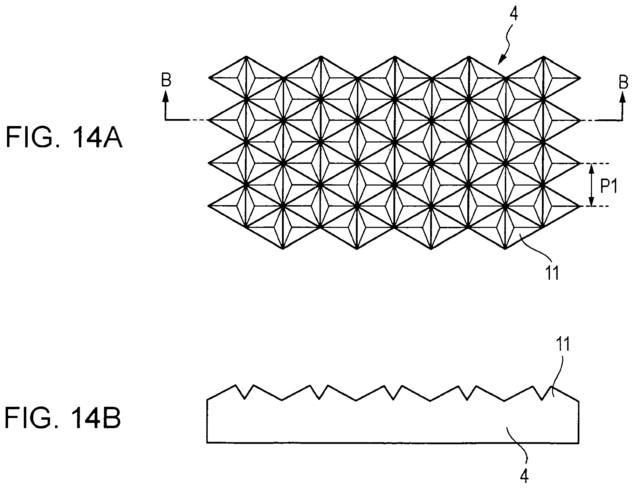

The structures 11 are protrusions or recesses having, for example, a corner-cube shape, a hemispherical shape, a semielliptic-spherical shape, a prism shape, a free-form surface shape, a polygonal shape, a conical shape, a polygonal pyramid shape, a frusto-conical shape, a parabolic shape, or the like. The bottoms of the structures 11 have, for example, a circular shape, an elliptical shape, or a polygonal shape such as a triangular shape, a quadrangular shape, a hexagonal shape, or an octagonal shape, or the like. Note that Figs. 12 illustrate an example of a square close-packed array in which the structures 11 having quadrangular bottoms are two-dimensionally arranged in a closest-packed state. In addition, Figs. 13 illustrate an example of a delta close-packed array in which the structures 11 having hexagonal bottoms are two-dimensionally arranged in a closest-packed state. In addition, Figs. 14 illustrate an example of a hexagonal close-packed array in which the structures 11 having triangular bottoms are two-dimensionally arranged in a closest-packed state. The pitches P1 and P2 of the structures 11 can be appropriately selected in accordance with desired optical characteristics. In addition, when the major axis of the structures 11 is inclined with respect to the normal that is normal to the incident surface of the directional reflector 1, the major axis of the structures 11 can be inclined in at least one of the arrangement directions in which the structures 11 are two-dimensionally arranged. When the directional reflector 1 is bonded to a window article placed so as to be perpendicular to the ground, the major axis of the structures 11 can be inclined in a lower direction (the ground side) of the window article with respect to the normal.

<3. Third Embodiment>

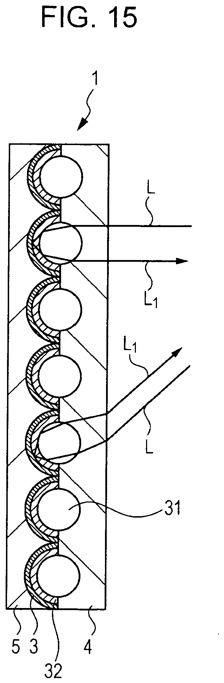

Fig. 15 is a sectional view illustrating a configuration example of a directional reflector according to the third embodiment of the present invention. In the third embodiment, the portions corresponding to those in the first embodiment are denoted by the same reference numerals. As illustrated in Fig. 15, the third embodiment differs from the first embodiment in that beads 31 are provided instead of the structures.

The beads 31 are embedded in one main surface of the first optical layer 4 such that portions of the beads 31 protrude from the one main surface. In addition, a focusing layer 32, the wavelength-selective reflective film 3, and the second optical layer are sequentially stacked on one main surface of the first optical layer 4 in which the beads 31 are embedded. The beads 31 have, for example, a spherical shape. The beads 31 preferably have transparency. The beads 31 mainly composed of, for example, an inorganic material such as glass or an organic material such as a polymer resin.

<4. Fourth Embodiment>

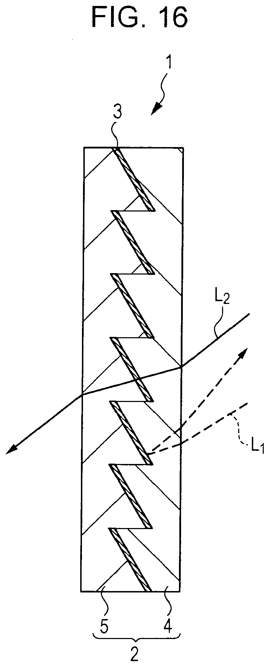

Fig. 16 is a sectional view illustrating a configuration example of a directional reflector according to the fourth embodiment of the present invention. In the fourth embodiment, the same portions as those in the first embodiment are denoted by the same reference numerals, and a description thereof will be omitted. The fourth embodiment differs from the first embodiment in that a plurality of wavelength-selective reflective films 3 inclined with respect to the light-incident surface are provided in the optical layer 2 and these wavelength-selective reflective films 3 are arranged so as to be parallel to one another.

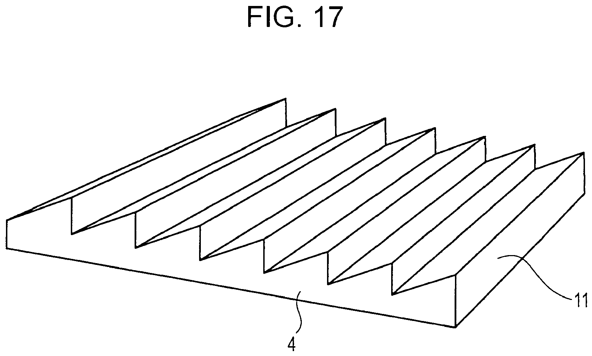

Fig. 17 is a perspective view illustrating a configuration example of structures of the directional reflector according to the fourth embodiment of the present invention. The structures 11 are triangular-prism-shaped protrusions extending in one direction and the prism-shaped structures 11 are one-dimensionally arranged in one direction. The cross section of the structures 11 perpendicular to the direction in which they extend has, for example, a right triangular shape. The wavelength-selective reflective films 3 are formed on the inclined surfaces of the structures 11 on the acute angle side of the structures 11 by, for example, a thin-film-formation method having directivity such as an evaporation method or a sputtering method.

According to the fourth embodiment, the plurality of wavelength-selective reflective films 3 are arranged in parallel in the optical layer 5. This reduces the number of times of reflection by the wavelength-selective reflective films 3 as compared with the case where the structures 11 having a corner-cube shape or a prism shape are formed. Accordingly, it is possible to increase reflectance and to reduce light absorption at the wavelength-selective reflective films 3.

<5. Fifth Embodiment>

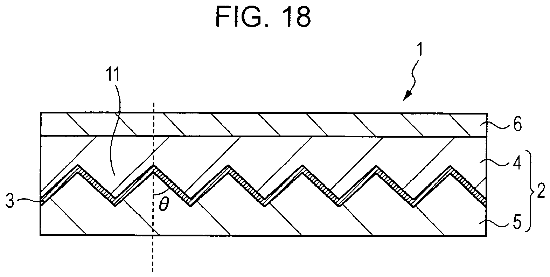

Fig. 18 is a sectional view illustrating a configuration example of a directional reflector according to the fifth embodiment of the present invention. In the fifth embodiment, the same portions as those in the first embodiment are denoted by the same reference numerals, and a description thereof will be omitted. As illustrated in Fig. 18, the fifth embodiment differs from the first embodiment in that the directional reflector 1 further includes a self-cleaning-effect layer 6 that provides a cleaning effect on the incident surface of the directional reflector 1. The self-cleaning-effect layer 6 contains, for example, a photocatalyst. As for the photocatalyst, for example, $TiO_2$ can be used.

As described above, the directional reflector 1 has a feature of selectively dimensionally reflecting light in a specific wavelength range. When the directional reflector 1 is used outdoors, in a room containing dirt in a large amount, or the like, dirt adhering to the surface scatters light, thus losing directional reflection characteristics. Accordingly, it is preferred that the surface be always optically transparent. Therefore, it is preferred that the surface be excellent in terms of a water-repellent property, a hydrophilic property, or the like and the surface automatically exhibit a cleaning effect.

According to the fifth embodiment, since the self-cleaning-effect layer 1 is formed on the incident surface of the directional reflector 1, a water-repellent property, a hydrophilic property, or the like can be imparted to the incident surface. Accordingly, adhering of dirt or the like to the incident surface can be suppressed and degradation of the directional reflection characteristics can be suppressed.

<6. Sixth Embodiment>

The sixth embodiment differs from the first embodiment in that light having a specific wavelength is directionally reflected while light having a wavelength other than the specific wavelength is scattered. The directional reflector 1 includes a light scatterer for scattering incident light. Such a scatterer is provided, for example, at at least one position among on a surface of the optical layer 2, inside the optical layer 2, and between the wavelength-selective reflective film 3 and the optical layer 2. The light scatterer is preferably provided at at least one position among between the wavelength-selective reflective film 3 and the second optical layer 5, inside the second optical layer 5, and on the surface of the second optical layer 5. When the directional reflector 1 is bonded to a support such as a window article, the application is possible to either the indoor side or the outdoor side. When the directional reflector 1 is bonded on the outdoor side, a light scatterer that scatters light having a wavelength other than the specific wavelength is preferably provided only between the wavelength-selective reflective film 3 and a support such as a window article. This is because, when the directional reflector 1 is bonded to a support such as a window article, the presence of a light scatterer between the wavelength-selective reflective film 3 and the incident surface causes loss of the directional reflection characteristics. Alternatively, when the directional reflector 1 is bonded on the indoor side, a light scatterer is preferably provided between the exit surface, which is opposite the surface to be bonded, and the wavelength-selective reflective film 3.

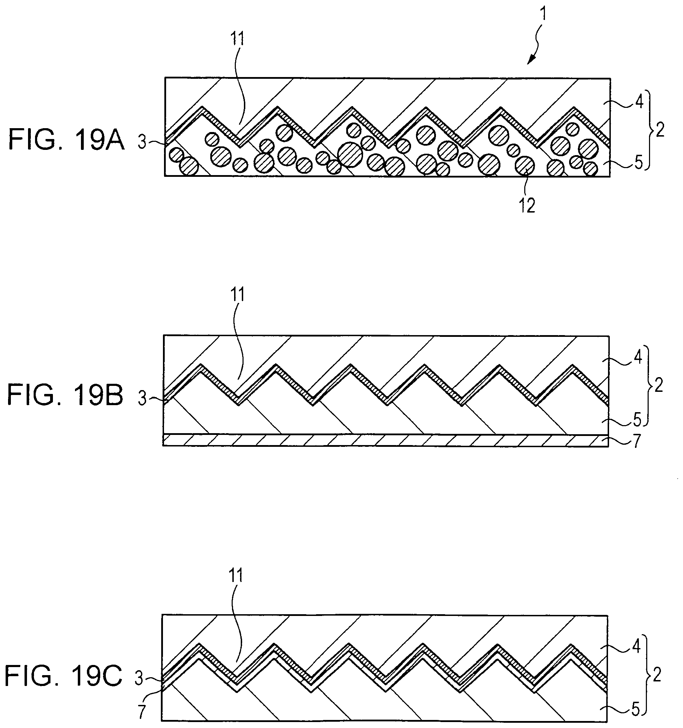

Fig. 19A is a sectional view illustrating a first configuration example of the directional reflector according to the sixth embodiment of the present invention. As illustrated in Fig. 19A, the second optical layer 5 contains a resin and fine particles 12. The fine particles 12 have a refractive index different from that of the resin serving as the major constituent material of the second optical layer 5. As for the fine particles 12, for example, at least one type of organic fine particles and inorganic fine particles can be used. In addition, as for the fine particles 12, hollow fine particles can also be used. As for the fine particles 12, for example, there are inorganic fine particles of silica, alumina, or the like and organic fine particles of styrene, acrylic, copolymers thereof, or the like, but silica fine particles are particularly preferred.

Fig. 19B is a sectional view illustrating a second configuration example of the directional reflector according to the sixth embodiment of the present invention. As illustrated in Fig. 19B, the directional reflector 1 further includes a light-scattering layer 7 on a surface of the second optical layer 5. The light-scattering layer 7 contains, for example, a resin and fine particles. As for the fine particles, what are similar to those of the first example can be used.

Fig. 19C is a sectional view illustrating a third configuration example of the directional reflector according to the sixth embodiment of the present invention. As illustrated in Fig. 19C, the directional reflector 1 further includes a light-scattering layer 7 between the wavelength-selective reflective film 3 and the second optical layer 5. The light-scattering layer 7 contains, for example, a resin and fine particles. As for the fine particles, what are similar to those of the first example can be used.

According to the sixth embodiment, light in a specific wavelength range such as infrared rays can be directionally reflected while light in a wavelength range other than the specific wavelength range such as visible light can be scattered. Therefore, the directional reflector 1 can be fogged and a design property can be imparted to the directional reflector 1.

*<7. Seventh Embodiment>*

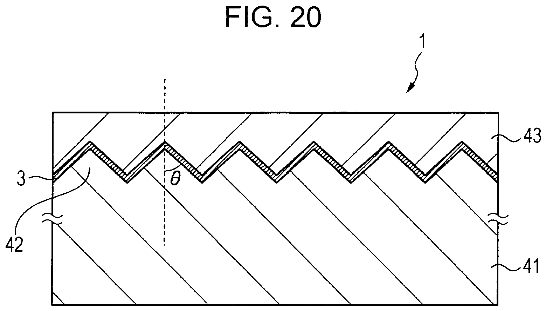

Fig. 20 is a sectional view illustrating a configuration example of a directional reflector according to the seventh embodiment of the present invention. In the seventh embodiment, the same portions as those in the first embodiment are denoted by the same reference numerals, and a description thereof will be omitted. The seventh embodiment differs from the first embodiment in that the wavelength-selective reflective film 3 is directly formed on a window article 41.

The window article 41 has structures 42 on one main surface thereof. The wavelength-selective reflective film 3 and an optical layer 43 are sequentially stacked on the main surface on which the structures 42 are formed. As for the shape of the structures 42, a shape in which the irregularities of the structures 11 in the first embodiment are inverted can be used. The optical layer 43 serves to improve transmitted-image clarity and total light transmittance and to protect the wavelength-selective reflective film 3. The optical layer 43 is formed by, for example, curing a resin mainly composed of a thermoplastic resin or an ionizing-radiation-curable resin.

*<8. Eighth Embodiment>*

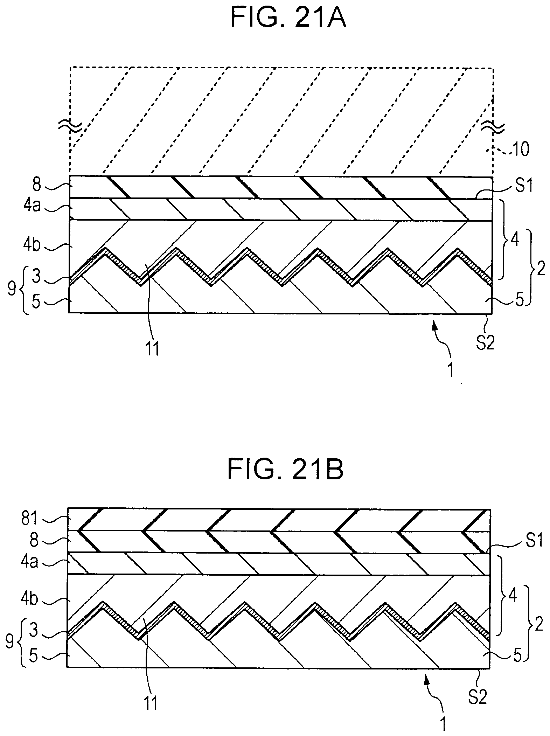

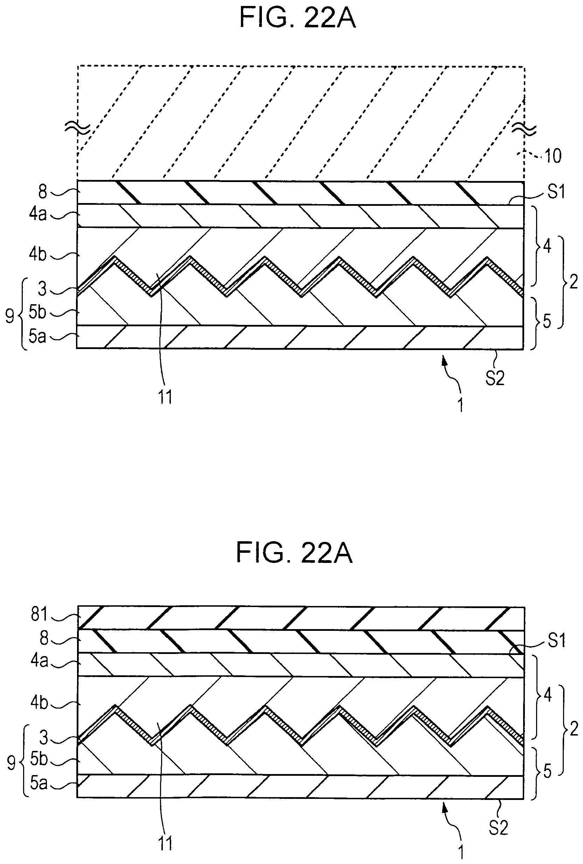

Figs. 21A and 21B are sectional views illustrating a first configuration example of a directional reflector according to the eighth embodiment of the present invention. Figs. 22A and 22B are sectional views illustrating a second configuration example of the directional reflector according to the eighth embodiment of the present invention. In the eighth embodiment, the same portions as those in the first embodiment are denoted by the same reference numerals, and a description thereof will be omitted. The eighth embodiment differs from the first embodiment in that at least one of the first optical layer 4 and the second optical layer 5 has a double-layer structure. In Figs. 21A and 21B, illustrated is an example in which the first optical layer 4, which is on the side of the incident surface S1 on which external light is incident, has a double-layer structure. In Figs. 22A and 22B, illustrated is an example in which both the first optical layer 4, which is on the side of the incident surface S1 on which external light is incident, and the second optical layer 5, which is on the side of the exit surface S2 through which external light exits, have a double-layer structure. As illustrated in Figs. 21A and 21B, the double-layer structure of the first optical layer 4 is constituted by, for example, a flat substrate 4a on the front surface side and a resin layer 4b formed between the substrate 4a and the wavelength-selective reflective film 3. As illustrated in Figs. 22A and 22B, the double-layer structure of the second optical layer 5 is constituted by, for example, a flat substrate 5a on the front surface side and a resin layer 5b formed between the substrate 5a and the wavelength-selective reflective film 3. Hereafter, the second optical layer 5 on which the wavelength-selective reflective film 3 is formed is referred to as a reflective-layer-equipped optical layer 9.

The directional reflector 1 is bonded on the indoor side or the outdoor side of the window article 10 serving as an adherend, for example, with a bonding layer 8 therebetween. As for the bonding layer 8, for example, an adhesive layer mainly composed of an adhesive agent or a tacky layer mainly composed of a tacky agent can be used. When the bonding layer 8 is a tacky layer, as illustrated in Figs. 21 B and 22B, the directional reflector 1 preferably further includes a tacky layer formed on the incident surface S1 or the exit surface S2 thereof and a removable layer formed on the tacky layer. This is because, when such a configuration is employed, simply by removing the removable layer, the directional reflector 1 can be easily bonded to an adherend such as the window article 10 with the tacky layer therebetween.

In view of enhancing the adhesion between the directional reflector 1 and the bonding layer 8, a primer layer is preferably further formed between the directional reflector 1 and the bonding layer 8. In addition, similarly, in view of enhancing the adhesion between the directional reflector 1 and the bonding layer 8, the incident surface S1 or the exit surface S2 of the directional reflector 1 on which the bonding layer 8 is to be formed is preferably subjected to a known physical pretreatment. As for such a known physical pretreatment, for example, there is a plasma treatment, a corona treatment, or the like.

The first substrate 4a and the second substrate 5a are, for example, substrates having transparency. As for the shape of the substrate 51, for example, there is a film shape, a sheet shape, a plate shape, or a block shape. However, the shape of the substrate 51 is not particularly restricted to these shapes. As for a material of the substrate 11, for example, a known polymer material can be used. As for such a known polymer material, for example, there is triacetyl cellulose (TAC), polyester (TPEE), polyethylene terephthalate (PET), polyimide (PI), polyamide (PA), aramid, polyethylene (PE), polyacrylate, polyethersulfone, polysulfone, polypropylene (PP), diacetyl cellulose, polyvinyl chloride, an acrylic resin (PMMA), polycarbonate (PC), an epoxy resin, a urea resin, a urethane resin, a melamine resin, or the like. However, the known polymer material is not particularly restricted to these materials. The first substrate 4a and the second substrate 5a preferably have a thickness from 38 to 100 $\mu$m in view of productivity. However, the thickness is not particularly restricted to this range. The first substrate 4a or the second substrate 5a preferably has transparency to ionizing radiation. This is because, as a result, as described later, an ionizing-radiation-curable resin disposed between the first substrate 4a or the second substrate 5a and the wavelength-selective reflective film 3 can be cured by irradiation with ionizing radiation from the first substrate 4a side or the second substrate 5a side.

The first resin layer 4b and the second resin layer 5b have, for example, transparency. The first resin layer 4b can be obtained by, for example, curing a resin composition between the first substrate 4a and the wavelength-selective reflective film 3. The second resin layer 5b can be obtained by, for example, curing a resin composition between the second substrate 5a and the wavelength-selective reflective film 3. As for the resin composition, in view of ease of production, preferably used is an ionizing-radiation-curable resin, which is cured with light, an electron beam, or the like or a thermosetting resin, which is cured by heat. As for the ionizing-radiation-curable resin, preferred is a photocurable resin composition, which is cured by light, and most preferred is an ultraviolet-curable resin composition, which is cured by ultraviolet rays. In view of enhancing the adhesion between the first resin layer 4b or the second resin layer 5b and the wavelength-selective reflective film 3, the resin composition preferably further contains a compound containing phosphoric acid, a compound containing succinic acid, or a compound containing butyrolactone. As for the compound containing phosphoric acid, for example, a (meth)acrylate containing phosphoric acid, preferably a (meth)acrylic monomer or oligomer having phosphoric acid as a functional group can be used. As for the compound containing succinic acid, for example, a (meth)acrylate containing succinic acid, preferably a (meth)acrylic monomer or oligomer having succinic acid as a functional group can be used. As for the compound containing butyrolactone, for example, a (meth)acrylate containing butyrolactone, preferably a (meth)acrylic monomer or oligomer having butyrolactone as a functional group can be used. Preferably, at least one of the first resin layer 4b and the second resin layer 5b contains a functional group with high polarity, and the content of the functional group is different between the first resin layer 4b and the second resin layer 5b. Preferably, both of the first resin layer 4b and the second resin layer 5b contain a compound containing phosphoric acid, and the content of the phosphoric acid is different between the first resin layer 4b and the second resin layer 5b. The difference in the content of phosphoric acid between the first resin layer 4b and the second resin layer 5b is preferably twice or more, more preferably five times or more, and more preferably ten times or more.

When at least one of the first resin layer 4b and the second resin layer 5b contains a compound containing phosphoric acid, the wavelength-selective reflective film 3 preferably contains an oxide, a nitride, or an oxynitride at the surface in contact with the first resin layer 4b or the second resin layer 5b that contains the compound containing phosphoric acid. In particular, it is preferred that the wavelength-selective reflective film 3 has a thin film containing an oxide of zinc at the surface in contact with the first resin layer 4b or the second resin layer 5b that contains the compound containing phosphoric acid.

The ultraviolet-curable resin composition contains, for example, a (meth)acrylate and a photoinitiator. In addition, if necessary, the ultraviolet-curable resin composition may further contain a photostabilizer, a flame retardant, a leveling agent, an antioxidant, or the like.

As for the acrylate, a monomer and/or oligomer having two or more (meth)acryloyl groups is preferably used. As for this monomer and/or oligomer, for example, a urethane (meth)acrylate, an epoxy (meth)acrylate, a polyester (meth)acrylate, a polyol (meth)acrylate, a polyether (meth)acrylate, a melamine (meth)acrylate, or the like can be used. Here, the (meth)acryloyl group refers to either an acryloyl group or a methacryloyl group. Here, the oligomer refers to a molecule having a molecular weight of 500 or more and 60,000 or less.

As for the photoinitiator, a material appropriately selected from known materials can be used. As for the known materials, for example, a benzophenone derivative, an acetophenone derivative, or an anthraquinone derivative can be used alone or in combination. The amount of a photoinitiator blended is preferably 0.1% or more and 10% or less by mass of the solid content. When the amount is less than 0.1% by mass, the photocurability is degraded and it is practically unsuitable for industrial production. On the other hand, when the amount exceeds 10% by mass, when the amount of light radiated is small, a coated film tends to have a remaining odor. Here, the solid content refers to all the components that constitute a hard coat layer 12 after being cured. Specifically, for example, acrylate, a photoinitiator, and the like are referred to as a solid content.

As for the resin used, preferred is one that does not deform or generate cracks at a process temperature during the formation of a dielectric. When the glass transition temperature is low, deformation may be caused at high temperatures after disposition or the shape of the resin varies during the formation of the dielectric, which is not preferable.

When the glass transition temperature is high, cracks or peeling at the interface tends to be caused, which is not preferable. Specifically, the glass transition temperature is preferably 60°C or more and 150°C or less, more preferably 80°C or more and 130°C or less.

The resin is preferably one to which a profile can be transferred by energy beam irradiation, heat, or the like. Any type of resin satisfying the above-described refractive index requirement, such as a vinyl-based resin, an epoxy-based resin, or a thermoplastic resin may be used.

To reduce shrinkage upon curing, an oligomer may be added. A curing agent such as a polyisocyanate may also be contained. In addition, in consideration of the adhesion to the substrate, a monomer containing a hydroxyl group, a carboxyl group, a carboxylic acid, or a phosphate group; polyhydric alcohols; a coupling agent of silane, aluminum, titanium, or the like; various chelating agents; or the like may be added.

As for the vinyl-based resin, a (meth)acrylic-based resin is preferred. As for a preferred (meth)acrylic-based resin, specific examples of hydroxyl-group-containing vinyl-based monomers are, for example, various hydroxyalkyl esters of $\alpha,\beta$-ethylenically unsaturated carboxylic acids, such as, starting with 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 3-chloro-2-hydroxypropyl (meth)acrylate, di-2-hydroxyethyl fumarate, and mono-2-hydroxyethyl-monobutyl fumarate; polyethylene glycol- or polypropylene glycol mono(meth)acrylates and adducts thereof with ε-caprolactone, and "PLACCEL FM or FA monomer" (a trade name for a caprolactone-adduct monomer manufactured by DAICEL CHEMICAL INDUSTRIES, LTD.).

As for specific examples of the carboxyl-group-containing vinyl-based monomers, there are various unsaturated mono- or dicarboxylic acids such as (meth)acrylic acid, crotonic acid, maleic acid, fumaric acid, itaconic acid, and citraconic acid; dicarboxylate monoesters such as monoethyl fumarate and monobutyl maleate; adducts of the above-mentioned hydroxyl-group-containing (meth)acrylates with anhydrides of various polycarboxylic acids such as succinic acid, maleic acid, phthalic acid, hexahydrophthalic acid, tetrahydrophthalic acid, benzenetricarboxylic acid, benzenetetracarboxylic acid, and "HIMIC ACID", and tetrachlorophthalic acid; and the like.

As for specific examples of the phosphate-group-containing vinyl-based monomers, there are dialkyl [(meth)acryloyloxyalkyl] phosphates, (meth)acryloyloxyalkyl acid phosphates, dialkyl [(meth)acryloyloxyalkyl] phosphites, and (meth)acryloyloxyalkyl acid phosphites.

As for the polyhydric alcohols, one, two or more of various polyalcohols can be used such as ethylene glycol, propylene glycol, glycerin, trimethylolethane, trimethylolpropane, neopentyl glycol, 1,6-hexanediol, 1,2,6-hexanetriol, pentaerythritol, and sorbitol. Alternatively, instead of alcohol, various glycidyl esters of aliphatic acids, which are not alcohols, can be used, such as "CARDURA E" (a trade name for a glycidyl ester of an aliphatic acid, manufactured by Shell in Netherlands).

As for the carboxylic acid, various carboxylic acids can be used such as benzoic acid, p-tert-butylbenzoic acid, phthalic acid (anhydride), hexahydrophthalic acid (anhydride), tetrahydrophthalic acid (anhydride), tetrachlorophthalic acid (anhydride), hexachlorophthalic acid (anhydride), tetrabromophthalic acid (anhydride), trimellitic acid, "HIMIC ACID" [a product from Hitachi Chemical Company, Ltd.; "HIMIC ACID" is a registered trademark of the company), succinic acid (anhydride), maleic acid (anhydride), fumaric acid, itaconic acid (anhydride), adipic acid, sebacic acid, and oxalic acid. These monomers can be used alone or be copolymerized. Examples of a monomer with which copolymerization can be performed will be mentioned. Styrene-based monomers such as styrene, vinyltoluene, p-methylstyrene, ethylstyrene, propylstyrene, isopropylstyrene, and p-tert-butylstyrene.

Alkyl(meth)acrylates such as methyl(meth)acrylate, ethyl(meth)acrylate, propyl(meth)acrylate, iso(i)-propyl(meth)acrylate, n-butyl(meth)acrylate, i-butyl (meth)acrylate, tert-butyl(meth)acrylate, sec-butyl(meth)acrylate, octyl (meth)acrylate, 2-ethylhexyl(meth)acrylate, lauryl(meth)acrylate, "ACRYESTER SL" [a trade name for a C12-/C13 methacrylate mixture manufactured by MITSUBISHI RAYON CO., LTD.], and stearyl(meth)acrylate; (meth)acrylates having no functional group in the side chains thereof, such as cyclohexyl(meth)acrylate, 4-tert-butylcyclohexyl(meth)acrylate, isobornyl(meth)acrylate, adamantyl(meth)acrylate, and benzyl(meth)acrylate; bifunctional vinyl-based monomers such as ethylene-di-(meth)acrylate.

Various alkoxyalkyl(meth)acrylates such as methoxyethyl(meth)acrylate, ethoxyethyl(meth)acrylate, and methoxybutyl(meth)acrylate.

Diesters of various dicarboxylic acids represented by maleic acid, fumaric acid, and itaconic acid with monohydric alcohols, such as dimethyl maleate, diethyl maleate, diethyl fumarate, di(n-butyl) fumarate, di(i-butyl) fumarate, and dibutyl itaconate.

Various vinyl esters such as vinyl acetate, vinyl benzoate, "VeoVa" [a trade name for a vinyl ester of a diverged (branched) aliphatic monocarboxylic acid, manufactured by Shell in Netherlands], and (meth)acrylonitrile.

Nitrogen-containing vinyl-based monomers including N,N-alkylaminoalkyl (meth)acrylates, such as N-dimethylaminoethyl(meth)acrylate and N,N-diethylaminoethyl(meth)acrylate; amide-bond-containing vinyl-based monomers, such as (meth)acrylamide, a butyl ether of N-methylol(meth)acrylamide, and dimethylaminopropylacrylamide; and the like.

The amount of these can be freely adjusted in accordance with properties of a dielectric layer or a metal film.

The first substrate 4a or the second substrate 5a preferably has a lower water vapor permeability than the first resin layer 4b or the second resin layer 5b. For example, when the first resin layer 4b is formed of an ionizing-radiation-curable resin such as a urethane acrylate, the first substrate 4a is preferably formed of a resin, such as polyethylene terephthalate (PET), that has a lower water vapor permeability than the first resin layer 4b and has transparency to ionizing radiation. As a result, diffusion of moisture through the incident surface S1 or the exit surface S2 into the wavelength-selective reflective film 3 can be reduced and degradation of metal or the like contained in the wavelength-selective reflective film 3 can be suppressed. Accordingly, the durability of the directional reflector 1 can be enhanced. PET having a thickness of 75 $\mu$m has a water vapor permeability of about 10 g/m$^2$/day (40°C, 90% RH).

[Apparatus for Producing Directional Reflector]

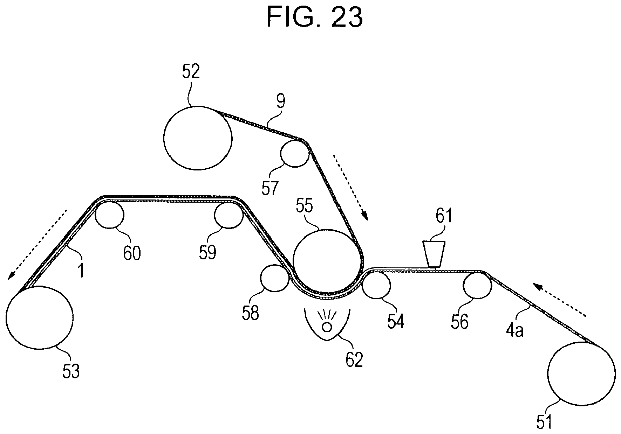

Fig. 23 is a schematic diagram illustrating a configuration example of an apparatus for producing the directional reflector according to the eighth embodiment of the present invention. As illustrated in Fig. 23, this production apparatus includes a substrate supply roller 51, an optical-layer supply roller 52, a take-up roller 53, lamination rollers 54 and 55, guide rollers 56 to 60, an application unit 61, and an irradiation unit 62.

The substrate supply roller 51 and the optical-layer supply roller 52 respectively have a strip of the substrate 4a and a strip of the reflective-film-equipped optical layer 9 that are wounded thereon in a roll form and are arranged so that the substrate 4a and the reflective-film-equipped optical layer 9 can be continuously fed via the rollers 56 and 57 and the like. The arrows in the figure indicate directions in which the substrate 4a and the reflective-film-equipped optical layer 9 are conveyed. The reflective-film-equipped optical layer 9 is the second optical layer 5 in which the wavelength-selective reflective film 3 is formed.

The take-up roller 53 is arranged so that it can take up a strip of the directional reflector 1 produced by the production apparatus. The lamination rollers 54 and 55 are arranged so that they can nip the reflective-film-equipped optical layer 9 fed from the optical-layer supply roller 52 and the substrate 4a fed from the substrate supply roller 51. The guide rollers 56 to 60 are arranged along the conveyance path in the production apparatus so that they can convey the strip of the reflective-film-equipped optical layer 9, the strip of the substrate 4a, and the strip of the directional reflector 1. The materials of the lamination rollers 54 and 55 and the guide rollers 56 to 60 are not particularly restricted and can be appropriately selected and used from metals such as stainless steel, rubber, silicone, and the like in accordance with desired roller characteristics.

As for the application unit 61, for example, a device having an applicator such as a coater can be used. As for the coater, for example, in consideration of physical properties of a resin composition to be coated or the like, a coater such as a gravure coater, a wire bar coater, or a die coater can be appropriately used. The irradiation unit 62 is, for example, an irradiation unit that radiates an ionizing radiation such as an electron beam, ultraviolet rays, visible light, or gamma rays.

[Method for Producing Directional Reflector]

Hereinafter, an example of a method for producing the directional reflector according to the eighth embodiment of the present invention will be described with reference to Figs. 22 and 23.

First, the reflective-film-equipped optical layer 9 is prepared as follows. Specifically, an ionizing-radiation-curable resin is applied onto a strip of the substrate 5a. While an irregular surface of a mold having a roller shape or the like is pressed against the applied ionizing-radiation-curable resin, ionizing radiation is radiated to the ionizing-radiation-curable resin from the substrate 5a side to cure the ionizing-radiation-curable resin. As a result, the second optical layer 5 having an irregular surface is formed. Next, the wavelength-selective reflective film 3 is formed on the irregular surface of the second optical layer 5 by, for example, a sputtering method or the like. As a result, the reflective-film-equipped optical layer 9 is prepared. As for a formation method of the wavelength-selective reflective film 3, at least one of a physical vapor deposition method and a chemical vapor deposition method can be used and use of a sputtering method is preferred. Next, the reflective-film-equipped optical layer 9 is taken up to the optical-layer supply roller 52.

Next, the directional reflector 1 is produced using the production apparatus illustrated in Fig. 23 as follows.

First, the substrate 4a is sent from the substrate supply roller 51 and the substrate 4a sent is passed under the application unit 61 via the guide roller 56. Next, an ionizing-radiation-curable resin is applied with the application unit 61 onto the substrate 4a being passed under the application unit 61. Next, the substrate 4a to which the ionizing-radiation-curable resin has been applied is conveyed to the lamination rollers. On the other hand, the reflective-film-equipped optical layer 9 is sent from the optical-layer supply roller 52 and is conveyed to the lamination rollers 54 and 55 via the guide roller 57.

Next, the substrate 4a and the reflective-film-equipped optical layer 9 that have been conveyed are nipped with the lamination rollers 54 and 55 such that no entry of bubbles between the substrate 4a and the reflective-film-equipped optical layer 9 is caused. Thus, the reflective-film-equipped optical layer 9 is laminated to the substrate 4a. Next, while the substrate 4a to which the reflective-film-equipped optical layer 9 has been laminated is conveyed along the circumferential surface of the lamination roller 55, ionizing radiation is radiated with the irradiation unit 62 from the substrate 4a side to the ionizing-radiation-curable resin to cure the ionizing-radiation-curable resin. As a result, the substrate 4a and the reflective-film-equipped optical layer 9 are bonded together with ionizing-radiation-curable resin therebetween, so that the intended directional reflector 1 is produced. Next, the strip of the directional reflector 1 that has been produced is conveyed to the take-up roller 53 via the rollers 58, 59, and 60 and the directional reflector 1 is taken up by the take-up roller 53.

<9. Ninth Embodiment>

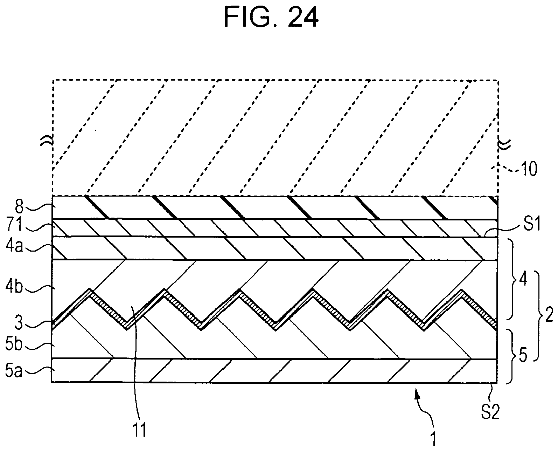

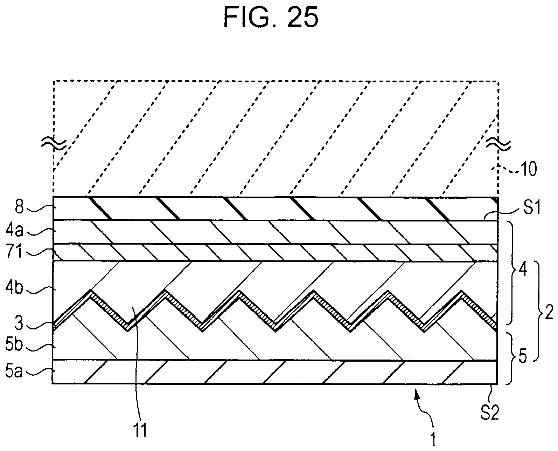

Fig. 24 is a sectional view illustrating a first configuration example of a directional reflector according to the ninth embodiment of the present invention. Fig. 25 is a sectional view illustrating a second configuration example of the directional reflector according to the ninth embodiment of the present invention. The ninth embodiment differs from the eighth embodiment in that a barrier layer 71 is further provided on the incident surface S1 or the exit surface S2 that is bonded to an adherend such as the window article 10 or between such a surface and the wavelength-selective reflective film 3. In Fig. 24, illustrated is an example in which the directional reflector 1 further includes the barrier layer 71 on the incident surface S1 bonded to an adherend such as the window article 10. In Fig. 25, illustrated is an example in which the directional reflector 1 further includes the barrier layer 71 between the first substrate 4a, which is a side to be bonded to an adherend such as the window article 10, and the resin layer 4b.

As for a material of the barrier layer 71, for example, an inorganic oxide containing at least one of alumina ($Al_2O_3$), silica ($SiO_x$), and zirconia; a resin material containing at least one of polyvinylidene chloride (PVDC), a polyvinyl fluoride resin, and a partial hydrolysate of ethylene-vinyl acetate copolymer (EVOH); or the like can be used. Alternatively, as for a material of the barrier layer 71, for example, a dielectric material containing at least one of SiN, $ZnS-SiO_2$, AlN, $Al_2O_3$, a composite oxide composed of $SiO_2$-$Cr_2O_2$-$ZrO_2$ (SCZ), a composite oxide composed of $SiO_2$-$In_2O_3$-$ZrO_2$ (SIZ), $TiO_2$ and $Nb_2O_5$ can also be used.

As described above, when the directional reflector 1 further includes the barrier layer 71 on the incident surface S1 or the exit surface S2, the first optical layer 4 or the second optical layer 5 on which the barrier layer 71 is formed preferably satisfies the following relationship. That is, the first substrate 4a or the second substrate 5a on which the barrier layer 71 is formed is preferably made to have a lower water vapor permeability than the first resin layer 4b or the second resin layer 5b. This is because, as a result, diffusion of moisture through the incident surface S1 or the exit surface S2 of the directional reflector 1 into the wavelength-selective reflective film 3 can be further reduced.

In the ninth embodiment, since the directional reflector 1 further includes the barrier layer 71 on the incident surface S1 or the exit surface S2, diffusion of moisture through the incident surface S1 or the exit surface S2 into the wavelength-selective reflective film 3 can be reduced and degradation of metal or the like contained in the wavelength-selective reflective film 3 can be suppressed. Therefore, the durability of the directional reflector 1 can be enhanced.

<10. Tenth Embodiment>

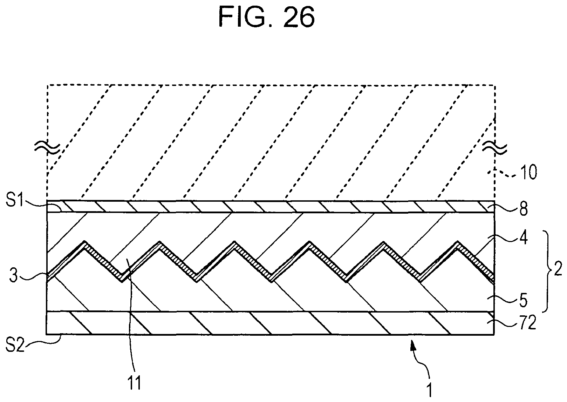

Fig. 26 is a sectional view illustrating a configuration example of a directional reflector according to the tenth embodiment of the present invention. In the tenth embodiment, the same portions as those in the eighth embodiment are denoted by the same reference numerals, and a description thereof will be omitted. The tenth embodiment differs from the eighth embodiment in that the directional reflector 1 further includes a hard coat layer 72 formed on at least one of the incident surface S1 and the exit surface S2. Note that Fig. 26 illustrates an example in which the hard coat layer 72 is formed on the exit surface S2 of the directional reflector 1.

In view of resistance to scratching, the hard coat layer 72 preferably has a pencil hardness of 2H or more, more preferably 3H or more. The hard coat layer 72 is obtained by applying a resin composition onto at least one of the incident surface S1 and the exit surface S2 of the directional reflector 1 and curing the composition. As for the resin composition, for example, there are those disclosed in Japanese Examined Patent Application Publication Nos. 50-28092, 50-28446, and 51-24368, Japanese Unexamined Patent Application Publication No. 52-112698, Japanese Examined Patent Application Publication No. 57-2735, and Japanese Unexamined Patent Application Publication No. 2001-301095. Specifically, for example, there are organosilane-based thermosetting resins such as methyltriethoxysilane and phenyltriethoxysilane, melamine-based thermosetting resins such as etherified methylolmelamine, and polyfunctional acrylate-based ultraviolet-curable resins such as polyol acrylates, polyester acrylates, urethane acrylates, and epoxy acrylates.

In view of imparting antifouling properties to the hard coat layer 72, the resin composition preferably further contains an antifouling agent. As for the antifouling agent, preferably used is a silicone oligomer and/or a fluorine-containing oligomer having one or more (meth)acrylic groups, vinyl groups, or epoxy groups. The amount of the silicone oligomer and/or the fluorine oligomer blended is preferably 0.01 % or more and 5% or less by mass of the solid content.

When the amount is less than 0.01% by mass, the antifouling properties tend to be insufficient. On the other hand, when the amount exceeds 5% by mass, the hardness of the coating tends to decrease. As for the antifouling agent, for example, preferably used are RS-602 and RS-751-K manufactured by DIC Corporation; CN4000 manufactured by Sartomer USA, LLC; OPTOOL DAC-HP manufactured by Daikin Industries, Ltd.; X-22-164E manufactured by Shin-Etsu Chemical Co., Ltd.; FM-7725 manufactured by Chisso Corporation; EBECRYL 350 manufactured by Daicel-Cytec Company, Ltd.; and TEGORad 2700 manufactured by Degussa Corporation; and the like. The hard coat layer 72 to which antifouling properties have been imparted preferably has a pure contact angle of 70° or more, more preferably 90° or more. If necessary, the resin composition may further contain additives such as a photostabilizer, a flame retardant, and an antioxidant.

According to the tenth embodiment, since the hard coat layer 72 is formed on at least one of the incident surface S1 and the exit surface S2 of the directional reflector 1, resistance to scratching can be imparted to the directional reflector 1. For example, when the directional reflector 1 is bonded to the inside of a window, generation of scratches can be suppressed even when the surface of the directional reflector 1 is touched by a person or the surface of the directional reflector 1 is cleaned. In addition, similarly, generation of scratches can also be suppressed even when the directional reflector 1 is bonded to the outside of a window.

<11. Eleventh Embodiment>

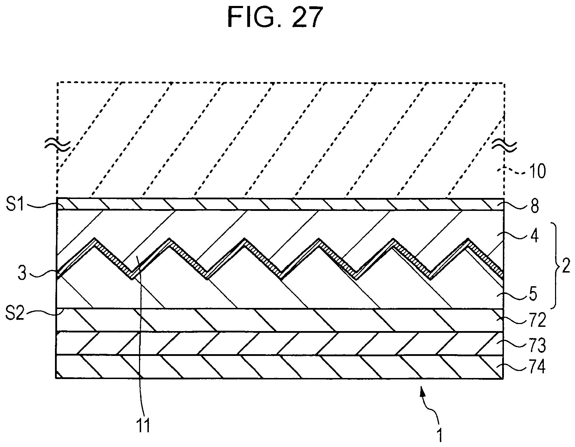

Fig. 27 is a sectional view illustrating a configuration example of a directional reflector according to the eleventh embodiment of the present invention. In the eleventh embodiment, the same portions as those in the tenth embodiment are denoted by the same reference numerals, and a description thereof will be omitted. The eleventh embodiment differs from the tenth embodiment in that an antifouling layer 74 is further provided on the hard coat layer 72. In addition, in view of enhancing the adhesion between the hard coat layer 72 and the antifouling layer 74, a coupling agent layer (primer layer) 73 is preferably further provided between the hard coat layer 72 and the antifouling layer 74.

In the eleventh embodiment, since the directional reflector 1 further includes the antifouling layer 74 on the hard coat layer 72, antifouling properties can be imparted to the directional reflector 1.

[EXAMPLES]

Hereinafter, the present invention will be specifically described with reference to examples. However, the present invention is not restricted only to these examples. Examples 2 to 22 do not fall under the scope of the present invention.

(EXAMPLE 1)

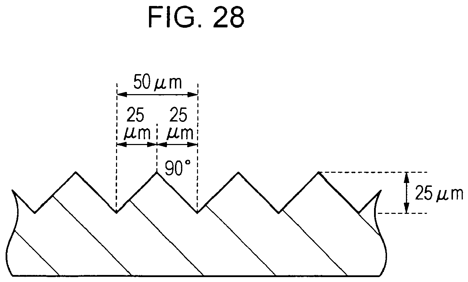

First, as illustrated in Fig. 28, a prism profile was imparted to a mold composed of Ni-P by a cutting process using a cutting tool. Next, a mixed resin of dipentaerythritol hexaacrylate and dipentaerythritol pentaacrylate (trade name: DPHA, manufactured by Nippon Kayaku Co., Ltd.) was applied to the mold composed of Ni-P and a PET film (A4300, manufactured by TOYOBO CO., LTD.) having a thickness of 75 $\mu$m was further disposed thereon. Next, the mixed resin was irradiated with UV light from the PET film side to cure the mixed resin. After that, the bonded body of the resin and the PET film was removed from the mold.

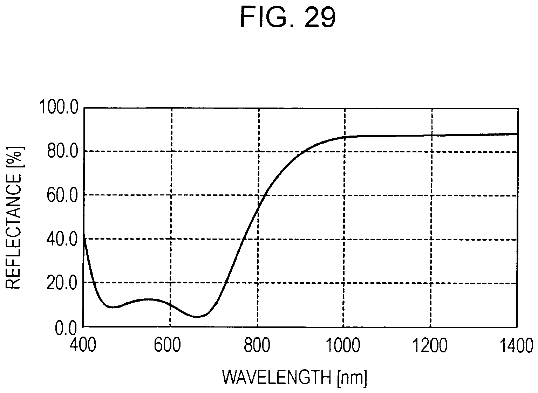

Next, the laminate of the resin and the PET was removed from the mold composed of Ni-P and a resin layer (second optical layer) in which a molded surface with a prism profile had been formed was obtained. Next, as shown in Table 1 below, an alternate multilayer film including diniobium pentoxide films and silver films was formed by a vacuum sputtering method on the molded surface on which the prism profile had been formed with the mold. Next, the spectral reflectance of the PET film having the alternate multilayer film was measured using DUV3700, manufactured by SHIMADZU CORPORATION. As a result, the spectral reflectance curve illustrated in Fig. 29 was obtained. Next, the above-described mixed resin was again applied to the alternate multilayer film. After bubbles were squeezed and removed, the PET film was disposed and UV light was radiated to cure the resin. Thus, a resin layer (first optical layer) was formed on the alternate multilayer film. As a result, an optical film serving as an intended directional reflector was obtained.

(EXAMPLE 2)

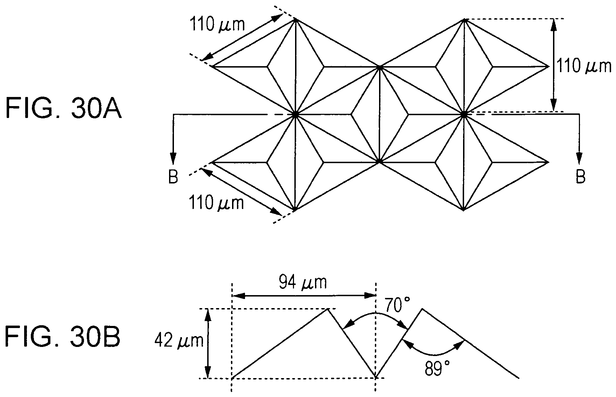

First, as illustrated in Figs. 30A and 30B, a triangular pyramid profile was imparted to a mold composed of Ni-P by a cutting process using a cutting tool. Next, a urethane acrylate (ARONIX, manufactured by TOAGOSEI CO., LTD.; refractive index after curing: 1.533) was applied to the mold composed of Ni-P and a PET film (A4300, manufactured by TOYOBO CO., LTD.) having a thickness of 75 $\mu$m was further disposed thereon. The resin was cured by being irradiated with UV light from the PET film side.

Next, after the laminate of the resin and the PET was removed from the mold composed of Ni-P, as shown in Table 1, an alternate multilayer film including zinc oxide films and silver alloy films was formed by a vacuum sputtering method on the molded surface on which the triangular pyramid profile had been formed with the mold. Note that, in the film formation of AgNdCu films, which were silver alloy films, an alloy target having the composition Ag/Nd/Cu = 99.0 at%/0.4 at%10.6 at% was used. After the film formation, the same resin as the underlying layer (ARONIX, manufactured by TOAGOSEI CO., LTD.; refractive index after curing: 1.533) was applied to the textured surface on which the alternate multilayer film had been formed. A PET film (A4300, manufactured by TOYOBO CO., LTD.) having a thickness of 75 μm was further disposed thereon. After bubbles were squeezed and removed, UV light was radiated to the resin through the PET film to cure the resin.

(EXAMPLE 3)

An optical film of Example 3 was obtained as in Example 2 except that the selective reflective film was made to have the film thickness configuration shown in Table 1.

(EXAMPLE 4)

An optical film of Example 4 was obtained as in Example 2 except that the selective reflective film was made to have the film thickness configuration shown in Table 1.

(EXAMPLE 5)

After a triangular pyramid profile was formed with a resin having a refractive index after curing of 1.533 as in Example 2, an alternate multilayer film including zinc oxide films and silver alloy films having the same configuration as in Example 2 was formed as a selective retroreflective film. After that, an UV-curable resin (ARONIX, manufactured by TOAGOSEI CO., LTD.; refractive index after curing: 1.540) was applied to the textured surface on which the alternate multilayer film had been formed. A PET film (A4300, manufactured by TOYOBO CO., LTD.) having a thickness of 75 μm was further disposed thereon. After bubbles were squeezed and removed, UV light was radiated to the resin through the PET film to cure the resin. Thus, an optical film of Example 5 having a refractive index difference between the upper layer resin and the lower layer resin of 0.007 was obtained.

(EXAMPLE 6)

An optical film of Example 6 was obtained as in Example 5 except that an UV-curable resin having a refractive index after curing of 1.542 was used for the upper layer and the refractive index difference between the upper layer resin and the lower layer resin was made 0.009.

(COMPARATIVE EXAMPLE 1)

An optical film of Comparative Example 1 was obtained by forming an alternate multilayer film having the film thickness configuration shown in Table 1 on a PET film having a flat surface.

(COMPARATIVE EXAMPLE 2)

An optical film of Comparative Example 2 was obtained by forming an alternate multilayer film on a PET film having a flat surface under the same film-formation conditions as in Example 2.

(COMPARATIVE EXAMPLE 3)

An optical film of Comparative Example 3 was obtained by forming an alternate multilayer film on a PET film having a flat surface under the same film-formation conditions as in Example 3.

(COMPARATIVE EXAMPLE 4)

An optical film of Comparative Example 4 was obtained by forming an alternate multilayer film on a PET film having a flat surface under the same film-formation conditions as in Example 4.

(COMPARATIVE EXAMPLE 5)

An optical film of Comparative Example 5 was obtained by forming an alternate-multilayer-film-equipped PET film as in Example 2 until the step of forming the alternate multilayer film and subsequently leaving the alternate multilayer film in the state of being exposed without embedding the alternate multilayer film with a resin.

(COMPARATIVE EXAMPLE 6)

After an alternate-multilayer-film-equipped PET film was obtained as in Example 2 until the step of forming the alternate multilayer film, the same resin as the underlying layer (ARONIX, manufactured by TOAGOSEI CO., LTD.; refractive index after curing: 1.533) was applied to the textured surface on which the alternate multilayer film had been formed. Next, in the state in which the applied resin was not covered with a PET film, UV light was radiated to cure the resin under purging with $N_2$ to avoid curing inhibition due to oxygen. As a result, an optical film of Comparative Example 6 was obtained.

(COMPARATIVE EXAMPLE 7)

An optical film of Comparative Example 7 was obtained as in Example 5 except that an UV-curable resin having a refractive index after curing of 1.546 was used for the upper layer and the refractive index difference between the upper layer resin and the lower layer resin was made 0.013.

(COMPARATIVE EXAMPLE 8)

An optical film of Comparative Example 8 was obtained as in Example 5 except that an UV-curable resin having a refractive index after curing of 1.558 was used for the upper layer and the refractive index difference between the upper layer resin and the lower layer resin was made 0.025.

(Evaluation of Directional Reflectance)

The optical films of Example 1 and Comparative Example 1 were evaluated for directional reflectance as follows.

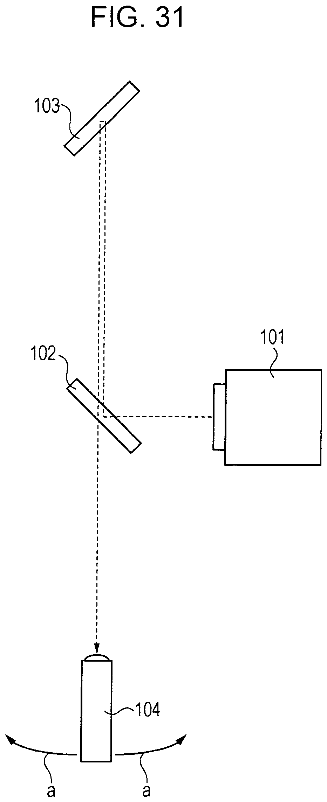

Fig. 31 illustrates the configuration of an apparatus for measuring the retroreflectance of an optical film. Linear light emitted from a halogen-lamp light source 101 and collimated by a lens is incident on a half mirror 102 disposed at an angle of 45° with respect to the direction in which the light travels. A half of the incident light is reflected by the half mirror 102 so that its traveling direction is 90° rotated, whereas the other half of the incident light passes through the half mirror 102. Next, the reflected light is retroreflected by a sample 103 and is incident again on the half mirror 102. A half of the incident light passes through the half mirror 102 and is incident on a detector 104. The detector 104 measures the intensity of this incident light as reflection intensity.
The measuring apparatus having the above-described configuration was used to determine the retroreflectances at wavelengths of 900 nm and 1,100 nm by the following method. First, a mirror was placed in a sample holder of the measuring apparatus at an incident angle θ = 0°, and the light intensities at the individual wavelengths were measured using the detector 104. Next, the optical films were placed in the sample holder of the measuring apparatus, and the light intensities at incident angles θ = 0°, 20°, 40°, 60°, and 80° were measured. After that, the retroreflectances of the optical films were determined with respect to the light intensity of the mirror as a retroreflectance of 90%. The results are shown in Table 2 (in this measurement, ϕ = 0°).

(Evaluation of Directional Reflection Direction)

The optical films of Examples 1 to 6 and Comparative Examples 5 to 8 were evaluated for directional reflection direction using the above-described measuring apparatus illustrated in Fig. 31 as follows. The detector 104 was rotated about the sample 103 serving as the central axis as indicated by the arrows a to determine the direction in which the reflection intensity was maximized. The results are shown in Table 3.

(Evaluation of Normal Transmittance)

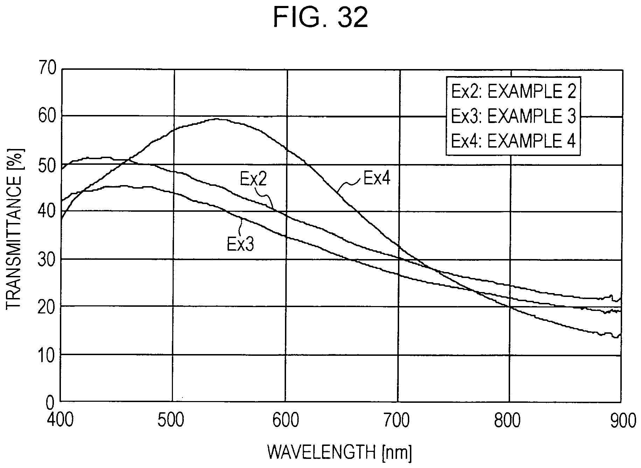

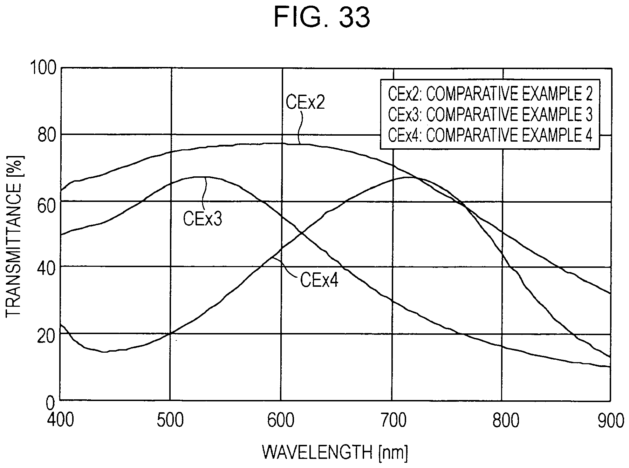

The optical films of Examples 2 to 4 and Comparative Examples 2 to 4 were evaluated for normal transmittance as follows.
The normal transmittance in the visible and near infrared regions was measured using DUV3700, manufactured by SHIMADZU CORPORATION. The spectral transmittance curves are illustrated in Figs. 32 and 33.

(Evaluation of Chromaticity)

The optical films of Examples 2 to 4 and Comparative Examples 2 to 4 were evaluated for chromaticity as follows.

The optical films of Examples and Comparative Examples were placed on a black plate (ACRYLITE L502, manufactured by MITSUBISHI RAYON CO., LTD.) to reduce the influence of the background color and were subjected to measurement using SP62 (integrating sphere spectrophotometer manufactured by X-Rite, Incorporated; d/8° optical system, D64 light source, 2° field of view, SPEX mode). The results are shown in Table 4. Note that the chromaticity of the black plate measured without a sample placed thereon were x = 0.325 and y = 0.346.

(Evaluation of Transmitted-Image Clarity)

The optical films of Examples 1 to 6 and Comparative Examples 5 to 8 were evaluated for transmitted-image clarity as follows. The transmitted-image clarity was evaluated using optical combs with comb widths of 2.0 mm, 1.0 mm, 0.5 mm, and 0.125 mm in accordance with JIS-K7105. The measuring instrument used for the evaluation was an image clarity meter (model: ICM-1T) manufactured by Suga Test Instruments Co., Ltd. Next, the sum of the transmitted-image clarity measured using the optical combs with comb widths of 2.0 mm, 1.0 mm, 0.5 mm, and 0.125 mm was determined. The results are shown in Table 3.

(Evaluation of Haze)

The optical films of Examples 1 to 6 and Comparative Examples 5 to 8 were evaluated for haze as follows.

The haze was measured using a haze meter HM-150 (manufactured by MURAKAMI COLOR RESEARCH LABORATORY) under the measurement conditions according to JIS K7136. The results are shown in Table 3. Note that the measurement was carried out using a D65 light source as the light source without applying a filter.

(Evaluation of Visibility)

The optical films of Examples 1 to 6 and Comparative Examples 5 to 8 were evaluated for visibility as follows.

The prepared films were bonded to glass with a thickness of 3 mm using an optically transparent adhesive agent. Next, this glass was held at a distance of about 50 cm from the eyes, the interior of a neighboring building at a distance of about 10 m was observed through the glass, and the evaluation was carried out on the basis of criteria below. The results are shown in Table 3.

Excellent: No multiple images or the like due to diffraction are seen, and the view is similar to that through a normal window

Good: No problem occurs for normal use, but multiple images due to diffraction are slightly seen in the presence of a specular reflector or the like

Fair: The shapes of objects are roughly recognized, but the multiple images due to diffraction are noticeable

Poor: Nothing is recognized because of fogging due to the influence of diffraction and the like

(Measurement of Surface Roughness)

The optical film of Comparative Example 6 was evaluated for surface roughness as follows.

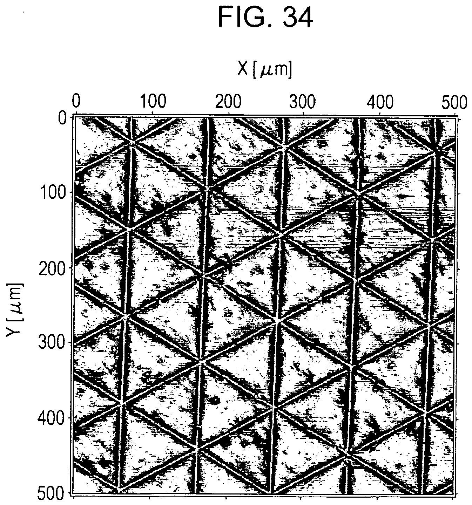

The surface roughness was measured using a contact profilometer ET-4000 (manufactured by Kosaka Laboratory Ltd.). The results are illustrated in Fig. 34.

Table 1 shows the configurations of the optical films of Examples 1 to 6 and Comparative Examples 1 to 8.

(Table 1)

| | Shape of structures | Configuration of alternate multilayer film | | | | | | | | | | Presence or absence of resin layer on alternate multilayer film | Presence or absence of PET film on incident surface |
|---|---|---|---|---|---|---|---|---|---|---|---|---|---|
| | | First layer | | Second layer | | Third layer | | Fourth layer | | Fifth layer | | | |
| | | Material | Film thickness [nm] | Material | Film thickness [nm] | Material | Film thickness [nm] | Material | Film thickness [nm] | Material | Film thickness [nm] | | |
| Example 1 | Prism shape | $Nb_2O_5$ | 47 | Ag | 18 | $Nb_2O_5$ | 99 | Ag | 18 | $Nb_2O_5$ | 47 | Present | Present |
| Example 2 | Triangular pyramid shape | ZnO | 50 | AgNdCu | 9 | ZnO | 100 | AgNdCu | 9 | ZnO | 50 | Present | Present |
| Example 3 | Triangular pyramid shape | | 30 | | 12 | | 70 | | 12 | | 31 | Present | Present |
| Example 4 | Triangular pyramid shape | | 77 | | 19 | | 180 | | 19 | | 81 | Present | Present |
| Example 5 | Triangular pyramid shape | | 50 | | 9 | | 100 | | 9 | | 50 | Present | Present |
| Example 6 | Triangular pyramid shape | | 50 | | 9 | | 100 | | 9 | | 50 | Present | Present |
| Comparative Example 1 | None | $Nb_2O_5$ | 33 | Ag | 13 | $Nb_2O_5$ | 70 | Ag | 13 | $Nb_2O_5$ | 33 | Present | Present |

| | Shape of structures | Configuration of alternate multilayer film | | | | | | | | | | Presence or absence of resin layer on alternate multilayer film | Presence or absence of PET film on incident surface |
|---|---|---|---|---|---|---|---|---|---|---|---|---|---|
| | | First layer | | Second layer | | Third layer | | Fourth layer | | Fifth layer | | | |
| | | Material | Film thickness [nm] | Material | Film thickness [nm] | Material | Film thickness [nm] | Material | Film thickness [nm] | Material | Film thickness [nm] | | |
| Comparative Example 2 | None | ZnO | 50 | AgNdCu | 9 | ZnO | 100 | AgNdCu | 9 | ZnO | 50 | Present | Present |
| Com parative Example 3 | None | | 30 | | 12 | | 70 | | 12 | | 31 | Present | Present |
| Comparative Example 4 | None | | 77 | | 19 | | 180 | | 19 | | 81 | Present | Present |
| Comparative Example 5 | Triangular pyramid shape | | 50 | | 9 | | 100 | | 9 | | 50 | Absent | Absent |
| Comparative Example 6 | Triangular pyramid shape | | 50 | | 9 | | 100 | | 9 | | 50 | Present | Absent |
| Comparative Example 7 | Triangular pyramid shape | | 50 | | 9 | | 100 | | 9 | | 50 | Present | Present |
| Comparative Example 8 | Triangular pyramid shape | | 50 | | 9 | | 100 | | 9 | | 50 | Present | Present |

EP 2 357 497 B1

Table 2 shows the evaluation results of the directional reflectance of Example 1 and Comparative Example 1.

(Table 2)

|  |  | Incident angle | | | | |
|---|---|---|---|---|---|---|
|  |  | 0° | 20° | 40° | 60° | 80° |
| Directional reflectance at wavelength of 900 nm [%] | Example 1 | 65 | 52 | 34 | 21 | 8 |
|  | Comparative Example 1 | 80 | 0 | 0 | 0 | 0 |
| Directional reflectance at wavelength of 1,100 nm [%] | Example 1 | 82 | 66 | 43 | 26 | 11 |
|  | Comparative Example 1 | 89 | 0 | 0 | 0 | 0 |

Table 3 shows the evaluation results of the directional reflection direction, transmitted-image clarity, haze, and visibility when light was made incident on the optical films of Examples 1 to 6 and Comparative Examples 5 to 8 at an incident angle $(\theta, \phi) = (10°, 45°)$.

(Table 3)

|  | Directional reflection direction | | Transmitted-image clarity | | | | | Haze | Visibility |
|---|---|---|---|---|---|---|---|---|---|
|  | $\phi$ | $\theta$ | 0.125mm | 0.5mm | 1.0mm | 2.0mm | Total | [%] |  |
| Example 1 | -10° | 45° | 69.7 | 73.5 | 72.7 | 88.0 | 303.9 | 3.6 | Good |
| Example 2 | 10° | 45° | 60.8 | 81.5 | 88.8 | 95.5 | 326.6 | 2.7 | Good |
| Example 3 | 10° | 45° | 78.7 | 89.0 | 93.3 | 97.5 | 358.5 | 5.8 | Excellent |
| Example 4 | 10° | 45° | 54.9 | 78.6 | 88.0 | 96.2 | 317.7 | 3.8 | Good |
| Example 5 | 10° | 45° | 60.4 | 61.0 | 65.8 | 85.2 | 272.4 | 2.8 | Good |
| Example 6 | 10° | 45° | 54.3 | 50.2 | 56.4 | 77.3 | 238.2 | 3.1 | Good |
| Comparative Example 5 | 10° | 45° | 0.0 | 0.0 | 0.0 | 0.0 | 0.0 | 99.8 | Poor |
| Comparative Example 6 | 10° | 45° | 3.2 | 15.2 | 4.5 | 36.6 | 59.5 | 4.5 | Poor |
| Comparative Example 7 | 10° | 45° | 28.8 | 34.0 | 38.1 | 41.9 | 142.8 | 4.1 | Fair |
| Comparative Example 8 | 10° | 45° | 12.2 | 5.6 | 25.8 | 37.6 | 81.2 | 8.7 | Poor |

Table 4 shows the evaluation results of the chromaticity of Examples 2 to 4 and Comparative Examples 2 to 4.

(Table 4)

|  | Chromaticity |
|---|---|
| Example 2 | x=0.371, y=0.357 |
| Example 3 | x=0.303, y=0.301 |
| Example 4 | x=0.318, y=0.322 |
| Comparative Example 2 | x=0.517, y=0.433 |
| Comparative Example 3 | x=0.261, y=0.325 |
| Comparative Example 4 | x=0.450, y=0.349 |

The following can be seen from Table 2 and Fig. 29.

In the optical film of Example 1, near infrared rays can be directionally reflected while a visible-light transmittance of 80% or more is maintained. In contrast, as to the optical film of Comparative Example 1, the visible-light transmittance can be made comparable to that of Example 1; however, near infrared rays cannot be retroreflected at an incident angle other than 0°.

The following can be seen from Table 3 and Fig. 34.

In the optical film of Comparative Example 5, a directional reflection property to near infrared rays with a wavelength of about 1,200 nm is obtained and visible light is transmitted. However, since the resin layer was formed on the alternate multilayer film and a clearing treatment was not performed, objects beyond the optical film cannot be viewed through the optical film. In the optical film of Comparative Example 6, as illustrated in Fig. 34, the surface cannot be completely planarized upon a clearing treatment. For this reason, in the optical film of Comparative Example 6, as in Comparative Example 5, objects beyond the optical film cannot be viewed through the optical film. While the base pitch of the triangular pyramids is about 110 $\mu$m, a maximum height Rz is about 1.3 $\mu$m and an arithmetic average roughness Ra is about 0.14 $\mu$m. Thus, to make a transmitted image clear, it is understood that more flat surface is required.

In addition, for the optical films of Comparative Examples 7 and 8, the refractive index differences are respectively 0.013 and 0.025. Thus, the transmitted-image clarity measured using the optical comb with a width of 0.5 mm is less than 50. In addition, the sum of the values of image clarity measured using the optical combs of 0.125 mm, 0.5 mm, 1.0 mm, and 2.0 mm is less than 230. Accordingly, in the optical films of Comparative Examples 7 and 8, scattered light increases and the selective transmission property to visible light is degraded. That is, the transparency of the optical films is degraded.

The following can be seen from Table 3.

For the optical films of Examples 1 to 6, the image clarity measured using the optical comb with a width of 0.5 mm is 50 or more, and the sum of the values of image clarity measured using the individual optical combs was 230 or more. In addition, the evaluation results of the visibility are "Good" and "Excellent".

In contrast, for the optical films of Comparative Examples 5 to 8, the image clarity measured using the optical comb with a width of 0.5 mm is less than 50, and the sum of the values of image clarity measured using the individual optical combs is less than 230. In addition, the evaluation results of the visibility are "Poor".

Thus, in view of visibility, the transmitted-image clarity measured using an optical comb with a width of 0.5 mm is preferably made 50 or more. In addition, in view of visibility, the sum of the values of image clarity measured using optical combs of 0.125 mm, 0.5 mm, 1.0 mm, and 2.0 mm is preferably made 230 or more.

The following can be seen from Tables 3 and 4 and Figs. 32 and 33.

The optical film of Comparative Example 2 has high reflectance in the visible-light region and has a slightly golden color. The optical film of Comparative Example 3 has high reflectance in the visible-light region and has a slightly blue-green color. The optical film of Comparative Example 4 has high reflectance in the visible-light region and has a reddish color. In addition, the optical films of Comparative Examples 3 and 4 appear to change color in accordance with viewing angles. That is, the colors of the optical films of Comparative Examples 2 to 4 are unsuitable for applications to building windows and the like. In contrast, the optical films of Examples 2 to 4, which respectively have the same film configurations as the Comparative Examples 2 to 4, have colors not noticeable to see. Although Example 2 is slightly green and Examples 3 and 4 are slightly blue, their colors do not substantially appear to change color even when the viewing angle is changed. Such characteristics are preferred when an optical film is applied to window glass or the like in which design properties are necessary.

(EXAMPLE 7)

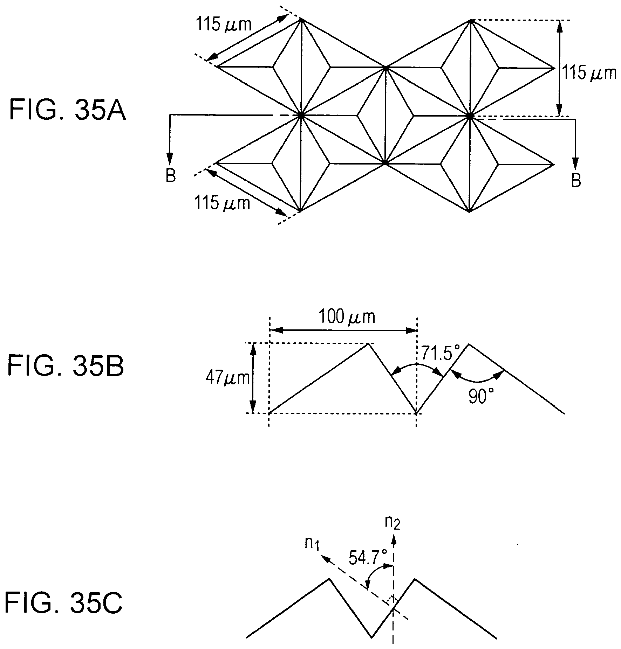

First, a Ni-P mold roller having a fine triangular pyramid profile illustrated in Figs. 35A to 35C was prepared by a cutting process using a cutting tool. Next, a urethane acrylate (ARONIX, manufactured by TOAGOSEI CO., LTD.; refractive index after curing: 1.533) was applied onto a PET film (A4300, manufactured by TOYOBO CO., LTD.) having a thickness of 75 $\mu$m. The urethane acrylate was cured by being irradiated with UV light from the PET film side in the state of being in contact with the mold. Next, the laminate of the resin layer formed by curing the urethane acrylate and the PET film was removed from the mold composed of Ni-P. As a result, a resin layer to which a triangular pyramid profile had been imparted (hereinafter, referred to as a textured resin layer) was formed on the PET film. Next, a wavelength-selective reflective film having the film configuration shown in Table 5 was formed by a sputtering method on the molded surface on which the triangular pyramid profile was formed with the mold. Note that, for forming the AgPdCu films, an alloy target having the composition Ag/Pd/Cu = 99.0 at%/0.4 at%/0.6 at% was used.

Next, the production apparatus illustrated in Fig. 23 was used to embed the film-formed surface of the textured film with a resin as follows. Specifically, a resin composition having the formulation below was applied onto a flat PET film (A4300, manufactured by TOYOBO CO., LTD.) having a thickness of 75 $\mu$m, and the textured PET film on the surface of which the wavelength-selective reflective film had been formed was laminated on the flat PET film so that no entry of bubbles between the films was caused. After that, the resin composition was cured by irradiation with UV light from the flat PET film side. As a result, the resin composition between the flat PET film and the wavelength-selective reflective film was cured to form a resin layer (hereinafter, referred to as an embedded resin layer). Thus, the intended optical film of Example 7 was obtained.

<Formulation of Resin Composition>
Urethane acrylate                                99 parts by mass
(ARONIX, manufactured by TOAGOSEI CO., LTD.; after curing: 1.533) refractive index
2-Acryloyloxyethyl acid phosphate        1 part by mass
(LIGHT-ACRYLATE P-1A, manufactured by Kyoeisha Chemical Co., Ltd.)

(EXAMPLE 8)

An optical film of Example 8 was obtained as in Example 7 except that the wavelength-selective reflective film was made to have the film configuration shown in Table 5.

(EXAMPLE 9)

An optical film of Example 9 was obtained as in Example 7 except that the wavelength-selective reflective film was made to have the film configuration shown in Table 5. Note that, for the film formation of the AgBi films, an alloy target having the composition Ag/Bi = 99.0 at%/1.0 at% was used; and, for the film formation of the $Nb_2O_5$ films, a $Nb_2O_5$ ceramic target was used.

(EXAMPLE 10)

An optical film of Example 10 was obtained as in Example 9 except that the wavelength-selective reflective film was made to have the film configuration shown in Table 5.

(EXAMPLE 11)

An optical film of Example 11 was obtained as in Example 9 except that the wavelength-selective reflective film was made to have the film configuration shown in Table 5.

(EXAMPLE 12)

An optical film of Example 12 was obtained as in Example 9 except that the wavelength-selective reflective film was made to have the film configuration shown in Table 5.

(COMPARATIVE EXAMPLE 9)

An optical film of Comparative Example 9 was obtained as in Comparative Example 1 except that a wavelength-selective reflective film having the same configuration as in Example 7 was formed on a PET film having a flat surface instead of the textured PET film.

(COMPARATIVE EXAMPLE 10)

An optical film of Comparative Example 10 was obtained as in Comparative Example 1 except that a wavelength-selective reflective film having the same configuration as in Example 8 was formed on a PET film having a flat surface instead of the textured PET film.

(COMPARATIVE EXAMPLE 11)

An optical film of Comparative Example 11 was obtained as in Comparative Example 1 except that a wavelength-selective reflective film having the same configuration as in Example 9 was formed on a PET film having a flat surface instead of the textured PET film.

(COMPARATIVE EXAMPLE 12)

An optical film of Comparative Example 12 was obtained as in Comparative Example 1 except that a wavelength-selective reflective film having the same configuration as in Example 10 was formed on a PET film having a flat surface instead of the textured PET film.

(COMPARATIVE EXAMPLE 13)

An optical film of Comparative Example 13 was obtained as in Comparative Example 1 except that a wavelength-selective reflective film having the same configuration as in Example 12 was formed on a PET film having a flat surface instead of the textured PET film.

(Evaluation of Adhesion of Reflective Film)

The prepared films were bonded to glass having a thickness of 3 mm using an optically transparent adhesive agent. The edges of the films were peeled and the state was observed.
Excellent: Peeling is difficult and forcible peeling causes a bulk fracture in the substrate, the resin, or the like
Good: Peeling is relatively difficult, but forcible peeling causes peeling at the interface
Fair: Peeling at the interface is caused, but resistance is perceived upon the peeling
Poor: Peeling at the interface is caused without resistance

(Evaluation of Transmittance/Reflectance)

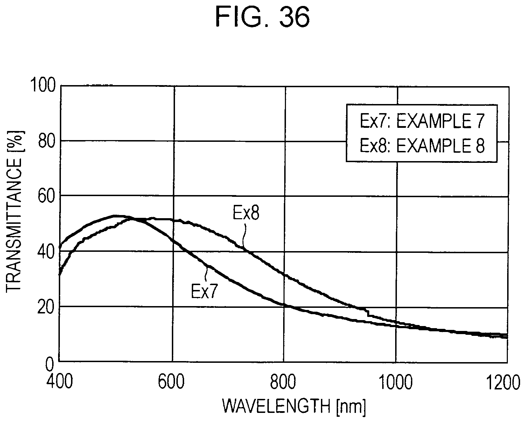

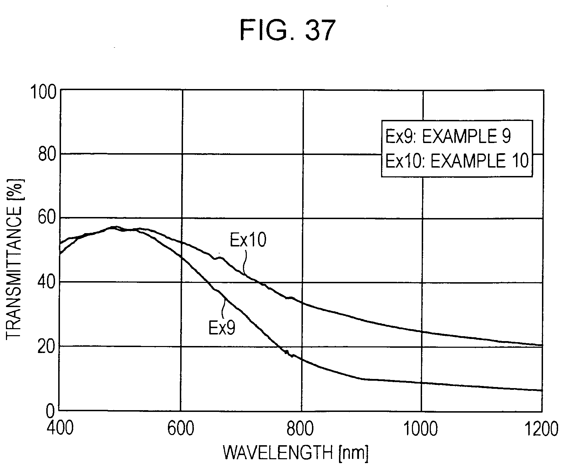

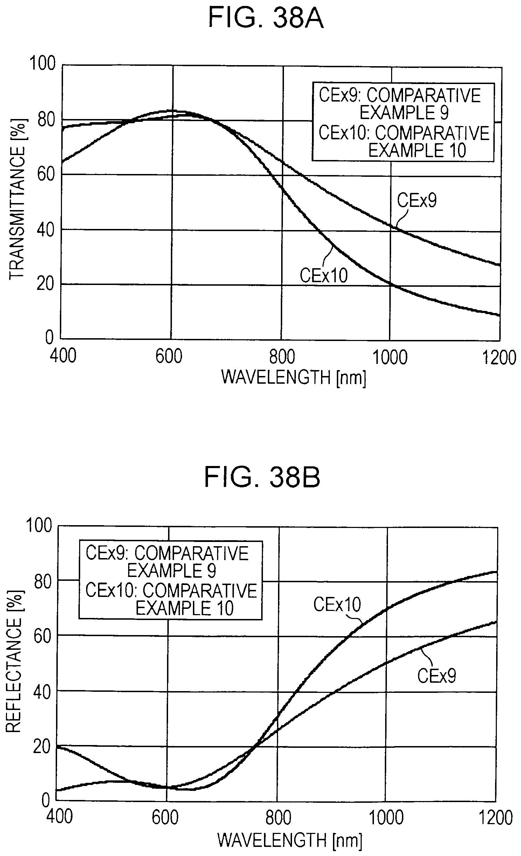

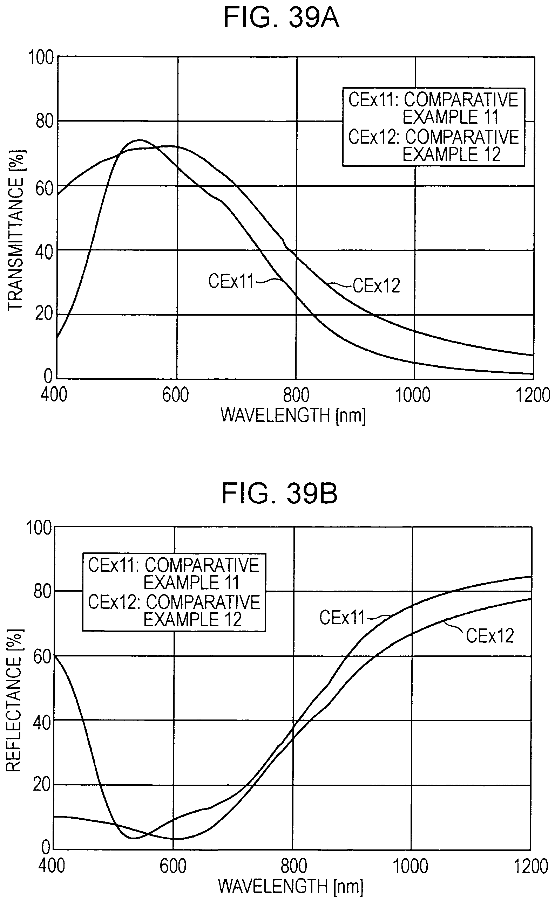

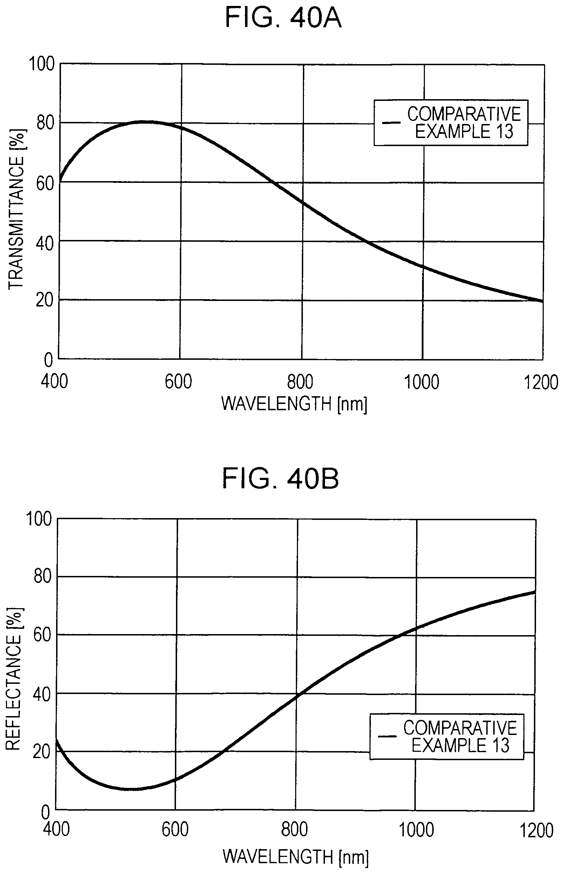

The transmittance and the reflectance were measured using DUV3700, manufactured by SHIMADZU CORPORATION. The transmittance was one at 0° with respect to the normal to the optical film. The reflectance was one at 8° with respect to the normal to the optical film. The results are illustrated in Figs. 36 to 40.

(Evaluation of Colors of Transmitted Light/Reflected Light)

Transmitted light and reflected light were visually evaluated for redness. The results are shown in Tables 8 and 9.
Table 5 shows the configurations and evaluation results of the optical films of Examples 7 to 12 and Comparative Examples 9 to 13.

(Table 5)

| | Film profile | Configuration of alternate multilayer film | | | | | | | | Adhesion |
| --- | --- | --- | --- | --- | --- | --- | --- | --- | --- | --- |
| | | First layer | Second layer | Third layer | Fourth layer | Fifth layer | Sixth layer | Seventh layer | Eighth layer | |
| Example 7 | Textured surface | ZnO 17nm | AgPdCu 7nm | ZnO 75nm | AgPdCu 7nm | ZnO 17nm | - | - | - | Excellent |
| Example 8 | Textured surface | ZnO 68nm | AgPdCu 13nm | ZnO 128nm | AgPdCu 13nm | ZnO 68nm | - | - | - | Excellent |
| Example 9 | Textured surface | $Nb_2O_5$ 38nm | AgBi 18nm | ZnO 7nm | $Nb_2O_5$ 63nm | AgBi 19nm | ZnO 7nm | $Nb_2O_5$ 33nm | ZnO 3nm | Excellent |
| Example 10 | Textured surface | $Nb_2O_5$ 22nm | AgBi 10nm | ZnO 6nm | $Nb_2O_5$ 37nm | AgBi 11nm | ZnO 6nm | $Nb_2O_5$ 19nm | ZnO 3nm | Excellent |
| Example 11 | Textured surface | $Nb_2O_5$ 38nm | AgBi 18nm | ZnO 7nm | $Nb_2O_5$ 63nm | AgBi 19nm | ZnO 7nm | $Nb_2O_5$ 35nm | - | Excellent |
| Example 12 | Textured surface | ZnO 76 | AgPdCu 22 | ZnO 76 | - | - | - | - | - | Excellent |
| Comparative Example 9 | Flat surface | ZnO 10nm | AgPdCu 5nm | ZnO 47nm | AgPdCu 5nm | ZnO 10nm | - | - | - | - |
| Comparative Example 10 | Flat surface | ZnO 40nm | AgPdCu 9nm | ZnO 80nm | AgPdCu 9nm | ZnO 40nm | - | - | - | - |
| Comparative Example 11 | Flat surface | $Nb_2O_5$ 38nm | AgBi 18nm | ZnO 7nm | $Nb_2O_5$ 63nm | AgBi 19nm | ZnO 7nm | $Nb_2O_5$ 33nm | ZnO 3nm | - |
| Comparative Example 12 | Flat surface | $Nb_2O_5$ 22nm | AgBi 10nm | ZnO 6nm | $Nb_2O_5$ 37nm | AgBi 11nm | ZnO 6nm | $Nb_2O_5$ 19nm | ZnO 3nm | - |
| Comparative Example 13 | Flat surface | ZnO 45 | AgPdCu 15 | ZnO 45 | - | - | - | - | - | - |

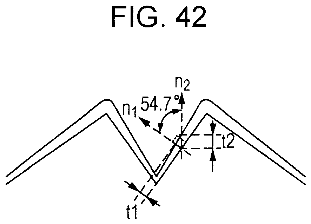

Note that, in Table 5, the average film thicknesses of the individual layers in Examples 7 to 12, where the wavelength-selective reflective film was formed on the textured surface, were measured as follows. That is, a sample was prepared by forming a wavelength-selective reflective film on a flat film under the same conditions as in the film formation of the wavelength-selective reflective film on the textured resin layer in Examples 7 to 12 and providing a section by cutting with a FIB. The thicknesses of the individual layers of the sample were measured with a TEM, and the average film thickness was determined from the measured values. Note that it has been confirmed that the average film thickness thus measured agrees with the average film thickness t2 in an n2 direction at the midpoint of a perpendicular of a triangle forming a triangular pyramid on the textured resin layer (refer to Fig. 42). Here, the perpendicular of a triangle refers to a perpendicular extending from a vertex of a triangle forming a pyramid surface of a triangular pyramid to the opposite side (a base of the triangular pyramid). Thus, the position on the triangular pyramid at which the average thicknesses agree with each other is specified. This is because, when the average film thickness of the wavelength-selective reflective film formed on a triangular pyramid on the textured resin layer is measured, as illustrated in Fig. 42, the average film thickness varies depending on positions on the triangle forming the triangular pyramid. Note that, in Fig. 42, the n1 direction and the n2 direction denote the following directions. n1 direction: a direction perpendicular to an inclined surface of a prism shape having been imparted to the PET film n2 direction: a direction perpendicular to the main surface of the PET film (the thickness direction of the PET film)

Table 6 shows the evaluation results of the optical films of Examples 7 to 10 and 12.

(Table 6)

|  | Transmission Redness | Reflection Redness |
|---|---|---|
| Example 7 | None | None |
| Example 8 | None | None |
| Example 9 | None | None |
| Example 10 | None | None |
| Example 12 | None | None |

Table 7 shows the evaluation results of the optical films of Comparative Examples 9 to 13.

(Table 7)

|  | Transmission Redness | Reflection Redness |
|---|---|---|
| Comparative Example 9 | None | Slight |
| Comparative Example 10 | None | None |
| Comparative Example 11 | None | Strong |
| Comparative Example 12 | None | Strong |
| Comparative Example 13 | None | Strong |

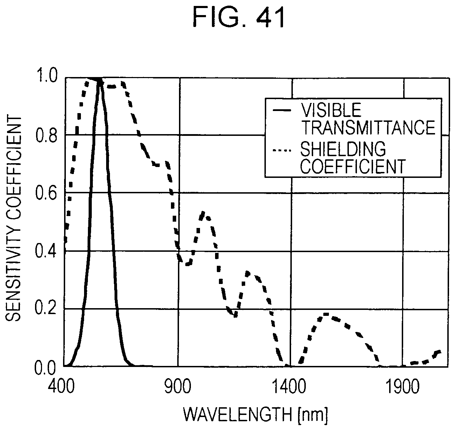

Fig. 41 is a graph illustrating sensitivity coefficients according to a test method of JIS R 3106.

To enhance the visible-light transmittance, it is necessary to have a high transmittance at a wavelength of about 500 nm, where the visible luminous coefficient is high, and it is desirable to transmit light of 400 to 750 nm. On the other hand, to enhance the shielding of heat, it is necessary to block light beams in a wavelength range where the sensitivity coefficient of shielding is high. In view of these, to enhance the visible transmittance and to enhance the shielding of heat, it is necessary to transmit visible light beams in the wavelength of from about 400 to 750 nm while near infrared rays in the wavelength of from about 750 to 1,300 nm are effectively blocked.

The textured resin layer formed before the formation of the wavelength-selective reflective film and the embedded resin layer formed after the formation of the wavelength-selective reflective film preferably have substantially the same refractive index. However, in the case where the same resin is used for both of the layers, when an additive is added to the embedded resin layer to enhance the adhesion between the wavelength-selective reflective film, which is an inorganic thin film, and the embedded resin layer, which is an organic resin layer, the textured resin layer is not easily removed from the Ni-P mold upon the profile transfer. When the wavelength-selective reflective film is formed by a sputtering method, since high-energy particles are deposited, the adhesion between the textured resin layer and the wavelength-selective reflective film rarely becomes a problem. Accordingly, it is preferable to reduce the amount of an additive added to the textured resin layer to the minimum amount necessary and to introduce an additive for improving the adhesion into the embedded resin layer. In this case, when the embedded resin layer and the textured resin layer have a large refractive index difference, fogging is caused and it becomes difficult to view the opposite side. However, in Examples 7 to 12, since the amount of an additive added was 1% by mass and the refractive index was not substantially varied, transmission clarity was considerably high. When it is necessary to add an additive in a large amount, the formulation of the resin composition for forming the textured resin layer is preferably adjusted so that it has substantially the same refractive index as the embedded resin layer.

When a comparison between Example 9 and Example 11 is performed, the presence or absence of a ZnO layer serving as the outermost layer of the wavelength-selective reflective film is a large difference. Although their spectra substantially agreed with each other, the adhesion to the embedded resin layer was higher in Example 9, in which the ZnO was present in the surface layer.

The following can be seen from the evaluation results in Figs. 36 to 40, Tables 6 and 7, and the like.

The optical films of Comparative Examples 9 and 11 to 13 had a reddish purple to purple reflection color that was noticeable when they were applied to window glass. The optical film of Comparative Example 10 substantially caused no noticeable red reflection, but had a low reflectance of 50% or less in the wavelength of 800 to 900 nm out of near infrared rays in the necessity of shielding heat of sunlight. Thus, there is difficulty in achieving a balance of redness and heat shielding performance.

In contrast, as to the optical films of Examples 7 to 10 and 12, since reflected light returns toward the light source, no reflection color was recognized. Only a blue-green-based color was recognized whether reflected sunlight or transmitted sunlight was viewed and the color was comfortable and gave cooling feeling in the application to windows. In addition, for example, the optical film of Example 9 had the same film configuration as in Comparative Example 11 and also had high reflection performance for infrared rays. Thus, when the film of the Example is applied, a balance of comfortable color appearance and infrared-ray shielding performance can be achieved.

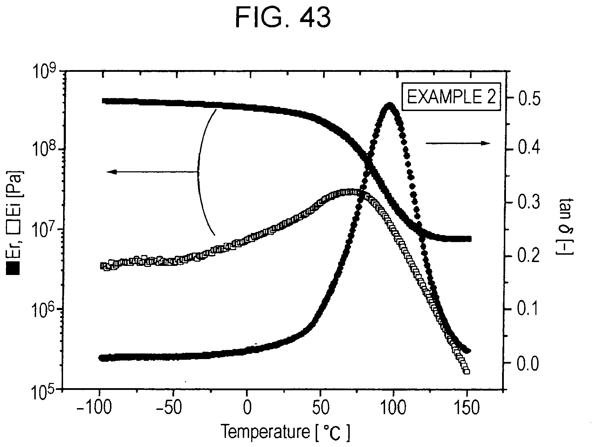

Fig. 43 illustrates the viscoelasticity behavior of the profile-transfer resin in Example 2. Note that the arrows in the figure indicate which ordinate axis the curves belong to. The peak value of $\tan\delta$, 95°C, is the value of the glass transition temperature. Thus, since the glass transition temperature falls within the range of 60°C or more and 150°C or less in Example 2, as described above, it is possible to suppress deformation of the shape of the resin due to heating or film formation during a production process and to suppress generation of cracks or peeling at the interface.

(Evaluation of Spectral Transmittance/Reflectance)

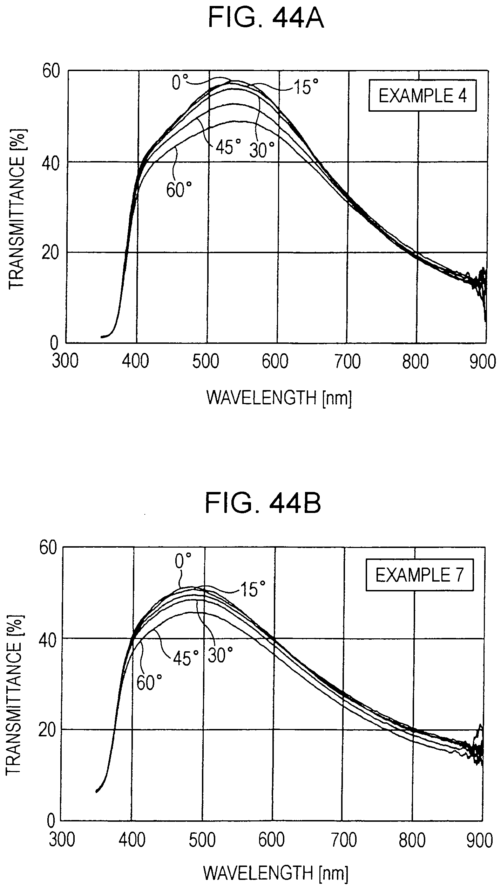

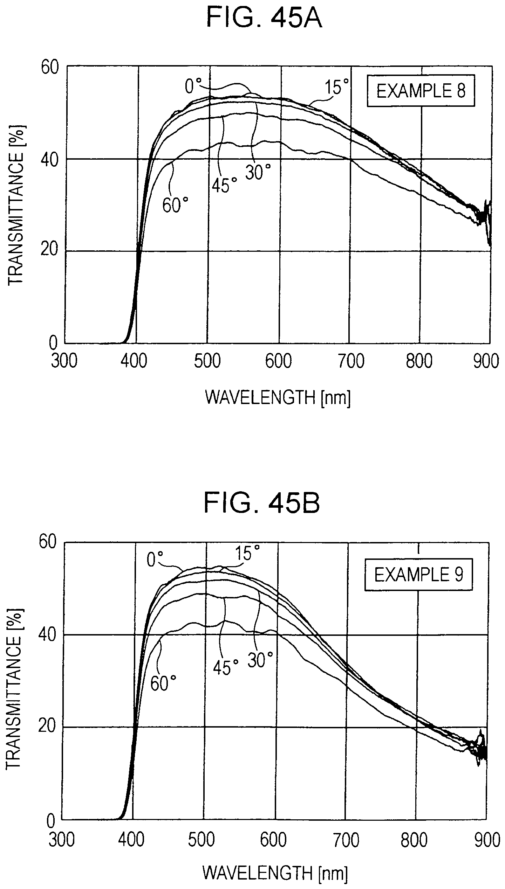

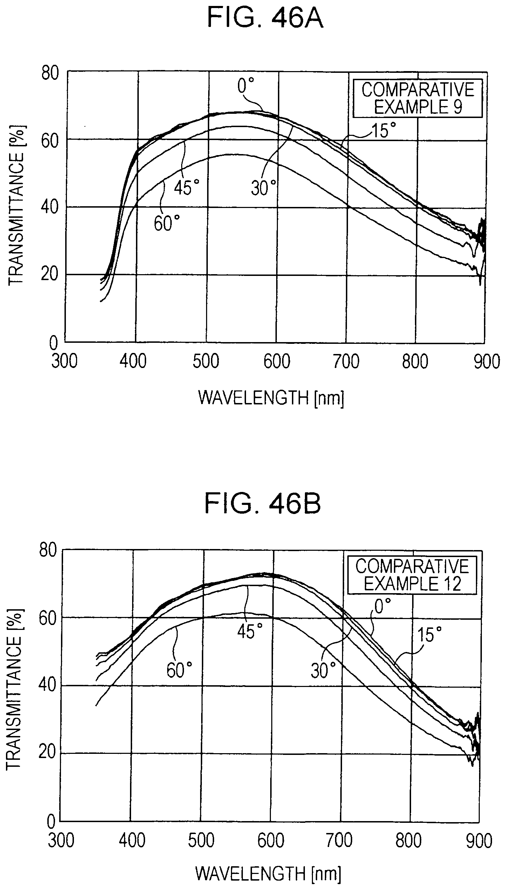

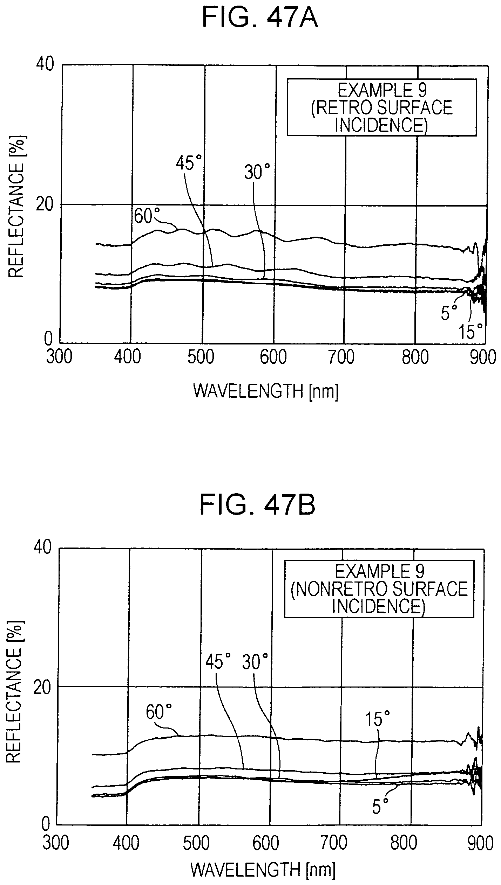

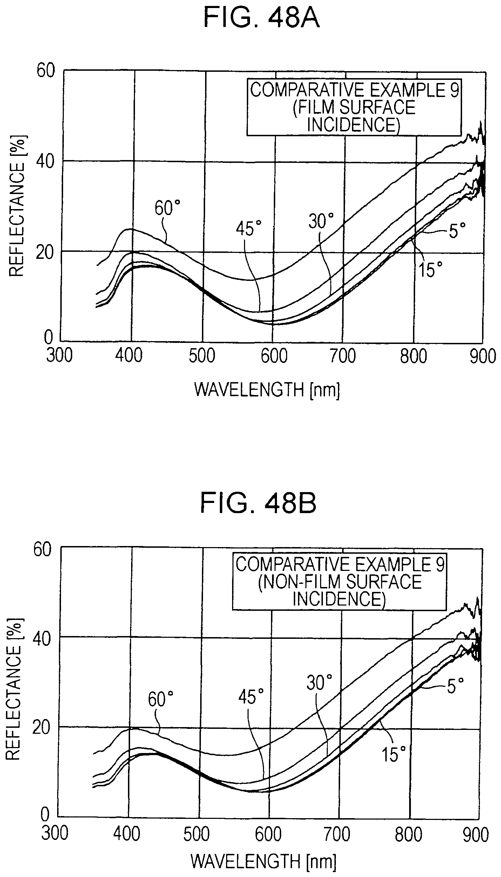

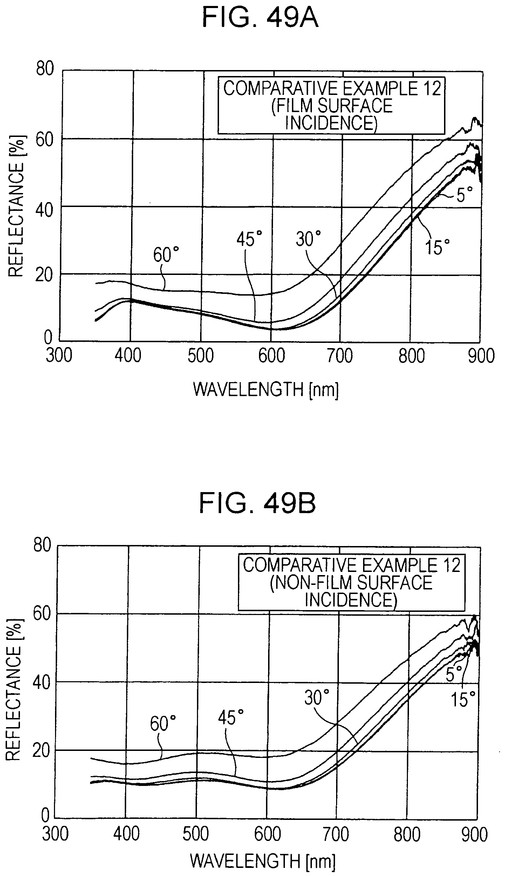

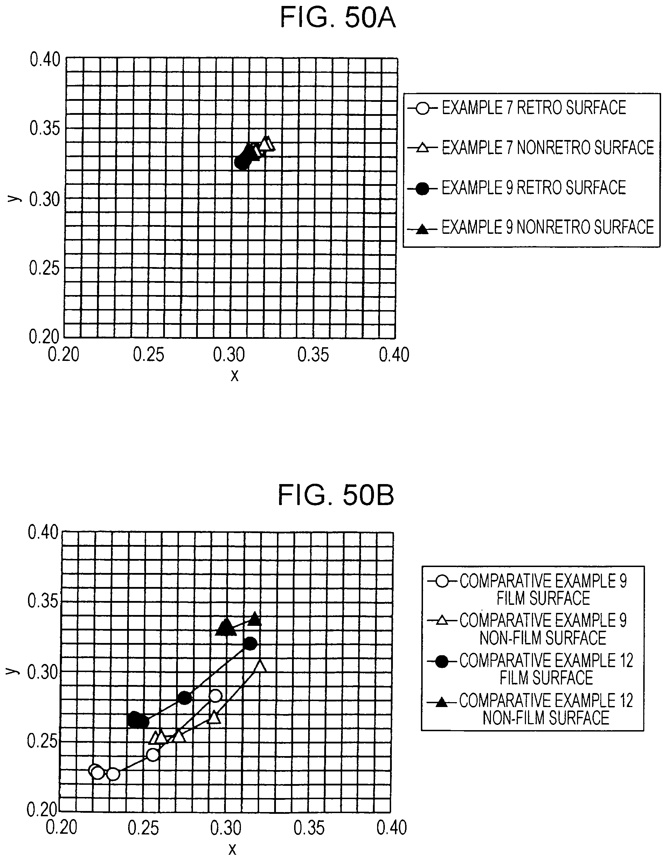

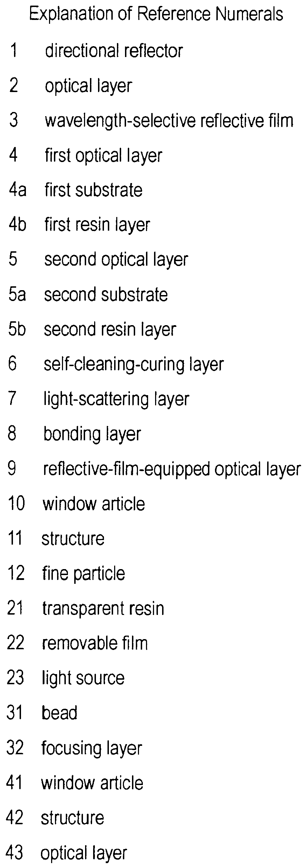

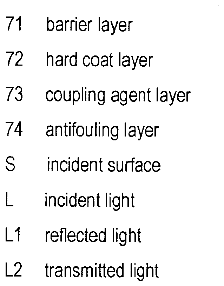

The spectral transmittance and reflectance of the films of Examples and Comparative Examples were measured using the spectrophotometer V550 manufactured by JASCO Corporation. The measurement of the transmittance was performed by placing a detector at a position of 0° with respect to an incident light beam and rotating a sample relative to the optical axis. The measurement of the reflectance was performed by rotating a sample and the detector together so that it is arranged to receive specularly reflected light. Here, in the measurements of the transmittance and the reflectance, the case where the sample was placed so as to be perpendicular to the optical axis of the incident light beam was defined as 0°. The measurement results are shown in Figs. 44A to 49B. The transmission and reflection colors were calculated from the individual spectrum measurement data in accordance with JIS Z8701 (1999), where the light source was a D65 light source and the field of view was 2°. The calculation results are shown in Tables 8 to 13 and Figs. 50A and 50B. Any film had no significant variations in transmission color at different incident angles, but the films of Examples differed significantly from the films of Comparative Examples in the characteristics of reflection color. As for any of the films of Examples, observed was only reflection spectra with flat spectral characteristics corresponding to Fresnel reflection both for retro surface incidence and for nonretro surface incidence. The reflection spectra of Example 9 are illustrated in Figs. 47A and 47B, although the films of the other Examples yielded similar results. In contrast, the films of Comparative Examples had different colors depending on a viewing angle and also had different colors between film surface incidence and non-film surface incidence. The reflection spectra of Comparative Examples 9 and 12 are illustrated in Figs. 48A to 49B.

(Table 8)

Table 8 shows the transmission colors of the optical films of Examples 4 to 9 for retroreflective surface incidence.

| Incident angle | Example 4 | | Example 7 | | Example 8 | | Example 9 | |
|---|---|---|---|---|---|---|---|---|
| | x | y | x | y | x | y | x | y |
| 0° | 0.309 | 0.349 | 0.289 | 0.324 | 0.317 | 0.341 | 0.304 | 0.335 |
| 15° | 0.309 | 0.349 | 0.289 | 0.324 | 0.317 | 0.341 | 0.304 | 0.335 |
| 30° | 0.310 | 0.348 | 0.291 | 0.325 | 0.317 | 0.341 | 0.304 | 0.335 |
| 45° | 0.309 | 0.345 | 0.290 | 0.325 | 0.317 | 0.341 | 0.305 | 0.335 |
| 60° | 0.311 | 0.344 | 0.291 | 0.326 | 0.318 | 0.342 | 0.307 | 0.336 |

(Table 9)

Table 9 shows the transmission colors of the optical films of Comparative Examples 9 and 12 for film surface incidence:

| Incident angle | Comparative Example 9 | | Comparative Example 12 | |
|---|---|---|---|---|
| | x | y | x | y |
| 0° | 0.315 | 0.338 | 0.321 | 0.342 |
| 15° | 0.315 | 0.339 | 0.321 | 0.342 |
| 30° | 0.314 | 0.339 | 0.321 | 0.342 |
| 45° | 0.314 | 0.341 | 0.320 | 0.342 |
| 60° | 0.313 | 0.343 | 0.315 | 0.340 |

(Table 10)

Table 10 shows the reflection colors of the optical films of Examples 7 to 9 for retroreflective surface incidence.

| Incident angle | Example 7 | | Example 8 | | Example 9 | |
|---|---|---|---|---|---|---|
| | x | y | x | y | x | y |
| 5° | 0.314 | 0.335 | 0.310 | 0.328 | 0.307 | 0.326 |
| 15° | 0.314 | 0.335 | 0.310 | 0.328 | 0.306 | 0.326 |
| 30° | 0.314 | 0.334 | 0.310 | 0.328 | 0.307 | 0.326 |
| 45° | 0.314 | 0.335 | 0.311 | 0.328 | 0.307 | 0.326 |
| 60° | 0.315 | 0.333 | 0.312 | 0.330 | 0.308 | 0.328 |

(Table 11)

Table 11 shows the reflection colors of the optical films of Examples 7 to 9 for nonretroreflective surface incidence.

| Incident angle | Example 7 | | Example 8 | | Example 9 | |
|---|---|---|---|---|---|---|
| | x | y | x | y | x | y |
| 5° | 0.321 | 0.339 | 0.317 | 0.339 | 0.309 | 0.334 |
| 15° | 0.321 | 0.339 | 0.318 | 0.339 | 0.310 | 0.334 |
| 30° | 0.322 | 0.340 | 0.318 | 0.338 | 0.310 | 0.333 |

(continued)

| Incident angle | Example 7 | | Example 8 | | Example 9 | |
|---|---|---|---|---|---|---|
| | x | y | x | y | x | y |
| 45° | 0.320 | 0.339 | 0.317 | 0.339 | 0.311 | 0.333 |
| 60° | 0.314 | 0.335 | 0.319 | 0.338 | 0.312 | 0.332 |

(Table 12)

Table 12 shows the reflection colors of the optical films of Comparative Examples 9 and 12 for film surface incidence.

| Incident angle | Comparative Example 9 | | Comparative Example 12 | |
|---|---|---|---|---|
| | x | y | x | Y |
| 5° | 0.221 | 0.230 | 0.245 | 0.267 |
| 15° | 0.223 | 0.228 | 0.244 | 0.265 |
| 30° | 0.232 | 0.227 | 0.249 | 0.264 |
| 45° | 0.256 | 0.241 | 0.275 | 0.282 |
| 60° | 0.294 | 0.283 | 0.314 | 0.320 |

(Table 13)

Table 13 shows the reflection colors of the optical films of Comparative Examples 9 and 12 for non-film surface incidence.

| Incident angle | Comparative Example 9 | | Comparative Example 12 | |
|---|---|---|---|---|
| | x | y | x | y |
| 5° | 0.257 | 0.253 | 0.300 | 0.334 |
| 15° | 0.261 | 0.254 | 0.299 | 0.333 |
| 30° | 0.272 | 0.255 | 0.297 | 0.331 |
| 45° | 0.293 | 0.268 | 0.302 | 0.331 |
| 60° | 0.320 | 0.305 | 0.317 | 0.338 |

(Table 14)

Table 14 shows the absolute values of the differences in the chromaticity coordinates x and y (maximum differences in x, maximum differences in y) of specularly reflected light when the light was incident at an incident angle of 0° or more and 60° or less on the main surfaces of the optical films of Examples 4 to 9 and Comparative Examples 9 and 12.

| | | | Maximum difference in x | Maximum difference in y |
|---|---|---|---|---|
| Transmission color | Table 8 | Example 4 | 0.002 | 0.005 |
| | | Example 7 | 0.002 | 0.002 |
| | | Example 8 | 0.001 | 0.001 |
| | | Example 9 | 0.003 | 0.001 |
| | Table 9 | Comparative Example 9 | 0.002 | 0.005 |
| Reflection color | Table 10 | Comparative Example 12 | 0.006 | 0.002 |
| | | Example 7 | 0.001 | 0.002 |
| | | Example 8 | 0.002 | 0.002 |
| | | Example 9 | 0.002 | 0.002 |
| | Table 11 | Example 7 | 0.008 | 0.005 |
| | | Example 8 | 0.002 | 0.001 |
| | | Example 9 | 0.003 | 0.002 |
| | Table 12 | Comparative Example 9 | 0.073 | 0.056 |
| | | Comparative Example 12 | 0.070 | 0.056 |
| | Table 13 | Comparative Example 9 | 0.063 | 0.052 |
| | | Comparative Example 12 | 0.020 | 0.007 |

(EXAMPLE 13)

First, a Ni-P mold roller having the fine triangular pyramid profile illustrated in Figs. 35A to 35C was prepared by a cutting process using a cutting tool. Next, a urethane acrylate (ARONIX, manufactured by TOAGOSEI CO., LTD.; refractive index after curing: 1.533) was applied onto a PET film (A4300, manufactured by TOYOBO CO., LTD.) having a thickness of 75 $\mu$m. The urethane acrylate was cured by being irradiated with UV light from the PET film side in the state of being in contact with the mold. Next, the laminate of the resin layer formed by curing the urethane acrylate and the PET film was removed from the mold composed of Ni-P. Thus, a resin layer to which a triangular pyramid profile had been imparted (hereafter, referred to as a textured resin layer) was formed on the PET film. Next, a wavelength-selective reflective film including a reflective film A shown in Table 16 was formed by a sputtering method on the molded surface on which the triangular pyramid profile had been formed with the mold. Note that, in the film formation of the AgPdCu films, an alloy target having the composition Ag/Pd/Cu = 99.0 at%/0.4 at%/0.6 at% was used.

Next, the production apparatus illustrated in Fig. 23 was used to embed the film-formed surface of the textured film with a resin as follows. Specifically, a resin composition having the formulation below was applied onto a flat PET film (A4300, manufactured by TOYOBO CO., LTD.) having a thickness of 75 $\mu$m, and the textured PET film on the surface of which the wavelength-selective reflective film had been formed was laminated on the flat PET film so that entry of no bubbles between both of the films was caused. After that, UV light was radiated from the flat PET film side to cure the resin composition. As a result, the resin composition between the flat PET film and the wavelength-selective reflective film was cured to form a resin layer (hereafter, referred to as an embedded resin layer). Thus, the intended optical film of Example 13 was obtained.

<Formulation of Resin Composition>

Urethane acrylate                99 parts by mass
(ARONIX, manufactured by TOAGOSEI CO., LTD.; refractive index after curing: 1.533)

(continued)

| 2-Acryloyloxyethyl acid phosphate | 1 part by mass |
| (LIGHT-ACRYLATE P-1A, manufactured by Kyoeisha Chemical Co., Ltd.) | |
| Note that the urethane acrylate contained a photoinitiator and the like | |

(EXAMPLE 14)

An optical film of Example 14 was obtained as in Example 13 except that the embedded resin layer was made to have the following composition.

<Formulation of Resin Composition>
Urethane acrylate                98 parts by mass
(ARONIX, manufactured by TOAGOSEI CO., LTD.; refractive index after curing: 1.533)
2-Acryloyloxyethyl acid phosphate                2 parts by mass
(LIGHT-ACRYLATE P-1A, manufactured by Kyoeisha Chemical Co., Ltd.)

(EXAMPLE 15)

An optical film of Example 15 was obtained as in Example 13 except that the embedded resin layer was made to have the following composition and the refractive index of the textured resin layer was adjusted by changing the formulation of the textured resin layer so that it had a refractive index after curing of 1.530.

<Formulation of Resin Composition for Upper Layer>
Urethane acrylate                95 parts by mass
(ARONIX, manufactured by TOAGOSEI CO.,LTD.; refractive index after curing: 1.533)
2-Acryloyloxyethyl acid phosphate                5 parts by mass
(LIGHT-ACRYLATE P-1A, manufactured by Kyoeisha Chemical Co., Ltd.)

(EXAMPLE 16)

An optical film of Example 16 was obtained as in Example 15 except that the embedded resin layer was made to have the following composition.

<Formulation of Resin Composition for Upper Layer>
Urethane acrylate                95 parts by mass
(ARONIX, manufactured by TOAGOSEI CO., LTD.; refractive index after curing: 1.533)
2-Methacryloyloxyethyl acid phosphate                5 parts by mass
(LIGHT-ACRYLATE P-2M, manufactured by Kyoeisha Chemical Co., Ltd.)

(EXAMPLE 17)

An optical film of Example 17 was obtained as in Example 13 except that the wavelength-selective reflective film was a reflective film B shown in Table 16. Note that, for the film formation of the AgBi films, an alloy target of Ag/Bi = 99.0 at%/1.0 at% was used; and, for the film formation of the $Nb_2O_5$ films, a $Nb_2O_5$ ceramic target was used.

(EXAMPLE 18)

An optical film of Example 18 was obtained as in Example 17 except that the wavelength-selective reflective film was a reflective film C shown in Table 16.

(EXAMPLE 19)

An optical film of Example 19 was obtained as in Example 13 except that the wavelength-selective reflective film was a reflective film D shown in Table 16.

(EXAMPLE 20)

An optical film of Example 20 was obtained as in Example 13 except that the embedded resin layer and the textured resin layer were made to have the following compositions.

<Formulation of Resin Composition for Upper Layer>

| | |
|---|---|
| Urethane acrylate | 70 parts by mass |
| (ARONIX, manufactured by TOAGOSEI CO., LTD.; refractive index after curing: 1.533) | |
| 2-Acryloyloxyethyl succinate | 30 parts by mass |
| (HOA-MS, manufactured by Kyoeisha Chemical Co., Ltd.) | |

(EXAMPLE 21)

An optical film of Example 21 was obtained as in Example 13 except that the embedded resin layer and the textured resin layer were made to have the following compositions.

| | |
|---|---|
| Urethane acrylate | 85 parts by mass |
| (ARONIX, manufactured by TOAGOSEI CO., LTD.; refractive index after curing: 1.533) | |
| $\gamma$-butyrolactone methacrylate | 15 parts by mass |
| (GBLMA, manufactured by OSAKA ORGANIC CHEMICAL INDUSTRY LTD.) | |

(EXAMPLE 22)

An optical film of Example 22 was obtained as in Example 13 except that the embedded resin layer was made to have the same composition as the textured resin layer.

(REFERENCE EXAMPLE 1)

An optical film of Reference Example 1 was obtained as in Example 13 except that the embedded resin layer and the textured resin layer were made to have the following composition.

| | |
|---|---|
| Urethane acrylate | 99 parts by mass |
| (ARONIX, manufactured by TOAGOSEI CO., LTD.; refractive index after curing: 1.533) | |
| 2-Acryloyloxyethyl acid phosphate | 1 part by mass |
| (LIGHT-ACRYLATE P-1A, manufactured by Kyoeisha Chemical Co., Ltd.) | |

(Evaluation of Adhesion of Reflective Film)

The prepared optical films were bonded to glass having a thickness of 3 mm using an optically transparent adhesive agent. The edges of the films were peeled and the state was observed. The evaluation results are shown in Table 15.
Excellent: Peeling is difficult and forcible peeling causes a bulk fracture in the substrate, the resin, or the like
Good: Peeling is relatively difficult, but forcible peeling causes peeling at the interface
Fair: Peeling at the interface is caused, but resistance is perceived upon the peeling
Poor: Peeling at the interface is caused without resistance

(Evaluation of Ni-P Mold Release Property)

A flat Ni-P mold having the fine triangular pyramid profile illustrated in Figs. 35A to 35C was prepared by a cutting process using a cutting tool. The mold was coated with each resin and then covered with a PET film (A4300, manufactured by TOYOBO CO., LTD.) having a thickness of 75 $\mu$m. The resin was cured by being irradiated with UV light from the PET film side at 1,000 mJ/cm$^2$ in the state of being in contact with the mold. The laminate of the resin and the PET film was removed from the mold composed of Ni-P to evaluate the mold release property. The evaluation results are shown in Table 15.

Good: Easily releasable from the mold after the curing
Fair: Releasable from the mold after the curing, but with some resin remaining on the mold and the textured film appearing uneven
Poor: non-releasable due to adhesion to the mold after the curing

(Evaluation of Clarity)

The prepared optical films were bonded to glass with a thickness of 3 mm using an optically transparent adhesive agent. Next, this glass was held at a distance of about 50 cm from the eyes, the interior of a neighboring building at a distance of about 10 m was observed through the glass, and the evaluation was carried out on the basis of criteria below. The evaluation results are shown in Table 15.
Good: Almost no multiple images or the like due to diffraction are seen, and no problem occurs for use as a window
Fair: The shapes of objects are roughly recognized, but the multiple images due to diffraction are noticeable
Poor: Nothing is recognized because of fogging due to the influence of diffraction and the like

(Evaluation of Directional Reflection Direction)

The optical films of Examples 7 to 21 were evaluated for directional reflection direction using the above-described measuring apparatus illustrated in Fig. 31 as follows. The detector 104 was rotated about the sample 103 serving as the central axis as indicated by the arrows a to determine the direction in which the reflection intensity was maximized. The results are shown in Table 17.

(Evaluation of Transmitted-Image Clarity)

The optical films of Examples 7 to 21 were evaluated for transmitted-image clarity as follows. The transmitted-image clarity was evaluated using optical combs with comb widths of 2.0 mm, 1.0 mm, 0.5 mm, and 0.125 mm in accordance with JIS-K7105. The measuring instrument used for the evaluation was an image clarity meter (model: ICM-1T) manufactured by Suga Test Instruments Co., Ltd. Next, the sum of the transmitted-image clarity measured using the optical combs with comb widths of 2.0 mm, 1.0 mm, 0.5 mm, and 0.125 mm was determined. The results are shown in Table 17.
Table 15 shows the configurations and evaluation results of the optical films of Examples 13 to 22 and Reference Example 1. Note that, in Reference Example 1, since the resin was not released from the mold, a sample for adhesion evaluation was not prepared.

(Table 15)

| | Textured resin layer | Reflective film | Embedded resin layer | Reflective film adhesion | Ni-P mold release property | Clarity |
|---|---|---|---|---|---|---|
| Example 13 | UV1.533 | Reflective film A | UV1.533:99% by mass P-1A: 1% by mass | Excellent | Good | Good |
| Example 14 | UV1.533 | Reflective film A | UV1.533:98% by mass P-1A: 2% by mass | Excellent | Good | Good |
| Example 15 | UV1.530 | Reflective film A | UV1.533:95% by mass P-1A: 5% by mass | Excellent | Good | Good |

(continued)

|  | Textured resin layer | Reflective film | Embedded resin layer | Reflective film adhesion | Ni-P mold release property | Clarity |
|---|---|---|---|---|---|---|
| Example 16 | UV1.530 | Reflective film A | UV1.533: 95% by mass P-2M: 5% by mass | Excellent | Good | Good |
| Example 17 | UV1.533 | Reflective film B | UV1.533: 99% by mass P-1A: 1 % by mass | Excellent | Good | Good |
| Example 18 | UV1.533 | Reflective film C | UV1.533: 99% by mass P-1A: 1% by mass | Good | Good | Good |
| Example 19 | UV1.533 | Reflective film D | UV1.533: 99% by mass P-1A: 1% by mass | Excellent | Good | Good |
| Example 20 | Un1.524 | Reflective film A | UV1.533: 70% by mass HOA-MS 30% by mass | Excellent | Good | Good |
| Example 21 | UV1.518 | Reflective film A | I UV1.533: 85% by mass GBLMA 15% by mass | Good | Good | Good |
| Example 22 | UV1.533 | Reflective film A | UV1.533 | Poor | Good | Good |
| Reference Example 1 | UV1.533: 99% P-1A: 1% | Reflective film A | UV1.533: 99% by mass P-1A: 1% by mass | - | Poor | - |

UV1.533: ARONIX (refractive index after curing: 1.533), manufactured by TOAGOSEI CO., LTD.
UV1.530: ARONIX (refractive index after curing: 1.530), manufactured by TOAGOSEI CO., LTD.
UV1.524: ARONIX (refractive index after curing: 1.524), manufactured by TOAGOSEI CO., LTD.
UV1.518: ARONIX (refractive index after curing: 1.518), manufactured by TOAGOSEI CO., LTD.
P-1A: 2-acryloyloxyethyl acid phosphate, manufactured by Kyoeisha Chemical Co., Ltd.
P-2M: 2-methacryloyloxyethyl acid phosphate, manufactured by Kyoeisha Chemical Co., Ltd.
HOA-MS: 2-acryloyloxyethyl succinate, manufactured by Kyoeisha Chemical Co., Ltd. GBLMA: γ-butyrolactone methacrylate, manufactured by OSAKA ORGANIC CHEMICAL INDUSTRY LTD.

Table 16 shows the film configurations of the wavelength-selective reflective films of the optical films of Examples 13 to 23.

(Table 16)

|  | First layer | Second layer | Third layer | Fourth layer | Fifth layer | Sixth layer | Seventh layer | Eighth layer |
|---|---|---|---|---|---|---|---|---|
| Reflective film A | ZnO 40nm | AgPdCu 9nm | ZnO 80nm | AgPdCu 9nm | ZnO 40nm | - | - | - |

(continued)

|  | First layer | Second layer | Third layer | Fourth layer | Fifth layer | Sixth layer | Seventh layer | Eighth layer |
|---|---|---|---|---|---|---|---|---|
| Reflective film B | $Nb_2O_5$ 38nm | AgBi 18nm | ZnO 7nm | $Nb_2O_5$ 63nm | AgBi 19nm | ZnO 7nm | $Nb_2O_5$ 33nm | ZnO 3nm |
| Reflective film C | $Nb_2O_5$ 38nm | AgBi 18nm | ZnO 7nm | $Nb_2O_5$ 63nm | AgBi 19nm | ZnO 7nm | $Nb_2O_5$ 35nm | - |
| Reflective film D | ZnO 200nm | - | - | - | - | - | - | - |

Table 17 shows the evaluation results of the directional reflection direction and transmitted-image clarity when light was made incident on the optical films of Examples 7 to 21 at an incident angle $(\theta, \phi)$ of (10°, 45°).

(Table 17)

|  | Directional reflection direction | | Transmitted-image clarity | | | | |
|---|---|---|---|---|---|---|---|
|  | $\phi$ | $\theta$ | 0.125mm | 0.5mm | 1.0mm | 2.0mm | Total |
| Example 7 | 10° | 45° | 58 | 77 | 89 | 95 | 319 |
| Example 8 | 10° | 45° | 75 | 88 | 94 | 97 | 354 |
| Example 9 | 10° | 45° | 62 | 81 | 90 | 97 | 330 |
| Example 10 | 10° | 45° | 71 | 84 | 92 | 97 | 344 |
| Example 11 | 10° | 45° | 66 | 83 | 91 | 96 | 336 |
| Example 12 | 10° | 45° | 57 | 80 | 90 | 96 | 323 |
| Example 13 | 10° | 45° | 75 | 91 | 94 | 98 | 358 |
| Example 14 | 10° | 45° | 69 | 86 | 92 | 97 | 344 |
| Example 15 | 10° | 45° | 65 | 83 | 92 | 97 | 337 |
| Example 16 | 10° | 45° | 67 | 85 | 93 | 98 | 343 |
| Example 17 | 10° | 45° | 71 | 84 | 92 | 95 | 342 |
| Example 18 | 10° | 45° | 68 | 79 | 90 | 96 | 333 |
| Example 19 | 10° | 45° | 70 | 80 | 89 | 96 | 335 |
| Example 20 | 10° | 45° | 65 | 82 | 91 | 97 | 335 |
| Example 21 | 10° | 45° | 69 | 83 | 90 | 96 | 338 |

The following can be seen from Table 17.

For the optical films of Examples 7 to 21, the image clarity measured using the optical comb with a width of 0.5 mm was 50 or more, and the sum of the values of image clarity measured using the individual optical combs was 230 or more.

When all the evaluation results in Tables 3 and 17 are considered, in view of visibility, the transmitted-image clarity measured using an optical comb with a width of 0.5 mm is preferably made 50 or more. In addition, in view of visibility, the sum of the values of image clarity measured using optical combs of 0.125 mm, 0.5 mm, 1.0 mm, and 2.0 mm is preferably made 230 or more.

(EXPERIMENTAL EXAMPLE 1)

First, ZnO films with 20 nm were formed on a glass plate by a vacuum sputterintz method to prepare test pieces. Then 2-acryloyloxyethyl acid phosphate (LIGHT-ACRYLATE P-1A, manufactured by Kyoeisha Chemical Co., Ltd.) was added to an acrylic resin composition (ARONIX, manufactured by TOAGOSEI CO., LTD.; refractive index after curing:

1.533) in varying amounts shown in Table 18. As a result, acrylic resin compositions containing different amounts of the additive were prepared. Next, the test pieces were coated with these acrylic resin compositions, were subsequently covered with ZEONOR films, and were irradiated with UV light at 1,000 mJ/cm$^2$ to cure the resins. Thus, the intended samples were obtained.

(EXPERIMENTAL EXAMPLE 2)

Test pieces were prepared as in Experimental Example 1 except that 2-methacryloyloxyethyl acid phosphate (LIGHT-ACRYLATE P-2M, manufactured by Kyoeisha Chemical Co., Ltd.) was used as the additive and the amount of the additive added was varied as shown in Table 18.

(EXPERIMENTAL EXAMPLE 3)

Test pieces were prepared as in Experimental Example 1 except that 2-acryloyloxyethyl succinate (HOA-MS, manufactured by Kyoeisha Chemical Co., Ltd.) was used as the additive and the amount of the additive added was varied as shown in Table 18.

(EXPERIMENTAL EXAMPLE 4)

Test pieces were prepared as in Experimental Example 1 except that γ-butyrolactone methacrylate (GBLMA, manufactured by OSAKA ORGANIC CHEMICAL INDUSTRY LTD.) was used as the additive and the amount of the additive added was varied as shown in Table 18.

(Evaluation of Adhesion)

Next, the ZEONOR films were removed from the test pieces prepared as described above, the resins were cross-cut into 100 squares using a cutter, and an adhesion test was carried out. The evaluation results are shown in Table 18.
Excellent: High adhesion, peeling: 0
Good: Relatively high adhesion, peeling: 0 to 20
Fair: Relatively low adhesion, peeling: 20 to 50
Poor: Low adhesion, peeling: 50 to 100
Table 18 shows the evaluation results of the samples of Experimental Examples 1 to 4.

(Table 18)

| | Additive | | Amount added | | | | | | | |
|---|---|---|---|---|---|---|---|---|---|---|
| | Type | Product No. | 0% | 0.5% | 1% | 2 % | 5% | 10% | 20% | 50% |
| Experimental Example 1 | Phosphoric acid | P-1A | Poor | Excellent | Excellent | Excellent | Excellent | Excellent | - | - |
| Experimental Example 2 | | P-2M | | - | - | Excellent | Excellent | Excellent | - | - |
| Experimental Example 3 | Succinic acid | HOA-MS | | - | - | - | - | Poor | Good | Excellent |
| Experimental Example 4 | Butyrolactone | GBLMA | | - | - | - | Poor | Poor | Good | - |
| "%": "percent by mass" | | | | | | | | | | |

The following can be seen from Table 18.

As for the phosphoric-acid-based additive, it has been demonstrated that addition in a relatively small amount of about 0.5% enhances the adhesion. On the other hand, as to the succinic-acid-based or the butyrolactone-acid-based additive, it has been demonstrated that addition in a relatively large amount of about 20% or more enhances the adhesion.

(EXPERIMENTAL EXAMPLE 5)

First, flat Ni-P molds having the fine triangular profile illustrated in Figs. 35A to 35C were prepared by a cutting process using a cutting tool. Next, 2-acryloyloxyethyl acid phosphate (LIGHT-ACRYLATE P-1A, manufactured by Kyoeisha Chemical Co., Ltd.) was added to an acrylic resin composition (ARONIX, manufactured by TOAGOSEI CO., LTD.; refractive index after curing: 1.533) in varying amounts shown in Table 19. As a result, acrylic resin compositions containing different amounts of the additive were obtained. Next, these acrylic resin compositions were applied onto the textured surfaces of the flat Ni-P molds prepared. Next, the compositions were covered with PET films (A4300, manufactured by TOYOBO CO., LTD.) having a thickness of 75 $\mu$m. The resins were cured by being irradiated with UV light from the PET films at 1,000 mJ/cm$^2$ in the state in which the PET films were in contact with the molds. Thus, the intended samples were obtained.

(EXPERIMENTAL EXAMPLE 6)

Samples were prepared as in Experimental Example 5 except that 2-methacryloyloxyethyl acid phosphate (LIGHT-ACRYLATE P-2M, manufactured by Kyoeisha Chemical Co., Ltd.) was used as the additive and the amount of the additive added was varied as shown in Table 19.

(EXPERIMENTAL EXAMPLE 7)

Samples were prepared as in Experimental Example 5 except that 2-acryloyloxyethyl succinate (HOA-MS, manufactured by Kyoeisha Chemical Co., Ltd.) was used as the additive and the amount of the additive added was varied as shown in Table 19.

(EXPERIMENTAL EXAMPLE 8)

Samples were prepared as in Experimental Example 5 except that $\gamma$-butyrolactone methacrylate (GBLMA, manufactured by OSAKA ORGANIC CHEMICAL INDUSTRY LTD.) was used as the additive and the amount of the additive added was varied as shown in Table 19.

(Evaluation of Mold Release Property)

Next, the laminates of the cured resin layers and the PET films were removed from the flat Ni-P molds to be evaluated for the mold release property. The evaluation results are shown in Table 19.

Good: Easily releasable after the curing

Fair: Releasable after the curing, but with some resin remaining on the mold and the textured film appearing uneven

Poor: non-releasable due to adhesion to the mold after the curing

Table 19 shows the evaluation results of the samples of Experimental Examples 5 to 8.

(Table 19)

| | Additive | | Amount added | | | | | | | |
|---|---|---|---|---|---|---|---|---|---|---|
| | Type | Product No. | 0% | 0.5% | 1% | 2% | 5% | 10% | 20% | 50% |
| Experimental Example 5 | Phosphoric acid | P-1A | Good | - | Poor | - | - | - | - | - |
| Experimental Example 6 | | P-2M | | - | Poor | - | - | - | - | - |
| Experimental Example 7 | Succinic acid | HOA-MS | | - | - | - | - | Fair | Poor | Poor |
| Experimental Example 8 | Butyrolactone | GBLMA | | - | Fair | - | Fair | Poor | - | - |

"%": "percent by mass"

The following can be seen from Table 19. It has been demonstrated that, while one containing no additive is easily released from a mold, one containing at least 1% of an additive for improving the adhesion has a problem in the release property. In particular, it has been demonstrated that, one containing 1% of the phosphoric-acid-based additive, which enhances the adhesion in a small amount, adheres completely to a mold, whereas even the addition of 1% of butyrolactone-based, which has relatively low adhesion, causes some resin to remain on a mold and hence cannot be used for profile transfer.

Although embodiments and examples of the present invention have been specifically described so far, the present invention is not restricted to the above-described embodiments, and various modifications based on the technical concept of the present invention are permitted.

For example, the configurations, shapes, materials, values, and the like described in the above-described embodiments and examples are mere examples, and, if necessary, other configurations, shapes, materials, values, and the like may also be used.

In addition, the features of the above-described embodiments can be combined without departing from the scope of the present invention.

In addition, an example in which the removable film 22 is used to form the second optical layer 5 having a flat surface was described in the above-described embodiments. However, the method for forming the surface is not restricted to this example. For example, a hot-melt resin, an ionizing-radiation-curable resin, or the like may be applied to the irregular surface of the wavelength-selective reflective film 3 and a flat surface may be formed using a mirror roller. Alternatively, a resin that is readily leveled, such as an ionizing-radiation-curable resin or a thermosetting resin, may be applied onto the irregular surface and the flat surface may be formed. Furthermore, the step of applying a resin onto the irregular surface may be omitted, and a tacky agent may be applied onto the irregular surface of the wavelength-selective reflective film 3 and the flat surface may be formed by leveling.

Although the cases where directional reflectors according to the present invention are applied to window articles and the like have been described as examples in the above-described embodiments, directional reflectors according to the present invention may also be applied to blinds, or roll curtains.

Blinds or roll curtains to which the directional reflectors have been applied are, for example, blinds or roll curtains constituted by the directional reflectors themselves; blinds or roll curtains constituted by transparent substrates or the like on which the directional reflectors laminated; or the like. By disposing such a blind or roll curtain indoors near a window, for example, only infrared rays can be directionally reflected outdoors while visible light can be introduced into indoors. Accordingly, even when a blind or roll curtain is disposed, the necessity of interior illumination is reduced. In addition, since scattering reflections are not caused by the blind or roll curtain, an ambient temperature rise can also be suppressed. In addition, when the necessity of reflection of thermal radiation is low as in winter or the like, the blind or roll curtain may be lifted. Thus, there is also an advantage in that the function of reflecting thermal radiation can be flexibly used depending on situations. In contrast, existing blinds, roll curtains, and the like for shielding infrared rays are coated with infrared-reflecting paints or the like and have an appearance of white, gray, cream, or the like. Thus, shielding of infrared rays also results in shielding of visible light and hence interior illumination becomes necessary. In addition, similarly, a configuration like that of a Japanese Shoji screen may also be employed and removal is also possible when it is not necessary.

## Claims

1. A window article (10), a blind, a roll curtain or a Japanese Shoji screen comprising an optical element (1), the optical element (1) comprising:

   an optical layer (2) having an incident surface (S1) on which light is incident; and
   a wavelength-selective reflective film (3) formed in the optical layer (2),
   the optical layer (2) including a first optical layer (4) formed on a first main surface of the wavelength-selective reflective film (3) and a second optical layer (5) formed on a second main surface of the wavelength-selective reflective film (3),
   wherein the optical element (1) selectively directionally reflects light ($L_1$) in a specific wavelength range while transmitting light ($L_2$) in a wavelength range other than the specific wavelength range,
   the optical element (1) having transparency to the light ($L_2$) in the wavelength range other than the specific wavelength range so that light absorption and light scattering are absent,
   wherein the light ($L_1$) in the specific wavelength range selectively directionally reflected is near infrared light having a wavelength of from 780 to 2,100 nm and the light ($L_2$) in the wavelength range other than the specific wavelength range is visible light having a wavelength of from 380 to 780 nm,
   wherein the wavelength-selective reflective film (3) has a shape in which columnar surfaces (11) extending in one direction are one-dimensionally arranged; and

of light (L) incident on the incident surface (S1) at an incident angle $\theta$, $\phi$, where $\theta$: the angle between a normal ($I_1$) to the incident surface (S1) and incident light (L) incident on the incident surface (S1) or reflected light ($L_1$) exiting from the incident surface (S1); and $\phi$: the angle between a line perpendicular to ridges of the columnar surfaces (11) in the incident surface (S1) and a component of the incident light (L) or the reflected light ($L_1$) projected on the incident surface (S1), the optical element (1) selectively directionally reflects the light ($L_1$) in the specific wavelength range in a direction other than specular reflection $-\theta$, $\phi + 180°$ while transmitting the light ($L_2$) in the wavelength range other than the specific wavelength range, and the optical element (1) selectively directionally reflects the light ($L_1$) in the specific wavelength range in a $\theta o$, $-\phi$ direction, where $0° < \theta o < 90°$, while transmitting the light in the wavelength range other than the specific wavelength range.

**Patentansprüche**

1. Fensterartikel (10), Sichtschutz, Rollvorhang oder japanischer Shoji-Sichtschutz, umfassend ein optisches Element (1), wobei das optische Element (1) umfasst:

   eine optische Schicht (2) mit einer Einfallsfläche (S1), auf welche Licht einfällt; und
   einen wellenlängenselektiven reflektierenden Film (3), der in der optischen Schicht (2) ausgebildet ist, wobei die optische Schicht (2) eine erste optische Schicht (4), die auf einer ersten Hauptoberfläche des wellenlängenselektiven reflektierenden Films (3) ausgebildet ist, und eine zweite optische Schicht (5), die auf einer zweiten Hauptoberfläche des wellenlängenselektiven reflektierenden Films (3) ausgebildet ist, einschließt,
   wobei das optische Element (1) Licht ($L_1$) in einem spezifischen Wellenlängenbereich selektiv gerichtet reflektiert, während es Licht ($L_2$) in einem Wellenlängenbereich außer dem spezifischen Wellenlängenbereich durchlässt,
   wobei das optische Element (1) eine Transparenz für das Licht ($L_2$) in dem Wellenlängenbereich außer dem spezifischen Wellenlängenbereich aufweist, so dass Lichtabsorption und Lichtstreuung fehlen,
   wobei das Licht ($L_1$) in dem spezifischen Wellenlängenbereich, das selektiv gerichtet reflektiert wird, nahes Infrarotlicht mit einer Wellenlänge von 780 bis 2.100 nm ist und das Licht ($L_2$) in dem Wellenlängenbereich außer dem spezifischen Wellenlängenbereich sichtbares Licht mit einer Wellenlänge von 380 bis 780 nm ist,
   wobei der wellenlängenselektive reflektierende Film (3) eine Form aufweist, in welcher säulenförmige Oberflächen (11), die sich in einer Richtung erstrecken, eindimensional angeordnet sind; und
   von Licht (L), das auf die Einfallsfläche (S1) unter einem Einfallswinkel $\theta$, $\phi$ einfällt, wobei $\theta$: der Winkel zwischen einer Normalen ($I_1$) zur Einfallsfläche (S1) und einfallendem Licht (L), das auf die Einfallsfläche (S1) fällt, oder reflektiertem Licht ($L_1$), das aus der Einfallsfläche (S1) austritt; und $\phi$: der Winkel zwischen einer Linie senkrecht zu Rippen der säulenförmigen Oberflächen (11) in der Einfallsfläche (S1) und einer Komponente des einfallenden Lichts (L) oder des reflektierten Lichts ($L_1$), die auf die Einfallsfläche (S1) projiziert wird, das optische Element (1) das Licht ($L_1$) in dem spezifischen Wellenlängenbereich selektiv gerichtet in einer Richtung außer der Spiegelreflexion $-\theta$, $\phi + 180°$ reflektiert, während es das Licht ($L_2$) in dem Wellenlängenbereich außer dem spezifischen Wellenlängenbereich durchlässt, und das optische Element (1) das Licht ($L_1$) in dem spezifischen Wellenlängenbereich selektiv gerichtet in einer $\theta o$, $-\phi$ Richtung reflektiert, wobei $0° < \theta o < 90°$, während es das Licht in dem Wellenlängenbereich außer dem spezifischen Wellenlängenbereich durchlässt.

**Revendications**

1. Article de fenêtre (10), store, rideau à enroulement ou paravent japonais Shoji comprenant un élément optique (1), l'élément optique (1) comprenant:

   une couche optique (2) présentant une surface incidente (S1) sur laquelle la lumière est incidente; et
   un film réflecteur à sélection de longueur d'onde (3) formé dans la couche optique (2), la couche optique (2) comprenant une première couche optique (4) formée sur une première surface principale du film réflecteur à sélection de longueur d'onde (3) et une deuxième couche optique (5) formée sur une deuxième surface principale du film réflecteur à sélection de longueur d'onde (3),
   dans lequel l'élément optique (1) réfléchit la lumière ($L_1$) de manières sélective et directionnelle dans une plage de longueurs d'onde spécifique tout en transmettant la lumière ($L_2$) dans une plage de longueurs d'onde autre que la plage de longueurs d'onde spécifique,
   l'élément optique (1) étant transparent à la lumière (L2) dans la plage de longueurs d'onde autre que la plage de longueurs d'onde spécifique de sorte qu'absorption de lumière et diffusion de lumière sont absentes,

dans lequel la lumière ($L_1$) dans la plage de longueurs d'onde spécifique, réfléchie de manières sélective et directionnelle, est de la lumière infrarouge proche d'une longueur d'onde allant de 780 à 2100 nm et la lumière ($L_2$) dans la plage de longueurs d'onde autre que la plage de longueurs d'onde spécifique est la lumière visible d'une longueur d'onde allant de 380 à 780 nm,

dans lequel le film réflecteur à sélection de longueur d'onde (3) a une forme dans laquelle des surfaces en colonne (1) s'étendant dans une direction sont agencées selon une dimension; et

de lumière (L) incidente sur la surface incidente (S1) à un angle incident θ, Φ, où θ: l'angle entre une normale ($I_1$) à la surface incidente (S1) et la lumière incidente (L) incidente sur la surface incidente (S1) ou la lumière réfléchie ($L_1$) sortant de la surface incidente (S1); et Φ: l'angle entre une ligne perpendiculaire aux bords des surfaces en colonne (11) dans la surface incidente (S1) et une composante de la lumière incidente (L) ou la lumière réfléchie ($L_1$) projetée sur la surface incidente (S1),

l'élément optique (1) réfléchit la lumière ($L_1$) de manières sélective et directionnelle dans la plage de longueurs d'onde spécifique dans une direction autre que la réflexion spéculaire -θ, Φ +180° tout en transmettant la lumière ($L_2$) dans la plage de longueurs d'onde autre que la plage de longueurs d'onde spécifique, et l'élément optique (1) réfléchit la lumière ($L_1$) de manières sélective et directionnelle dans la plage de longueurs d'onde spécifique dans une direction θo, -Φ, où 0° < θo < 90°, tout en transmettant la lumière dans la plage de longueurs d'onde autre que la plage de longueurs d'onde spécifique.

# FIG. 1

# FIG. 2

FIG. 3A

FIG. 3B

FIG. 3C

FIG. 4A

FIG. 4B

INSIDE          OUTSIDE

# FIG. 5

# FIG. 6

# FIG. 7

# FIG. 8

# FIG. 9A

# FIG. 9B

FIG. 10A

FIG. 10B

FIG. 10C

FIG. 11A

22
21
3
4

FIG. 11B

23

22
21
3
4

FIG. 11C

22

5
3
4

FIG. 12A

FIG. 12B

FIG. 12C

FIG. 13A

FIG. 13B

FIG. 13C

4

B — — — — — — — — — — — — — — B

FIG. 14A

P1

11

FIG. 14B

11

4

# FIG. 15

FIG. 16

# FIG. 17

FIG. 18

FIG. 19A

FIG. 19B

FIG. 19C

# FIG. 20

## FIG. 21A

## FIG. 21B

## FIG. 22A

## FIG. 22A

FIG. 23

## FIG. 24

# FIG. 25

# FIG. 26

# FIG. 27

# FIG. 28

# FIG. 29

FIG. 30A

FIG. 30B

# FIG. 31

FIG. 32

# FIG. 33

## FIG. 34

FIG. 35A

115 μm

115 μm

115 μm

B

B

FIG. 35B

100 μm

47μm

71.5°

90°

FIG. 35C

n₂

n₁

54.7°

## FIG. 36

# FIG. 37

## FIG. 38A

## FIG. 38B

## FIG. 39A

## FIG. 39B

# FIG. 40A

# FIG. 40B

## FIG. 41

# FIG. 42

# FIG. 43

## FIG. 44A

## FIG. 44B

# FIG. 45A

# FIG. 45B

## FIG. 46A

## FIG. 46B

# FIG. 47A

# FIG. 47B

## FIG. 48A

## FIG. 48B

## FIG. 49A

COMPARATIVE EXAMPLE 12
(FILM SURFACE
INCIDENCE)

## FIG. 49B

COMPARATIVE EXAMPLE 12
(NON-FILM SURFACE
INCIDENCE)

## FIG. 50A

- —○— EXAMPLE 7 RETRO SURFACE
- —△— EXAMPLE 7 NONRETRO SURFACE
- —●— EXAMPLE 9 RETRO SURFACE
- —▲— EXAMPLE 9 NONRETRO SURFACE

## FIG. 50B

- —○— COMPARATIVE EXAMPLE 9 FILM SURFACE
- —△— COMPARATIVE EXAMPLE 9 NON-FILM SURFACE
- —●— COMPARATIVE EXAMPLE 12 FILM SURFACE
- —▲— COMPARATIVE EXAMPLE 12 NON-FILM SURFACE

Explanation of Reference Numerals

1 directional reflector

2 optical layer

3 wavelength-selective reflective film

4 first optical layer

4a first substrate

4b first resin layer

5 second optical layer

5a second substrate

5b second resin layer

6 self-cleaning-curing layer

7 light-scattering layer

8 bonding layer

9 reflective-film-equipped optical layer

10 window article

11 structure

12 fine particle

21 transparent resin

22 removable film

23 light source

31 bead

32 focusing layer

41 window article

42 structure

43 optical layer

71   barrier layer

72   hard coat layer

73   coupling agent layer

74   antifouling layer

S    incident surface

L    incident light

L1   reflected light

L2   transmitted light

**EP 2 357 497 B1**

**Patent documents cited in the description**

- WO 2005087680 A1
- JP 6299139 A
- JP 9316115 A
- JP 2001089492 A
- US 20020067547 A1
- WO 9719246 A2
- JP 50028092 A
- JP 50028446 A
- JP 51024368 A
- JP 52112698 A
- JP 57002735 A
- JP 2001301095 A